# EUROPEAN PATENT APPLICATION

(11) **EP 4 765 912 A1**
(43) Date of publication of application: **24.06.2026**
(21) Application number: 24864628.3
(22) Date of filing: 10.09.2024
(51) Int. Cl.: H04W 12/041

(54) **COMMUNICATION METHOD AND APPARATUS**

(30) Priority: 11.09.2023 CN 202311170506
(71) Applicant: HUAWEI TECHNOLOGIES CO., LTD., Shenzhen 518129 (CN)
(72) Inventor: GUO, Longhua, Shenzhen, Guangdong 518129 (CN); HU, Li, Shenzhen, Guangdong 518129 (CN); LI, He, Shenzhen, Guangdong 518129 (CN); WU, Rong, Shenzhen, Guangdong 518129 (CN)
(74) Representative: Goddar, Heinz J.
(86) International application number: PCT/CN2024/118077
(87) International publication number: WO 2025/055912

(57) **Abstract**

This application relates to the field of communication technologies, and discloses a communication method and apparatus. The method includes: A first access network device receives a container from each of a plurality of candidate access network devices, and sends the container of each of the plurality of candidate access network devices to a terminal (the container carries a handover parameter). Subsequently, after determining that the terminal needs to switch to a second access network device in the plurality of candidate access network devices, the first access network device sends, to the terminal via a MAC layer message, information for triggering the terminal to switch to the second access network device and information indicating a first NCC. Then, the terminal may switch to the second access network device based on a parameter in a container that is of the second access network device and that is received in advance, and determine, based on the first NCC, a key for communication with the second access network device. In this way, secure communication between the terminal and an access network device in an inter-station LTM switching scenario can be implemented.

## Description

### CROSS-REFERENCE TO RELATED APPLICATIONS

This application claims priority to Chinese Patent Application No. 202311170506.2, filed with the China National Intellectual Property Administration on September 11, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Handover is a process for a terminal in a connected state, is initiated by a network side, and relates to signaling exchange between the terminal and an access network device. For example, when sensing that signal strength of the terminal in a cell of an access network device gradually weakens, the access network device may hand over the terminal to a cell of an access network device (for example, a neighboring access network device) with better signal strength.

To reduce a handover delay, layer 1/layer 2 triggered mobility (L1/L2 triggered mobility, LTM) switching is introduced currently. The LTM switching may be triggered by layer 1/layer 2 signaling.

However, for an inter-station LTM switching scenario, how to implement secure communication between the terminal and the access network device still needs to be further studied.

### SUMMARY

This application provides a communication method and apparatus, to implement secure communication between a terminal and an access network device in an inter-station LTM switching scenario.

According to a first aspect, this application provides a communication method. The method may be applied to a first access network device, or may be applied to a processor, a chip, a chip system, a functional module, or the like in the first access network device. For example, the method is applied to the first access network device. The first access network device receives a container of each of a plurality of candidate access network devices, where the container of the access network device includes a parameter for a terminal to switch to the access network device; sends a radio resource control RRC reconfiguration message to the terminal, where the RRC reconfiguration message includes the container of each of the plurality of candidate access network devices; determines that the terminal needs to switch to a second access network device in the plurality of candidate access network devices; and sends a first media access control MAC layer message to the terminal, where the first MAC layer message includes information for triggering the terminal to switch to the second access network device and information indicating a first NCC, and the first NCC is for determining a key for communication between the terminal and the second access network device.

According to the foregoing method, the first access network device first sends the container (carrying the handover parameter) of each of the plurality of candidate access network devices to the terminal. Then, when the terminal needs to switch to the second access network device, the first access network device sends, via the first MAC layer message, the information indicating the first NCC. In comparison with a normal handover procedure (in the normal handover procedure, when determining that a terminal needs to be handed over, a source access network device needs to first obtain a container (the container carries an NCC and a handover parameter) of a target access network device from the target access network device, and then send the container to the terminal, to trigger the terminal to perform handover), because when determining that the terminal needs to switch, the first access network device may send the first MAC layer message to the terminal, to trigger the terminal to switch, a handover delay can be reduced; and because the first MAC layer message carries the information indicating the first NCC, implementation of secure communication between the terminal and the second access network device is facilitated.

In a possible design, sending the MAC layer message to the terminal includes: An RRC layer of the first access network device transfers, to a MAC layer of the first access network device, the information indicating the first NCC. The MAC layer of the first access network device sends the MAC layer message to the terminal.

In this way, the information indicating the first NCC is transferred to the MAC layer through information transfer between the RRC layer and the MAC layer in the first access network device, so that the MAC layer can encapsulate, into the MAC layer message for sending to the terminal, both the information indicating the first NCC and the information for triggering the terminal to switch to the second access network device.

In a possible design, the method further includes: receiving the first next hop chaining counter NCC from a mobility management network element, where the first NCC is carried in an initial context setup request message or a path switch response message.

In this way, the first NCC is obtained by the first access network device from the initial context setup request message or the path switch response message. Then, the terminal may determine, based on an NCC obtained by a source access network device (namely, the first access network device), a key for communication between the terminal and a target access network device (namely, the second access network device), to help implement a key update, and improve communication security.

In a possible design, the method further includes: sending a first candidate access network device list to the second access network device, where the first candidate access network device list includes an identifier of at least one of the plurality of candidate access network devices.

In this way, the first access network device sends the first candidate access network device list to the second access network device, so that when determining that the terminal needs to switch, the second access network device can determine, based on the first candidate access network device list, whether to perform LTM switching, to help improve a switching success rate. Specifically, the terminal can successfully switch to the target access network device through LTM switching only when the target access network device sends a constructed container to the terminal in advance. Therefore, when determining that the terminal needs to switch to a third access network device, if the second access network device determines, based on the first candidate access network device list received from the first access network device, that the third access network device belongs to the first candidate access network device list, the second access network device may determine to perform LTM switching. If the second access network device determines, based on the first candidate access network device list received from the first access network device, that the third access network device does not belong to the first candidate access network device list, the second access network device may determine to perform normal handover.

In a possible design, the information indicating the first NCC includes at least one of the following: the first NCC; an index value of the first NCC; and a ciphertext obtained through encryption of the first NCC.

In a possible design, the method further includes: generating the first MAC layer message. In comparison with the normal handover procedure (in the normal handover procedure, when determining that the terminal needs to be handed over, the source access network device needs to first obtain the container (the container carries the NCC and the handover parameter) constructed by the target access network device from the target access network device, and then send the container to the terminal), because when determining that the terminal needs to switch, the first access network device may generate the first MAC layer message including the NCC, and send the first MAC layer message to the terminal, the handover delay can be reduced.

According to a second aspect, this application provides a communication method. The method may be applied to a second access network device, or may be applied to a processor, a chip, a chip system, a functional module, or the like in the second access network device. For example, the method is applied to the second access network device. The second access network device sends a container of the second access network device to a terminal, where the container includes a parameter for the terminal to switch to the second access network device; after the terminal switches from a first access network device to the second access network device, determines that the terminal needs to switch to a third access network device in at least one candidate access network device; and sends a second MAC layer message to the terminal, where the second MAC layer message includes information for triggering the terminal to switch to the third access network device and information indicating a second NCC, and the second NCC is for determining a key for communication between the terminal and the third access network device.

In the foregoing method, the second access network device may first send the container (the container carries the handover parameter) of the second access network device to the terminal. After the terminal switches from the first access network device to the second access network device based on the parameter in the container, if the second access network device determines that the terminal needs to switch to the third access network device, the second access network device may send, via the second MAC layer message, the information indicating the second NCC. In comparison with a normal handover procedure (in the normal handover procedure, when determining that a terminal needs to be handed over, a source access network device needs to first obtain a container (the container carries an NCC and a handover parameter) of a target access network device from the target access network device, and then send the container to the terminal, to trigger the terminal to perform handover), because when determining that the terminal needs to switch, the second access network device may send the second MAC layer message to the terminal, to trigger the terminal to switch, reducing of a handover delay is facilitated; and because the second MAC layer message carries the information indicating the second NCC, implementation of secure communication between the terminal and the third access network device is facilitated.

In a possible design, the method further includes: The second access network device generates the second MAC layer message. In comparison with the normal handover procedure (in the normal handover procedure, when determining that the terminal needs to be handed over, the source access network device needs to first obtain the container (the container carries the NCC and the handover parameter) of the target access network device from the target access network device, and then send the container to the terminal), because when determining that the terminal needs to switch, the second access network device may generate the second MAC layer message including the NCC, and send the second MAC layer message to the terminal, the handover delay can be reduced.

In a possible design, sending the second MAC layer message to the terminal includes: An RRC layer of the second access network device transfers, to a MAC layer of the second access network device, the information indicating the second NCC. The MAC layer of the second access network device sends the second MAC layer message to the terminal.

In this way, the information indicating the second NCC is transferred to the MAC layer through information transfer between the RRC layer and the MAC layer in the second access network device, so that the MAC layer can encapsulate, into the MAC layer message for sending to the terminal, both the information indicating the second NCC and the information for triggering the terminal to switch to the third access network device.

In a possible design, after the terminal switches to the second access network device, the method further includes: sending a path switch request message to a mobility management network element; and receiving a path switch response message from the mobility management network element, where the path switch response message includes the second NCC and a next hop NH corresponding to the second NCC.

In this way, the second NCC is obtained by the second access network device from the path switch response message (that is, when LTM switching is performed, the second NCC sent to the terminal is obtained by a current source access network device from the path switch response message), to help implement a key update, so that a key reuse problem does not occur when the terminal switches between a plurality of access network devices.

In a possible design, after determining that the terminal needs to switch to the third access network device, the method further includes: determining, based on the NH corresponding to the second NCC, the key for communication between the third access network device and the terminal; and sending, to the third access network device, the key for communication between the third access network device and the terminal.

In this way, the second access network device can determine, based on the NH corresponding to the second NCC, the key for communication between the third access network device and the terminal, and send the key to the third access network device, so that the third access network device and the terminal maintain the same key.

In a possible design, the method further includes: sending a third MAC layer message to the terminal device, where the third MAC layer message includes the information indicating the second NCC, and the second NCC is for determining a key for communication between the terminal and the second access network device; and determining, based on the NH corresponding to the second NCC, the key for communication between the terminal and the second access network device.

In this way, because the key for communication between the terminal and the second access network device is determined based on the second NCC stored in the second access network device, the first access network device cannot learn of the key for communication between the terminal and the second access network device, to help improve communication security.

In a possible design, after sending the container of the second access network device to the terminal, the method further includes: receiving a first candidate access network device list from the first access network device, where the first candidate access network device list includes an identifier of the at least one candidate access network device; and sending the second MAC layer message to the terminal includes: if it is determined that the third access network device belongs to the first candidate access network device list, sending the second MAC layer message to the terminal.

In this way, the terminal can successfully switch to a target access network device through LTM switching only when the target access network device sends a constructed container to the terminal in advance. Therefore, when determining that the terminal needs to switch to the third access network device, if the second access network device determines, based on the first candidate access network device list received from the first access network device, that the third access network device belongs to the first candidate access network device list, the second access network device may determine to perform LTM switching, to help improve a switching success rate.

In a possible design, after determining that the terminal needs to switch to the third access network device in the at least one candidate access network device, the method further includes: sending a second candidate access network device list to the third access network device, where the second candidate access network device list includes an identifier of a part or all of the at least one candidate access network device.

In this way, the second access network device sends the second candidate access network device list to the third access network device, so that when determining that the terminal needs to switch to another access network device, the third access network device can determine, based on the second candidate access network device list, whether to perform LTM switching, to help improve the switching success rate.

According to a third aspect, this application provides a communication method. The method may be applied to a terminal, or may be applied to a processor, a chip, a chip system, a functional module, or the like in the terminal. For example, the method is applied to the terminal. The terminal receives a container from each of a plurality of candidate access network devices, where the container of the access network device includes a parameter for the terminal to switch to the access network device, and the plurality of candidate access network devices include a second access network device; receives a first MAC layer message from a first access network device, where the first MAC layer message includes information for triggering the terminal to switch to the second access network device and information indicating a first NCC; switches to the second access network device based on a parameter in a container of the second access network device; and determines, based on the first NCC, a key for communication between the terminal and the second access network device.

According to the foregoing method, the terminal receives the container (the container carries the handover parameter) constructed by each of the plurality of candidate access network devices from the first access network device, and then receives the first MAC layer message (carrying the NCC) from the first access network device when the terminal needs to switch to the second access network device. In comparison with a normal handover procedure (in the normal handover procedure, when determining that a terminal needs to be handed over, a source access network device needs to first obtain a container (the container carries an NCC and a handover parameter) constructed by a target access network device from the target access network device, and then send the container to the terminal, to trigger the terminal to perform handover), because the first access network device may send the first MAC layer message to the terminal, to trigger the terminal to switch, reducing of a handover delay is facilitated; and because the first MAC layer message carries the information indicating the first NCC, implementation of secure communication between the terminal and the second access network device is facilitated.

It may be understood that the first access network device may be an access network device accessed by the terminal by using a procedure like an initial access procedure, a normal handover procedure, a reestablishment procedure, or a cell reselection procedure. After the terminal accesses the first access network device, the first access network device and the terminal may store a same key (the key is for communication between the first access network device and the terminal) and a same NCC (for example, the first NCC).

In a possible design, determining, based on the first NCC, the key for communication between the terminal and the second access network device includes: after determining that the first NCC is the same as an NCC stored in the terminal, deriving, based on a first input parameter, the key for communication between the terminal and the second access network device, where the first input parameter includes a key KgNB corresponding to the first NCC and information about a cell, for example, a PCI and/or a frequency of the cell, of the second access network device.

In a possible design, determining, based on the first NCC, the key for communication between the terminal and the second access network device includes: A MAC layer of the terminal transfers, to an RRC layer of the terminal, the information indicating the first NCC. The RRC layer of the terminal determines, based on the first NCC, the key for communication between the terminal and the second access network device.

In this way, the information indicating the first NCC is transferred to the RRC layer through information transfer between the RRC layer and the MAC layer in the terminal, so that the RRC layer determines the key based on the first NCC.

In a possible design, the plurality of candidate access network devices further include a third access network device; and after the terminal switches to the second access network device, the method further includes: receiving a second MAC layer message from the second access network device, where the second MAC layer message includes information for triggering the terminal to switch to the third access network device and information indicating a second NCC; switching to the third access network device based on a parameter in a container of the third access network device; and determining, based on the second NCC, a key for communication between the terminal and the third access network device.

In a possible design, determining, based on the second NCC, the key for communication between the terminal and the third access network device includes: after determining that the second NCC is different from the NCC (which is specifically the first NCC) stored in the terminal, deriving, based on a second input parameter, the key for communication between the terminal and the third access network device, where the second input parameter includes an NH corresponding to the second NCC and information about a cell of the third access network device.

In this way, because the second NCC is different from the NCC stored in the terminal, the terminal may perform vertical derivation, to obtain the key for communication between the terminal and the third access network device, to help improve communication security.

In a possible design, the method further includes: after determining that the second NCC is different from the NCC stored in the terminal, updating the NCC stored in the terminal to the second NCC.

According to a fourth aspect, this application provides a communication method. The method may be applied to a terminal, or may be applied to a processor, a chip, a chip system, a functional module, or the like in the terminal. For example, the method is applied to the terminal. The terminal receives a container from each of a plurality of candidate access network devices, where the container of the access network device includes a parameter for the terminal to switch to the access network device, and the plurality of candidate access network devices include a second access network device; receives a first MAC layer message from a first access network device, where the first MAC layer message includes information for triggering the terminal to switch to the second access network device; switches to the second access network device based on a parameter in a container of the second access network device; receives a third MAC layer message from the second access network device, where the third MAC layer message includes information indicating a second NCC; and determines, based on the second NCC, a key for communication between the terminal and the second access network device.

In this way, after switching to the second access network device, the terminal receives, from the second access network device, the information indicating the second NCC, and determines, based on the second NCC, the key for communication between the terminal and the second access network device. Therefore, a source access network device (namely, the first access network device) cannot learn of the key for communication between the terminal and the second access network device, to help improve communication security.

In a possible design, the first MAC layer message further includes information indicating a first NCC; and the method further includes: determining, based on the first NCC, a key for communication between the terminal and the second access network device, and storing the key in an access stratum AS security context, where when the key for communication between the terminal and the second access network device is determined based on the second NCC, the key that is determined based on the first NCC and that is in the AS security context is updated to the key determined based on the second NCC.

In this way, the terminal can first determine, based on the first NCC, the key for communication between the terminal and the second access network device, to help perform security protection on communication between the terminal and the second access network device in a process in which the terminal switches to the second access network device.

In a possible design, determining, based on the first NCC, the key for communication between the terminal and the second access network device includes: after determining that the first NCC is the same as an NCC stored in the terminal, deriving, based on a first input parameter, the key for communication between the terminal and the second access network device, where the first input parameter includes a key KgNB corresponding to the first NCC and information about a cell of the second access network device.

In a possible design, determining, based on the second NCC, a key for communication between the terminal and the third access network device includes: after determining that the second NCC is different from the NCC stored in the terminal, deriving, based on a third input parameter, the key for communication between the terminal and the second access network device, where the third input parameter includes an NH corresponding to the second NCC and the information about the cell of the second access network device.

In this way, because the second NCC is different from the NCC stored in the terminal, the terminal may perform vertical derivation, to obtain the key for communication between the terminal and the second access network device, to help improve the communication security.

In a possible design, the method further includes: after determining that the second NCC is different from the NCC stored in the terminal, updating the NCC stored in the terminal to the second NCC.

In a possible design, determining, based on the second NCC, the key for communication between the terminal and the second access network device includes: A MAC layer of the terminal transfers, to an RRC layer of the terminal, the information indicating the second NCC. The RRC layer of the terminal determines, based on the second NCC, the key for communication between the terminal and the second access network device.

In a possible design, the plurality of candidate access network devices further include the third access network device; and after the terminal switches to the second access network device, the method further includes: receiving a second MAC layer message from the second access network device, where the second MAC layer message includes information for triggering the terminal to switch to the third access network device; switching to the third access network device based on a parameter in a container of the third access network device; receiving a fourth MAC layer message from the third access network device, where the fourth MAC layer message includes information indicating a third NCC; and determining, based on the third NCC, a key for communication between the terminal and the third access network device.

In a possible design, the second MAC layer message further includes the information indicating the second NCC; and the method further includes: determining, based on the second NCC, the key for the terminal to send a switch complete message to the third access network device, and storing the key in the AS security context, where when the key for communication between the terminal and the third access network device is determined based on the third NCC, the key that is determined based on the second NCC and that is in the AS security context is updated to the key determined based on the third NCC.

The communication methods provided in the first aspect to the fourth aspect correspond to each other, and beneficial effects of technical features corresponding to each other in the first aspect to the fourth aspect may be mutually referenced.

According to a fifth aspect, this application provides a communication method. The method may be applied to a first access network device, or may be applied to a processor, a chip, a chip system, a functional module, or the like in the first access network device. For example, the method is applied to the first access network device. The first access network device sends a handover request message to each of a plurality of candidate access network devices, where the handover request message includes a first NCC; receives a container from each of the plurality of candidate access network devices, where the container of the access network device includes the first NCC; sends an RRC reconfiguration message to the terminal, where the RRC reconfiguration message includes the container of each of the plurality of candidate access network devices; determines that a second access network device to which the terminal needs to switch is an access network device to which switching has not been performed in a consecutive-LTM-switching process for the terminal, where the plurality of candidate access network devices include the second access network device; and sends a first MAC layer message to the terminal, where the first MAC layer message is for triggering the terminal to switch to the second access network device.

According to the foregoing method, because a container constructed by each of the plurality of candidate access network devices carries the first NCC, after switching to any one of the access network devices, the terminal determines, based on the first NCC carried in a container constructed by the access network device (and information about a cell of the access network device), a key for communication between the terminal and the access network device. The implementation is simple and convenient. Further, when LTM switching is to be performed, the first access network device (namely, a source access network device) may determine whether the second access network device (namely, a target access network device) is the access network device to which switching has not been performed in the consecutive-LTM-switching process for the terminal. If the second access network device is the access network device to which switching has not been performed in the consecutive-LTM-switching process for the terminal, LTM switching may be performed. If the second access network device is the access network device to which switching has been performed in the consecutive-LTM-switching process for the terminal, normal handover is performed. In this way, a key reuse problem does not occur when the terminal switches between the plurality of candidate access network devices.

In a possible design, the first NCC included in the container of the access network device is for determining a key for communication between the terminal and the access network device.

In a possible design, the method further includes: receiving the first NCC from a mobility management network element, where the first NCC is carried in an initial context setup request message or a path switch response message.

In a possible design, the method further includes: sending a quantity of consecutive times of LTM switching to the second access network device.

In a possible design, the method further includes: sending a third candidate access network device list to the second access network device, where the third candidate access network device list includes an identifier of at least one candidate access network device. For example, the third candidate access network device list includes an identifier of an access network device that is in the plurality of candidate access network devices and to which switching has not been performed in the consecutive-LTM-switching process for the terminal.

In this way, the first access network device sends the third candidate access network device list to the second access network device, so that when determining that the terminal needs to switch to a third access network device, the second access network device can determine, based on the third candidate access network device list, whether the third access network device is an access network device to which switching has not been performed in the consecutive-LTM-switching process for the terminal. In this way, the key reuse problem does not occur when the terminal switches between the plurality of candidate access network devices.

According to a sixth aspect, this application provides a communication method. The method may be applied to a second access network device, or may be applied to a processor, a chip, a chip system, a functional module, or the like in the second access network device. For example, the method is applied to the second access network device. The second access network device receives a handover request message from a first access network device, where the handover request message includes a first NCC; sends a container of the second access network device to the first access network device, where the container includes the first NCC and a parameter for a terminal to switch to the second access network device, and the first NCC included in the container is for determining a key for communication between the terminal and the second access network device; after the terminal switches to the second access network device, determines that a third access network device to which the terminal needs to switch is an access network device to which switching has not been performed in a consecutive-LTM-switching process for the terminal; and sends a second MAC layer message to the terminal, where the second MAC layer message is for triggering the terminal to switch to the third access network device.

In the foregoing method, because the container constructed by the second access network device includes the first NCC, the terminal may determine, based on the first NCC, the key for communication between the terminal and the second access network device, to help implement secure communication between the terminal and the second access network device. When determining that the terminal needs to switch to the third access network device, the second access network device (namely, a source access network device) may determine whether the third access network device (namely, a target access network device) is the access network device to which switching has not been performed in the consecutive-LTM-switching process for the terminal. If the third access network device is the access network device to which switching has not been performed in the consecutive-LTM-switching process for the terminal, LTM switching may be performed. If the third access network device is the access network device to which switching has been performed in the consecutive-LTM-switching process for the terminal, normal handover is performed. In this way, a key reuse problem does not occur when the terminal switches between a plurality of candidate access network devices.

In a possible design, after the terminal switches to the second access network device, the method further includes: receiving a second NCC from a mobility management network element, where the second NCC is carried in a path switch response message; and sending the second MAC layer message to the terminal includes: if a value of the second NCC is not a preset value, sending the second MAC layer message to the terminal.

In a possible design, the method further includes: if a value of the first NCC is the preset value, sending an RRC reconfiguration message to the terminal, where the RRC reconfiguration message is for triggering the terminal to switch to the third access network device.

In this way, when a value of an NCC is the preset value (the preset value may include 0 and 7), that is, when the NCC is about to wrap around (the value is 7) or has just wrapped around (the value is 0), normal handover may be performed, thereby sending an updated NCC to the terminal via a handover command message, to help ensure that keys subsequently derived by the terminal and an access network device are consistent.

In a possible design, the method further includes: receiving a quantity of consecutive times of LTM switching from the first access network device; and sending the second MAC layer message to the terminal includes: if the quantity of consecutive times of LTM switching is less than or equal to a threshold, sending the second MAC layer message to the terminal.

In a possible design, the method further includes: if the quantity of consecutive times of LTM switching is greater than the threshold, sending the RRC reconfiguration message to the terminal, where the RRC reconfiguration message is for triggering the terminal to switch to the third access network device.

In this way, when the quantity of consecutive times of LTM switching is greater than the threshold, normal handover may be performed, thereby sending the updated NCC to the terminal via the handover command message, to help ensure that the keys subsequently derived by the terminal and the access network device are consistent.

In a possible design, before the terminal switches to the second access network device, the method further includes: receiving a third candidate access network device list from the first access network device, where the third candidate access network device list includes an identifier of at least one candidate access network device; and determining that the third access network device to which the terminal needs to switch is the access network device to which switching has not been performed in the consecutive-LTM-switching process for the terminal includes: if the third access network device belongs to the third candidate access network device list, determining that the third access network device is the access network device to which switching has not been performed in the consecutive-LTM-switching process for the terminal.

In a possible design, the method further includes: sending a fourth candidate access network device list to the third access network device, where the fourth candidate access network device list does not include an identifier of the second candidate access network device.

In this way, each time LTM switching is performed, the source access network device can send a candidate access network device list to the target access network device, so that when determining that the terminal needs to switch, the target access network device can determine, based on the received candidate access network device list, whether to perform LTM switching. The implementation is simple and convenient.

According to a seventh aspect, this application provides a communication method. The method may be applied to a terminal, or may be applied to a processor, a chip, a chip system, a functional module, or the like in the terminal. For example, the method is applied to the terminal. The terminal receives an RRC reconfiguration message from a first access network device, where the RRC reconfiguration message includes a container of each of a plurality of candidate access network devices, the container of the access network device includes a first NCC, and the plurality of candidate access network devices include a second access network device; receives a first MAC layer message from the first access network device, where the first MAC layer message is for triggering the terminal to switch to the second access network device; and after the terminal switches to the second access network device, communicates with the second access network device by using a key corresponding to the second access network device, where the key corresponding to the second access network device is determined based on the first NCC.

In a possible design, the method further includes: determining, based on the first NCC, the key corresponding to the second access network device. Specifically, when the first NCC is the same as an NCC stored in the terminal, the key corresponding to the second access network device is derived based on a first input parameter, where the first input parameter includes information about a cell of the second access network device.

According to an eighth aspect, this application provides a communication method. The method may be applied to a first access network device, or may be applied to a processor, a chip, a chip system, a functional module, or the like in the first access network device. For example, the method is applied to the first access network device. The first access network device sends handover request messages to a plurality of candidate access network devices respectively (that is, sends a handover request message to each of the plurality of candidate access network devices); receives a container from each of the plurality of candidate access network devices, where the container of the access network device includes an NCC corresponding to the access network device, and the NCC corresponding to the access network device is for determining a key for communication between a terminal and the access network device; and sends an RRC reconfiguration message to the terminal, where the RRC reconfiguration message includes the container constructed by each of the plurality of candidate access network devices, and all the access network devices correspond to different NCCs, that is, different access network devices in the plurality of candidate access network devices correspond to different NCCs.

According to the foregoing method, because the container constructed by each of the plurality of candidate access network devices carries the NCC corresponding to the access network device, after switching to any one of the access network devices, the terminal determines, based on an NCC carried in a container constructed by the access network device (and information about a cell of the access network device), a key for communication between the terminal and the access network device, to help improve communication security.

In a possible design, the method further includes: determining the plurality of candidate access network devices, where a quantity of the plurality of candidate access network devices is less than or equal to a threshold, and the threshold is determined based on an NCC corresponding to the first access network device.

In this way, this helps ensure that the different access network devices in the plurality of candidate access network devices correspond to the different NCCs. For example, the threshold is equal to a maximum value of an NCC minus the NCC corresponding to the first access network device. In other words, a quantity of candidate access network devices determined by the first access network device should be less than or equal to the threshold, to avoid that NCCs corresponding to the different access network devices are the same.

In a possible design, the method further includes: determining that a second access network device to which the terminal needs to switch is an access network device to which switching has not been performed in a consecutive-LTM-switching process for the terminal; and sending a first MAC layer message to the terminal, where the first MAC layer message is for triggering the terminal to switch to the second access network device.

In this way, when LTM switching is to be performed, the first access network device (namely, a source access network device) may determine whether the second access network device (namely, a target access network device) is the access network device to which switching has not been performed in the consecutive-LTM-switching process for the terminal. If the second access network device is the access network device to which switching has not been performed in the consecutive-LTM-switching process for the terminal, LTM switching may be performed. If the second access network device is the access network device to which switching has been performed in the consecutive-LTM-switching process for the terminal, normal handover is performed. In this way, a key reuse problem does not occur when the terminal switches between the plurality of candidate access network devices.

In a possible design, the method further includes: sending a third candidate access network device list to the second access network device, where the third candidate access network device list includes an identifier of at least one candidate access network device. For example, the third candidate access network device list includes an identifier of an access network device that is in the plurality of candidate access network devices and to which switching has not been performed in the consecutive-LTM-switching process for the terminal.

In this way, the first access network device can send the third candidate access network device list to the second access network device, so that when determining that the terminal needs to switch, the second access network device can determine, based on the received third candidate access network device list, whether to perform LTM switching. The implementation is simple and convenient.

According to a ninth aspect, this application provides a communication method. The method may be applied to a second access network device, or may be applied to a processor, a chip, a chip system, a functional module, or the like in the second access network device. For example, the method is applied to the second access network device. The second access network device receives a handover request message from a first access network device; after receiving the handover request message, sends a request message to a mobility management network element, where the request message is for requesting an NCC corresponding to the second access network device; receives the NCC from the core network device; and sends a handover request acknowledge message to the first access network device, where the handover request acknowledge message includes a container constructed by the second access network device, the container includes the NCC, and the NCC is for determining a key for communication between the terminal and the second access network device.

In this way, because the NCC carried in the container constructed by the second access network device is obtained by the second access network device from the mobility management network element, the second access network device and another candidate access network device correspond to different NCCs, to help improve communication security.

In a possible design, the handover request message includes indication information, and the indication information indicates that the handover request message corresponds to LTM switching.

In this way, the second access network device may request, from the mobility management network element in response to the handover request message, the NCC corresponding to the second access network device.

In a possible design, the method further includes: receiving, from the core network device, an NH corresponding to the NCC; and determining, based on the NH corresponding to the NCC, the key for communication with the terminal.

In a possible design, after the terminal switches from the first access network device to the second access network device, the method further includes: determining that a third access network device to which the terminal needs to switch is an access network device to which switching has not been performed in a consecutive-LTM-switching process for the terminal; and sending a second MAC layer message to the terminal, where the second MAC layer message is for triggering the terminal to switch to the third access network device.

In this way, when LTM switching is to be performed, the second access network device (namely, a source access network device) may determine whether the third access network device (namely, a target access network device) is the access network device to which switching has not been performed in the consecutive-LTM-switching process for the terminal. If the third access network device is the access network device to which switching has not been performed in the consecutive-LTM-switching process for the terminal, LTM switching may be performed. If the third access network device is the access network device to which switching has been performed in the consecutive-LTM-switching process for the terminal, normal handover is performed. In this way, a key reuse problem does not occur when the terminal switches between the plurality of candidate access network devices.

In a possible design, before the terminal switches from the first access network device to the second access network device, the method further includes: receiving a third candidate access network device list from the first access network device; and determining that the third access network device to which the terminal needs to switch is the access network device to which switching has not been performed in the consecutive-LTM-switching process for the terminal includes: if the third access network device belongs to the third candidate access network device list, determining that the third access network device is the access network device to which switching has not been performed in the consecutive-LTM-switching process for the terminal.

In a possible design, the method further includes: sending a second candidate access network device list to the third access network device, where the second candidate access network device list does not include an identifier of the second candidate access network device.

According to a tenth aspect, this application provides a communication method. The method may be applied to a terminal, or may be applied to a processor, a chip, a chip system, a functional module, or the like in the terminal. For example, the method is applied to the terminal. The terminal receives an RRC reconfiguration message from a first access network device, where the RRC reconfiguration message includes correspondences between identifiers of a plurality of candidate access network devices and a plurality of NCCs; determines, based on the NCCs corresponding to the plurality of candidate access network devices, keys corresponding to the plurality of candidate access network devices, where different access network devices in the plurality of candidate access network devices correspond to different NCCs; receives a first MAC layer message from the first access network device, where the first MAC layer message is for triggering the terminal to switch to the second access network device, and the plurality of candidate access network devices include the second access network device; and after the terminal switches to the second access network device, communicates with the second access network device by using a key corresponding to the second access network device.

In a possible design, determining, based on an NCC corresponding to the second access network device, the key corresponding to the second access network device includes: deriving, based on a second input parameter, the key corresponding to the second access network device, where the second input parameter includes an NH corresponding to the NCC corresponding to the second access network device and information about a cell of the second access network device.

In a possible design, the method further includes: sequentially deriving, based on the plurality of NCCs and in ascending order of the NCCs, NHs corresponding to the plurality of NCCs.

In this way, the terminal sequentially derives, in ascending order of the NCCs, the NHs corresponding to the plurality of NCCs, to help quickly derive the NHs, and reduce processing burden of the terminal.

In a possible design, the plurality of candidate access network devices further include a third access network device, and the method further includes: receiving a second MAC layer message from the second access network device, where the second MAC layer message is for triggering the terminal to switch to the third access network device; and after the terminal switches to the third access network device, communicating with the third access network device by using a key corresponding to the third access network device.

In a possible design, the method further includes: deleting, in response to the second MAC layer message, the NCC corresponding to the second access network device. In this way, this helps release a storage resource of the terminal in time.

According to an eleventh aspect, this application provides a communication apparatus. The communication apparatus has a function of implementing any one of the first aspect to the tenth aspect. For example, the communication apparatus includes a corresponding module, unit, or means for performing operations in any one of the first aspect to the tenth aspect. The function, the unit, or the means may be implemented by software, may be implemented by hardware, or may be implemented by hardware executing corresponding software.

In a possible design, the communication apparatus includes a processing unit and a communication unit. The communication unit may be configured to receive and send signals, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in any one of the first aspect to the tenth aspect.

In a possible design, the communication apparatus includes a processor, and the processor may be configured to be coupled to a memory. The memory may store a necessary computer program or necessary instructions for implementing the function in any one of the first aspect to the tenth aspect. The processor may execute the computer program or the instructions stored in the memory. When the computer program or the instructions are executed, the communication apparatus is caused to implement the method according to any possible design or implementation of any one of the first aspect to the tenth aspect.

In a possible design, the communication apparatus includes a processor and a memory, and the memory may store a necessary computer program or necessary instructions for implementing the functions in the first aspect to the tenth aspect. The processor may execute the computer program or the instructions stored in the memory. When the computer program or the instructions are executed, the communication apparatus is caused to implement the method according to any possible design or implementation of any one of the first aspect to the tenth aspect.

In a possible design, the communication apparatus includes a processor and an interface circuit. The processor is configured to: communicate with another apparatus through the interface circuit, and perform the method according to any possible design or implementation of any one of the first aspect to the tenth aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into a same chip, or may be disposed on different chips. A type of the memory and a manner in which the memory and the processor are disposed are not limited in embodiments of this application.

According to a twelfth aspect, this application provides a communication system. The communication system may include a first access network device, a second access network device, and a terminal. The first access network device is configured to perform the method according to the first aspect, the second access network device is configured to perform the method according to the second aspect, and the terminal is configured to perform the method according to the third aspect or the fourth aspect; the first access network device is configured to perform the method according to the fifth aspect, the second access network device is configured to perform the method according to the sixth aspect, and the terminal is configured to perform the method according to the seventh aspect; or the first access network device is configured to perform the method according to the eighth aspect, the second access network device is configured to perform the method according to the ninth aspect, and the terminal is configured to perform the method according to the tenth aspect.

According to a thirteenth aspect, this application provides a computer-readable storage medium. The computer storage medium stores a computer program (or computer-readable instructions). When a computer reads and executes some or all of the computer-readable instructions, the method according to any possible design of the first aspect to the tenth aspect is performed.

For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can be for carrying or storing expected program code in a form of instructions or a data structure and that can be accessed by the computer.

According to a fourteenth aspect, this application provides a computer program product. When a computer reads and executes the computer program product, the method according to any possible design of the first aspect to the tenth aspect is caused to be performed.

According to a fifteenth aspect, this application provides a chip (or a chip system). The chip includes a processor. The processor is coupled to a memory, and the memory stores a computer program. The processor is configured to invoke a part or all of the computer program in the memory, to cause the method according to any possible design of the first aspect to the tenth aspect to be performed.

### BRIEF DESCRIPTION OF DRAWINGS

FIG. 1 is a diagram of a network architecture to which an embodiment of this application is applicable;
FIG. 2 is a schematic flowchart of performing key derivation by an access network device and a terminal according to an embodiment of this application;
FIG. 3 is a diagram of a possible procedure of inter-station normal handover according to an embodiment of this application;
FIG. 4 is a diagram of a possible procedure of inter-station LTM switching according to an embodiment of this application;
FIG. 5 is a diagram of a procedure corresponding to a communication method according to an embodiment of this application;
FIG. 6A and FIG. 6B are a diagram of a procedure corresponding to a communication method according to an embodiment of this application;
FIG. 7 is a diagram of a procedure corresponding to a communication method according to an embodiment of this application;
FIG. 8 is a diagram of a procedure corresponding to a communication method according to an embodiment of this application;
FIG. 9A and FIG. 9B are a diagram of a procedure corresponding to a communication method according to an embodiment of this application;
FIG. 10A and FIG. 10B are a diagram of a procedure corresponding to a communication method according to an embodiment of this application;
FIG. 11A and FIG. 11B are a diagram of a procedure corresponding to a communication method according to an embodiment of this application;
FIG. 12 is a possible example block diagram of an apparatus according to an embodiment of this application; and
FIG. 13 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment.

In the specification, the claims, and the accompanying drawings of this application, the terms "first", "second", and the like, and various other term numerals (if existent) are for distinguishing between similar objects, but are not necessarily for describing a specific order or sequence. It should be understood that the data termed in such a way is interchangeable in appropriate cases, so that embodiments described herein can be implemented in orders other than the order illustrated or described herein. In addition, the terms "include", "have" and any variant thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and internet of things (internet of things, IoT) communication systems, or other communication systems.

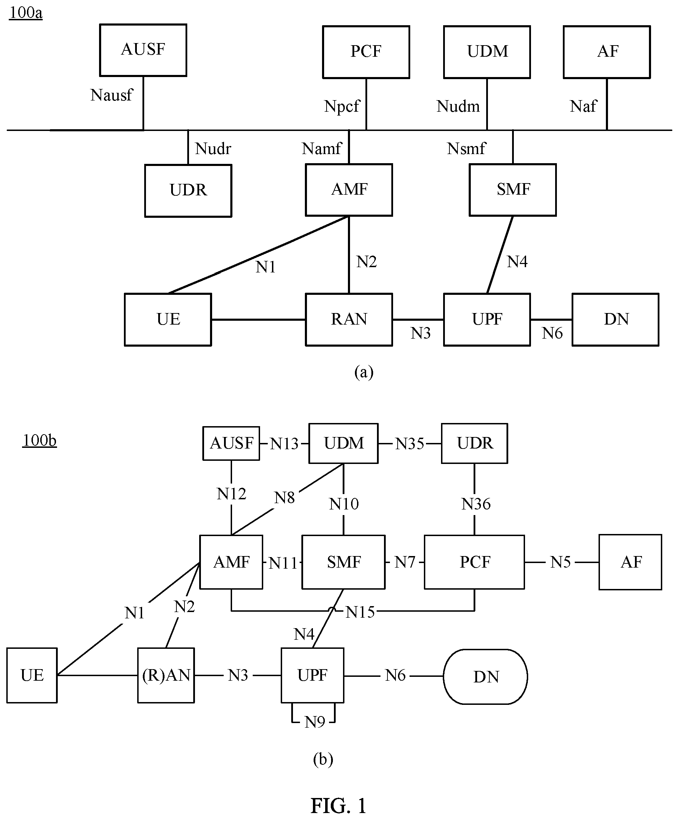

The following describes, by using examples with reference to (a) in FIG. 1 and (b) in FIG. 1, the 5G system to which embodiments of this application are applicable. It should be understood that the 5G system described in this specification is merely an example, and should not constitute any limitation on this application. It should be further understood that some network elements in the 5G system may communicate with each other through a service-oriented interface or a point-to-point interface. With reference to (a) in FIG. 1 and (b) in FIG. 1, the following separately describes a 5G system framework that is based on the point-to-point interface and a 5G system framework that is based on the service-oriented interface.

By way of example for description, (a) in FIG. 1 is a diagram of an architecture of a 5G system 100a to which an embodiment of this application is applicable. (a) in FIG. 1 is a diagram of a 5G network architecture that is based on a service-oriented interface. As shown in (a) in FIG. 1, the network architecture may include but is not limited to the following network elements (also referred to as functional network elements, functional entities, nodes, devices, or the like):
a (radio) access network ((radio) access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), an authentication server function (authentication server function, AUSF) network element, the unified data management (unified data management, UDM) network element, a unified data repository (unified data repository, UDR), and the like.

The following briefly describes the network elements shown in (a) in FIG. 1.
1. User equipment (user equipment, UE) may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal may be a device that provides a user with a voice/data connectivity, for example, a handheld device or a vehicle-mounted device that has a wireless connection function. Currently, some examples of the terminal may be a mobile phone (mobile phone), a tablet computer (pad), a computer (for example, a laptop computer or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a vehicle-mounted device, a wearable device, a terminal device in a 5G network, or a terminal in a future evolved public land mobile network (public land mobile network, PLMN).

In addition, the terminal may alternatively be a terminal in an internet of things (Internet of things, IoT) system. An IoT is an important component in future information technology development. A main technical feature of the IoT is to connect things to a network by using a communication technology, to implement an intelligent network for human-machine interconnection and thing-thing interconnection. An IoT technology may implement massive connections, deep coverage, and terminal power saving by using, for example, a narrow band (narrow band, NB) technology.

In addition, the terminal may further include an intelligent printer, a train detector, and the like, and main functions include: collecting data (which is a function of some terminal devices), receiving control information and downlink data of a network device, sending an electromagnetic wave, and transmitting uplink data to the network device.

It should be understood that the terminal may be any device that can access a network. The terminal and the access network device may communicate with each other by using an air interface technology.

Optionally, the terminal may be configured to act as a base station. For example, the terminal may act as a scheduling entity that provides a sidelink signal between terminals in V2X, D2D, or the like. For example, the cellular phone and an automobile communicate with each other by using a sidelink signal. The cellular phone communicates with a smart home device without relaying a communication signal by using a base station.

2. The (radio) access network device is referred to as the access network device for short in embodiments of this application, is configured to provide a network access function for authorized user equipment in a specific area, and can use transmission tunnels with different quality of service based on a level of the user equipment, a service requirement, and the like.

The access network device can manage a radio resource, provide an access service for the user equipment, and then complete forwarding of a control signal and data between the user equipment and a core network. The access network device may alternatively be understood as a base station in a conventional network.

For example, the access network device in embodiments of this application may be any communication device with a wireless transceiver function and for communication with the user equipment. The access network device includes but is not limited to an evolved NodeB (evolved NodeB, eNB), a gNB or a transmission point (TRP or TP) in the 5G system, or one antenna panel or a group of antenna panels (including a plurality of antenna panels) of a base station in the 5G system, or may be a network node that constitutes a gNB or a transmission point, for example, a baseband unit (BBU) or a distributed unit (distributed unit, DU).

In some deployment, a gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network, or the CU may be classified as an access network device in the core network (core network, CN). This is not limited in this application.

3. The UPF network element is for packet routing and forwarding, quality of service (quality of service, QoS) handling for user plane data, and the like.

4. The AMF network element, namely, the access and mobility management function network element, is mainly for mobility management, access management, and the like, and may be configured to implement a function in an MME function other than session management, for example, an access authorization/authentication function.

5. The SMF network element is mainly for session management, assignment and management of an internet protocol (internet protocol, IP) address of the user equipment, selection and control of a user plane function, termination of interfaces toward policy control and charging functions, downlink data notification, and the like.

6. The PCF network element is configured to: provide a unified policy framework for governing network behavior, provide policy rule information for a control plane function network element (for example, the AMF or the SMF), and so on.

7. The AF is configured to: perform application-affected data routing, wirelessly access a network exposure function network element, interact with a policy framework to perform policy control, and so on.

8. The UDM network element is configured to: process an identifier of the UE, and perform access authentication, registration, and mobility management, and so on.

9. The AUSF network element is configured to perform an authentication service, generate a key to implement bidirectional authentication on the user equipment, and support a unified authentication framework.

10. The UDR is configured to store subscription information of the UDM network element, policy information of the PCF network element, and the like.

11. The DN is a network outside an operator network. The operator network may access a plurality of DNs, and a plurality of services may be deployed in the DN, to provide the terminal device with a service like data and/or a voice. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server according to the instructions, and so on. For another example, the DN is an internal office network of a company, a mobile phone or a computer of an employee of the company may be the terminal device, and the mobile phone or the computer of the employee may access information, a data resource, and the like in the internal office network of the company.

Nausf, Nnef, Npcf, Nudm, Naf, Namf, Nsmf, N1, N2, N3, N4, and N6 in (a) in FIG. 1 are interface sequence numbers. For meanings of the interface sequence numbers, refer to meanings defined in the 3GPP standard protocol. This is not limited herein.

In the network architecture shown in (a) in FIG. 1, the network elements may communicate with each other through interfaces shown in the figure. For example, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmission of user plane data and the like. The SMF and the UPF may interact with each other through an N4 interface, and the N4 interface may be for transmission of information such as tunnel identification information of an N3 connection, data buffering indication information, and a downlink data notification message. The UPF and the DN may interact with each other through an N6 interface, and the N6 interface may be for transmission of user plane data and the like. Relationships between other interfaces and network elements are shown in (a) in FIG. 1. For brevity, details are not described one by one herein.

(b) in FIG. 1 is a diagram of a 5G network architecture that is based on a point-to-point interface. For descriptions of functions of network elements, refer to the descriptions of the functions of the corresponding network elements in (a) in FIG. 1. Details are not described again. A main difference between (b) in FIG. 1 and (a) in FIG. 1 lies in that interfaces between the network elements in (b) in FIG. 1 are point-to-point interfaces rather than service-oriented interfaces.

In the architecture shown in (b) in FIG. 1, names and functions of the interfaces between the network elements are as follows:
(1) N7 is an interface between a PCF and an SMF, and is configured to deliver a protocol data unit (protocol data unit, PDU) session granularity control policy and a service data flow granularity control policy.
(2) N15 is an interface between the PCF and an AMF, and is configured to deliver a UE policy and an access control related policy.
(3) N5 is an interface between an AF and the PCF, and is configured to: deliver an application service request, and report a network event.
(4) N4 is an interface between the SMF and a UPF, and is configured to transfer information between a control plane and a user plane, including delivering of a forwarding rule, a QoS control rule, a traffic statistics collection rule, or the like from the control plane to the user plane, and information reporting by the user plane.
(5) N11 is an interface between the SMF and the AMF, and is configured to: transfer PDU session tunnel information between a RAN and the UPF, transfer a control message sent to UE, transfer radio resource control information sent to the RAN, and so on.
(6) N2 is an interface between the AMF and the RAN, and is configured to transfer radio bearer control information from a core network side to the RAN, and the like.
(7) N1 is an interface between the AMF and the UE, is unrelated to access, and is configured to transfer a QoS control rule and the like to the UE.
(8) N8 is an interface between the AMF and a UDM, and is for the AMF to obtain subscription data and authentication data that are related to access and mobility management from the UDM, for the AMF to register current mobility management related information of the UE with the UDM, and so on.
(9) N10 is an interface between the SMF and the UDM, and is for the SMF to obtain subscription data related to session management from the UDM, for the SMF to register current session related information of the UE with the UDM, and so on.
(10) N35 is an interface between the UDM and a UDR, and is for the UDM to obtain user subscription data information from the UDR.
(11) N36 is an interface between the PCF and the UDR, and is for the PCF to obtain policy related subscription data and application data related information from the UDR.
(12) N12 is an interface between the AMF and an AUSF, and is for the AMF to initiate an authentication procedure to the AUSF, where an SUCI may be carried as a subscription identifier.
(13) N13 is an interface between the UDM and the AUSF, and is for the AUSF to obtain a user authentication vector from the UDM, to perform the authentication procedure.

For ease of understanding embodiments of this application, the following describes some terms in this application by using examples. It may be understood that the following terms are described by using a current NR system as an example. However, it should be understood that in another communication system (for example, a future sixth-generation communication system), the following terms may have other names. This is not limited in this application.

### 1. Key derivation

To ensure secure data transmission between a terminal and a network side, both the terminal and the network side need to perform same key derivation, to ensure that the terminal and the network side use a same key. The "network side" may include an access network device (for example, a gNB). "Derivation" may alternatively be replaced with "derivation" or another description. This is not limited.

Parameters related to the key derivation include a next hop (next hop, NH) and an NH chaining counter (next hop chaining count, NCC).

NH: Each time an access stratum (access stratum, AS) security context needs to be set up between the terminal and the access network device, a mobility management network element (for example, an AMF network element) and the terminal derive KgNB and the NH. The NH is obtained by the terminal and the AMF network element through chain derivation. That is, an NH generated this time is for generating an NH next time, so that the NH can be provided from the AMF network element to the gNB in a forward-secure manner.

NCC: The NCC is delivered by the AMF network element, is associated with each KgNB and NH, and is for counting a quantity of times of NH key chain derivation, synchronizing a key chain between the terminal and the access network device, and determining whether next KNG-RAN* is derived from current KgNB or a new NH. Each KgNB is associated with an NCC corresponding to an NH value. During initial access, KgNB is directly derived from KAMF. It may be considered that KgNB is associated with a virtual NH with NCC=0. During initial access, a derived NH is associated with NCC=1.

KNG-RAN* is an intermediate key during horizontal or vertical key derivation performed by the terminal and the access network device. After handover, KNG-RAN* is used as KgNB. KNG-RAN* may be derived from currently active KgNB, or may be derived from an NH. If KNG-RAN* is derived from currently active KgNB, this is referred to as the horizontal key derivation, and the access network device indicates the terminal not to increase an NCC. If KNG-RAN* is derived from the NH, this is referred to as the vertical key derivation, and the access network device indicates the terminal to increase an NCC. If a current access network device has unused {NH, NCC}, the vertical key derivation is used. If a current access network device has no unused {NH, NCC} pair, the horizontal key derivation is used. For example, during initial access, because the AMF network element does not send an NH to the access network device in this case, only the horizontal key derivation can be used in handover that occurs next time.

The following uses the network side as an example to specifically describe the key derivation. For the terminal side, refer to this for understanding. Details are not described again.

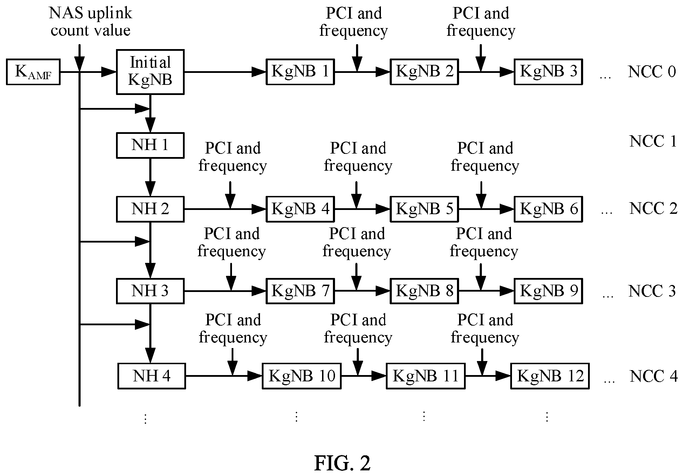

FIG. 2 is a schematic flowchart of performing key derivation by an access network device and a terminal.

### Horizontal derivation:

During initial access, a gNB may derive an initial key KgNB based on a key KAMF and a NAS uplink count value, and derive KgNB 1 based on the initial key KgNB. Subsequently, if horizontal derivation needs to be performed, the gNB may derive a key KgNB 2 based on KgNB 1, and a physical cell identifier (physical cell identifier, PCI) and a frequency (frequency), for example, a downlink frequency (DL frequency), of a cell on which the terminal currently camps. If horizontal derivation continues to be performed, the gNB may derive a key KgNB 3 based on the key KgNB 2, and a PCI and a frequency of a cell on which the terminal currently camps. By analogy, the key KgNB is iteratively updated, to ensure communication security.

### Vertical derivation:

An AMF network element may update an NCC (for example, when path migration or switching occurs in a handover process, the AMF network element may update the NCC). If an NCC 1 is updated to an NCC 2, the AMF network element derives an NH 2 based on a key KAMF and an NH 1. The NH 2 and the NCC 2 are associated with each other, and are used as a new {NH 2, NCC 2} pair. The AMF network element may send {NH 2, NCC 2} to a gNB. Then, after receiving {NH 2, NCC 2}, the gNB may perform vertical derivation when KNG-RAN* needs to be derived, that is, derives a key KgNB 4 based on the NH 2, and a PCI and a frequency of a cell on which the terminal currently camps. The rest can be deduced by analogy.

It can be learned from FIG. 2 that a quantity of times of vertical derivation may depend on a difference that is before and after a value of the NCC is updated. For example, if the value of the NCC is updated from an NCC 0 to the NCC 1, vertical derivation may be performed once based on an NH 0 related to the NCC 0, to obtain the NH 1 related to the NCC 1. If the value of the NCC is updated from an NCC 0 to the NCC 2, vertical derivation may be performed twice based on an NH 0 related to the NCC 0, to obtain the NH 2 related to the NCC 2. If the value of the NCC is updated from the NCC 2 to an NCC 3, vertical derivation may be performed once based on the NH 2 related to the NCC 2, to obtain an NH 3 related to the NCC 3.

### 2. Handover (handover)

The handover is a process for the terminal in an RRC connected state, is initiated by the network side, and relates to signaling exchange between the terminal and the access network device. For example, when sensing that signal strength of the terminal in a cell of an access network device gradually weakens, the access network device may hand over the terminal to a cell of an access network device (for example, a neighboring access network device) with better signal strength. It may be understood that the handover may be handover of the terminal between cells of different access network devices (namely, inter-station handover), for example, handover of the terminal device from a cell of an access network device 1 to a cell of an access network device 2; or may be handover of the terminal between cells of a same access network device, for example, handover of the terminal device from a cell 1 of the access network device 1 to a cell 2 of the access network device 1. In embodiments of this application, an inter-station handover scenario is used as an example for description.

A handover procedure triggered by layer 3 signaling may be referred to as layer 3 handover (L3 handover) or normal handover. A layer 3 may be an RRC layer, a layer 1 in the following descriptions may be a physical layer, and a layer 2 in the following descriptions may be a MAC layer.

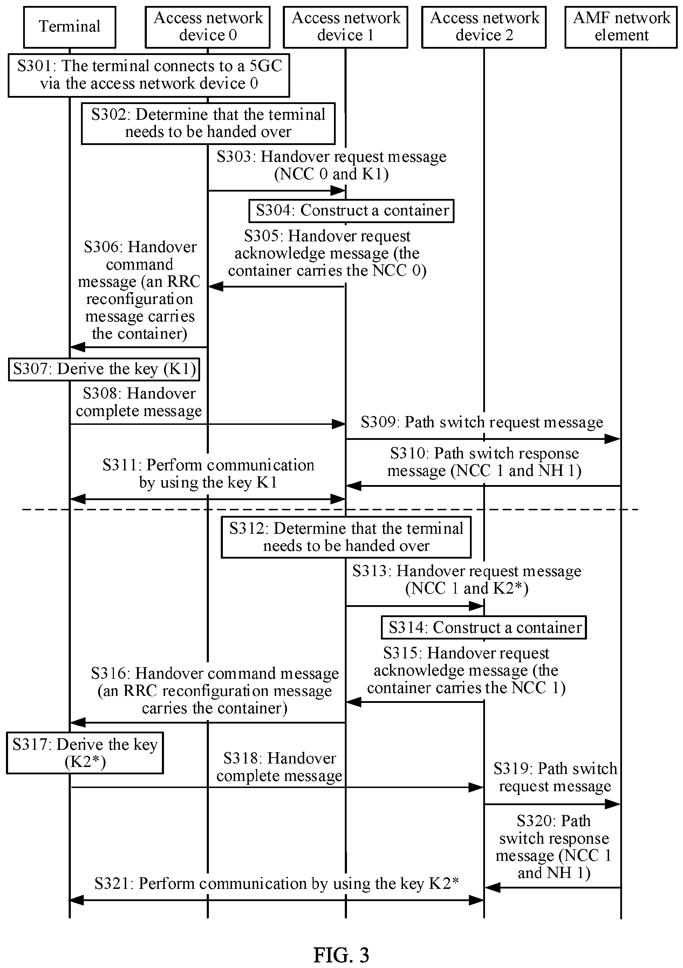

FIG. 3 is a diagram of a possible procedure of inter-station normal handover. The inter-station handover shown in FIG. 3 includes that a terminal is handed over from an access network device 0 to an access network device 1, and then is handed over from the access network device 1 to an access network device 2. As shown in FIG. 3, the procedure includes the following steps.

S301: The terminal connects to a 5GC via the access network device 0.

The terminal may access the access network device 0 by using a procedure like an initial access procedure, a normal handover procedure, a reestablishment procedure, or a cell reselection procedure, and access the 5GC via the access network device 0. Then, the terminal and the access network device 0 separately store a key KgNB (referred to as K0 for ease of description) and an NCC 0 (K0 is associated with the NCC 0), and an AMF network element stores the NCC 0.

It should be noted that, in embodiments of this application, numbers carried after NCCs are merely for distinguishing between different NCCs, and do not represent specific NCC values. For example, the NCC 0 is for representing an NCC value used on the access network device 0, and the NCC value is not limited to 0. Symbols K0, K1, K2, K1*, K2*, and the like used in embodiments of this application all refer to keys for performing security protection between the terminal and an access network device, for example, KgNB and KgNB 1 to KgNB 12 in FIG. 2. Which KgNB does K0, K1, K2, K1*, or K2* specifically refer to may be related to a scenario. This is not limited in embodiments of this application.

S302: The access network device 0 determines that the terminal needs to be handed over.

As the terminal moves, for example, the terminal gradually moves away from the access network device 0, the access network device 0 may sense that signal strength of the terminal gradually weakens. When the signal strength of the terminal weakens to a specific extent, the access network device 0 determines that the terminal needs to be handed over to an access network device with better signal strength, thereby selecting an access network device, for example, the access network device 1, with better signal strength, from candidate access network devices.

In a possible implementation, the terminal may measure at least one candidate cell, and send a measurement report to the access network device 0. The measurement report includes signal strength of the at least one candidate cell, and the at least one candidate cell belongs to at least one candidate access network device. Accordingly, the access network device 0 may select a cell (namely, a target cell) with better signal strength from the at least one candidate cell based on the measurement report. For example, an access network device (namely, the target access network device) to which the target cell belongs is the access network device 1.

S303: The access network device 0 sends a handover request (handover request) message to the access network device 1. Accordingly, the access network device 1 receives the handover request message from the access network device 0.

For example, the access network device 0 may obtain a key K1 through horizontal derivation based on K0, and a PCI and a frequency of a cell of the access network device 1. The handover request message may include the NCC 0 and K1, and the handover request message is for requesting to hand over the terminal to the access network device 1. After receiving the handover request information, the access network device 1 may store the NCC 0 and K1.

It may be understood that an example in which the access network device 0 obtains the key K1 through horizontal derivation (that is, the NCC value on the access network device 0 does not change) is used herein. In another example, if the access network device 0 determines that a current NCC value is greater than a previous NCC value, the access network device 0 may alternatively obtain a key K1* through vertical derivation based on an NH 0, and a PCI and a frequency of a cell of the access network device 1, and store the NCC 0 and K1*.

S304: The access network device 1 constructs a transparent container.

If the access network device 1 allows handover of the terminal, the access network device 1 may construct the transparent container, where the container carries the received NCC 0.

The transparent container further carries configuration information, and the configuration information includes a parameter for the terminal to be handed over to the access network device 1.

In embodiments of this application, for ease of description, a transparent container is referred to as a container for short.

S305: The access network device 1 sends a handover request acknowledge (handover request ACK) message to the access network device 0, where the message carries the container. Accordingly, the access network device 0 receives the handover request acknowledge message from the access network device 1.

The handover request acknowledge message indicates that the access network device 1 allows handover of the terminal. For example, a current resource of the access network device 1 is sufficient, and more terminals are allowed to be handed over to the access network device 1. The handover request acknowledge message may include the container constructed by the access network device 1.

Alternatively, in another example, the handover request acknowledge message may indicate that the access network device 1 does not allow handover of the terminal. For example, a current resource of the access network device 1 is insufficient, and no more terminals are allowed to be handed over to the access network device 1. In this procedure, an example in which the access network device 1 allows handover of the terminal is used for illustration.

S306: The access network device 0 sends a handover command message to the terminal. Accordingly, the terminal receives the handover command message.

The handover command message may be an RRC reconfiguration (RRC reconfiguration) message, and the RRC reconfiguration message carries the container.

S307: The terminal derives the key.

The terminal may obtain the NCC 0 from the container. If the NCC 0 obtained from the container is the same as an NCC value locally stored in the terminal, the terminal may perform horizontal derivation, that is, derive the key K1 based on K0, and the PCI and the frequency of the cell of the access network device 1. In this way, the terminal and the access network device 1 maintain the same key, namely, K1.

In another example, if the NCC 0 obtained from the container is different from an NCC value locally stored in the terminal, the terminal may first calculate the NH 0 corresponding to the NCC 0, and then obtain the key K1* through vertical derivation based on the NH 0, and the PCI and the frequency of the cell of the access network device 1. In this way, the terminal and the access network device 1 maintain the same key, namely, K1*.

It may be understood that, through the foregoing operations, the access network device 1 cannot learn of the key (namely, K0) shared by the terminal and the access network device 0, so that previous-communication security can be protected from being affected by the access network device 1.

S308: The terminal is detached from the access network device 0, and sends a handover complete message to the access network device 1. Accordingly, the access network device 1 receives the handover complete message from the terminal.

The handover complete message may be an RRC reconfiguration complete (RRC reconfiguration complete) message.

S309: The access network device 1 sends a path switch request message to the AMF network element. Accordingly, the AMF network element receives the path switch request message.

S310: The AMF network element sends a path switch response message to the access network device 1. Accordingly, the access network device 1 receives the path switch response message, to complete path switching.

The path switching means that a data transmission path of the terminal is switched from "UPF network element-access network device 0-terminal" to "UPF network element-access network device 1-terminal". In other words, before path switching, downlink data is sent by the UPF network element to the access network device 0, and then sent by the access network device 0 to the terminal; uplink data is sent by the terminal to the access network device 0, and then sent by the access network device 0 to the UPF network element. After path switching, the downlink data is sent by the UPF network element to the access network device 1, and then sent by the access network device 1 to the terminal; and the uplink data is sent by the terminal to the access network device 1, and then sent by the access network device 1 to the UPF network element.

After receiving the path switch request message, the AMF network element may update the locally stored NCC value by increasing the NCC value by 1, to obtain an updated NCC (referred to as an NCC 1), thereby performing key derivation based on the updated NCC, to obtain an updated NH (referred to as an NH 1). The NCC 1 and the NH 1 are associated with each other, and are used as an updated {NH 1, NCC 1} pair.

The path switch response message includes {NH 1, NCC 1}. After receiving the path switch response message, the access network device 1 may store {NH 1, NCC 1}.

S311: The terminal communicates with the access network device 1 by using the key K1.

Herein, that "the terminal communicates with the access network device 1 by using the key K1" may mean that the terminal communicates with the access network device 1 by using the key K1 itself, or may mean that the terminal communicates with the access network device 1 by using a confidentiality protection key and an integrity protection key that are derived based on the key K1. For all other similar descriptions in the following descriptions of this application, refer to this for processing.

S312: The access network device 1 determines that the terminal needs to be handed over.

For a specific implementation in which the access network device 1 determines that the terminal needs to be handed over, refer to the foregoing descriptions in which the access network device 0 determines that the terminal needs to be handed over. The access network device 1 may select an access network device, for example, the access network device 2, with better signal strength, from candidate access network devices.

S313: The access network device 1 sends a handover request message to the access network device 2. Accordingly, the access network device 2 receives the handover request message from the access network device 1.

The access network device 1 may derive a key K2* based on the NH 1, and a PCI and a frequency of a cell of the access network device 2, and send the handover request message to the access network device 2. The handover request message is for requesting to hand over the terminal to the access network device 2, and the handover request message may include the NCC 1 and K2*. After receiving the handover request message, the access network device 1 may store the NCC 1 and K2*.

S314: The access network device 2 constructs a container.

If the access network device 2 allows handover of the terminal, the access network device 2 may construct the container, where the container carries the received NCC 1.

The container further carries configuration information, and the configuration information includes a parameter for the terminal to be handed over to the access network device 2.

S315: The access network device 2 sends a handover request acknowledge message to the access network device 1. Accordingly, the access network device 1 receives the handover request acknowledge message from the access network device 2.

The handover request acknowledge message indicates that the access network device 2 allows handover of the terminal. The handover request acknowledge message may include the container constructed by the access network device 2.

Alternatively, in another example, the handover request acknowledge message may indicate that the access network device 1 does not allow handover of the terminal. In this procedure, an example in which the access network device 1 allows handover of the terminal is used for illustration.

S316: The access network device 1 sends a handover command message to the terminal. Accordingly, the terminal receives the handover command message.

The handover command message may be an RRC reconfiguration message, and the RRC reconfiguration message carries the foregoing container.

S317: The terminal derives the key.

The terminal may obtain the NCC 1 from the foregoing container. Because the NCC 1 obtained from the container is different from the NCC 0 locally stored in the terminal, the terminal performs vertical derivation a corresponding quantity of times based on a difference between the NCC 1 and the NCC 0, to obtain the corresponding NH (namely, the NH 1), and then derives the key K2* based on the NH 1, and the PCI and the frequency of the cell of the access network device 2. In this way, the terminal and the access network device 2 maintain the same key, namely, K2*.

It may be understood that, through the foregoing operations, the access network device 2 cannot learn of the key (namely, K1) shared by the terminal and the access network device 1, so that previous-communication security can be protected from being affected by the access network device 2.

S318: The terminal is detached from the access network device 1, and sends a handover complete message to the access network device 2. Accordingly, the access network device 2 receives the handover complete message from the terminal.

The handover complete message may be an RRC reconfiguration complete message.

S319: The access network device 2 sends a path switch request message to the AMF network element. Accordingly, the AMF network element receives the path switch request message.

S320: The AMF network element sends a path switch response message to the access network device 2. Accordingly, the access network device 2 receives the path switch response message, to complete path switching.

The path switching means that a data transmission path of the terminal is switched from "UPF network element-access network device 1-terminal" to "UPF network element-access network device 2-terminal".

After receiving the path switch request message, the AMF network element may update the locally stored NCC value by increasing the NCC value by 1, to obtain an updated NCC (referred to as an NCC 2), thereby performing derivation based on the updated NCC, to obtain an updated NH (referred to as an NH 2). The NCC 2 and the NH 2 are associated with each other, and are used as an updated {NH 2, NCC 2} pair.

The path switch response message includes {NH 2, NCC 2}. After receiving the path switch response message, the access network device 2 may store {NH 2, NCC 2}.

S321: The terminal communicates with the access network device 2 by using the key K2*.

It may be understood that the terminal may be further handed over from the access network device 2 to another access network device (for example, an access network device 3) subsequently. For a specific implementation, refer to the descriptions in which the terminal is handed over from the access network device 1 to the access network device 2.

Through the procedure shown in FIG. 3, the access network device 0 learns of the key (namely, K1) shared by the terminal and the access network device 1, but can learn of neither the key (namely, K2*) shared by the terminal and the access network device 2 nor a key shared by the terminal and a subsequent target access network device, so that two-hop security can be implemented.

To reduce a handover delay, LTM switching, also referred to as layer 1/layer 2 switching, is introduced. Different from the layer 3 handover, the LTM switching may be triggered by layer 1/layer 2 signaling. Because the layer 1 and the layer 2 are located in a lower-layer protocol stack than the RRC layer (the layer 3), reducing of the handover delay is facilitated.

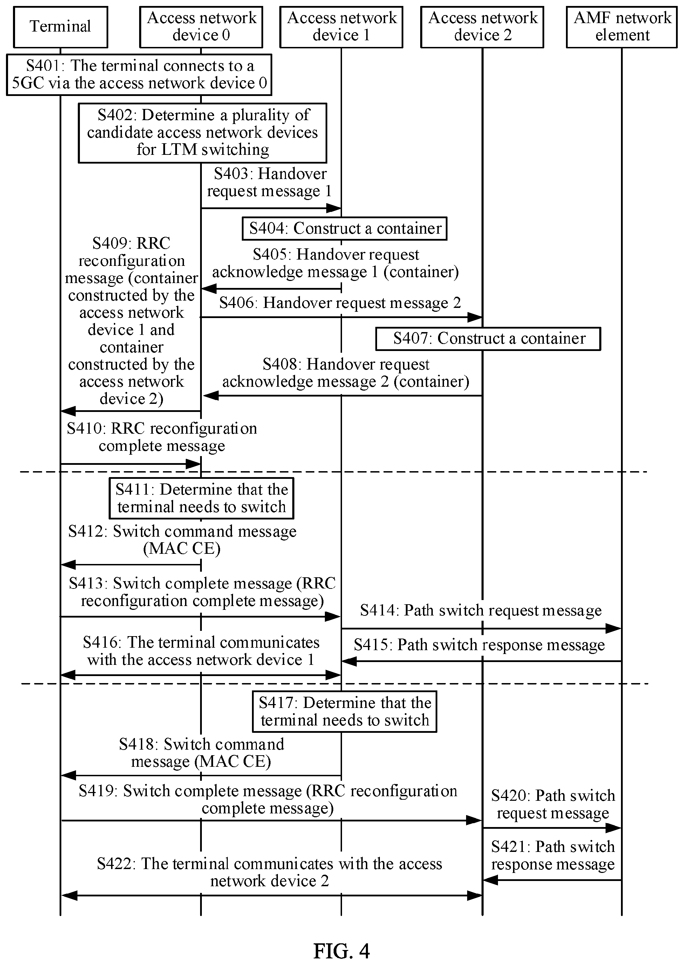

FIG. 4 is a diagram of a possible procedure of inter-station LTM switching. Currently, no specific solution is available for security protection of the inter-station LTM switching. Therefore, the procedure herein does not relate to security-related content. As shown in FIG. 4, the procedure includes the following steps.

S401: A terminal connects to a 5GC via an access network device 0.

The terminal may access the access network device 0 by using a procedure like an initial access procedure, a normal handover procedure, a reestablishment procedure, or a cell reselection procedure, and access the 5GC via the access network device 0.

S402: The access network device 0 determines a plurality of candidate access network devices for LTM switching.

In a possible implementation, the terminal may measure a plurality of candidate cells, and send a measurement report to the access network device 0. The measurement report includes signal strength of the plurality of candidate cells, and the plurality of candidate cells belong to a plurality of candidate access network devices. Accordingly, the access network device 0 may select cells with better signal strength from the plurality of candidate cells based on the measurement report. Access network devices to which the plurality of selected cells belong are the candidate access network devices for LTM switching.

In another possible implementation, the access network device 0 may obtain historical movement trajectory information of the terminal, determine, based on the historical movement trajectory information, a list of cells from and to which the terminal frequently switches, and then determine, based on the list of cells from and to which the terminal frequently switches, the plurality of candidate access network devices for LTM switching.

In this procedure, an example in which the candidate access network devices for LTM switching include an access network device 1 and an access network device 2 is used for description.

S403: The access network device 0 sends a handover request message 1 to the access network device 1. Accordingly, the access network device 1 receives the handover request message 1 from the access network device 0.

Optionally, the handover request message 1 (and the following handover request message 2) may include identifiers of the plurality of candidate access network devices for LTM switching.

S404: The access network device 1 constructs a container.

If the access network device 1 allows the terminal to perform LTM switching, the access network device 1 may construct the container. The container carries an identifier of the access network device 1 and configuration information, and the configuration information includes a parameter for the terminal to switch to the access network device 1, for example, an SSB frequency and beam information of the access network device 1.

S405: The access network device 1 sends a handover request acknowledge message 1 to the access network device 0. Accordingly, the access network device 0 receives the handover request acknowledge message 1 from the access network device 1.

S406: The access network device 0 sends the handover request message 2 to the access network device 2. Accordingly, the access network device 2 receives the handover request message 2 from the access network device 0.

S407: The access network device 2 constructs a container.

If the access network device 2 allows the terminal to perform LTM switching, the access network device 2 may construct the container. The container carries an identifier of the access network device 2 and configuration information, and the configuration information includes a parameter for the terminal to switching to the access network device 2, for example, an SSB frequency and beam information of the access network device 2.

S408: The access network device 2 sends a handover request acknowledge message 2 to the access network device 0. Accordingly, the access network device 0 receives the handover request acknowledge message 2 from the access network device 1.

S409: The access network device 0 sends an RRC reconfiguration message to the terminal, where the RRC reconfiguration message carries the container constructed by the access network device 1 and the container constructed by the access network device 2. Accordingly, the terminal receives the RRC reconfiguration message.

The terminal obtains, from the RRC reconfiguration message, the container constructed by the access network device 1 and the container constructed by the access network device 2, and stores the containers.

S410: The terminal sends an RRC reconfiguration complete message to the access network device 0. Accordingly, the access network device 0 receives the RRC reconfiguration complete message from the terminal.

S411: The access network device 0 determines that the terminal needs to switch, and a target access network device to which the terminal switches is the access network device 1.

There are a plurality of specific implementations in which the access network device 0 determines the target access network device. This is not limited in this embodiment of this application. For example, the access network device 0 may determine, based on the measurement report reported by the terminal, that the target access network device is the access network device 1.

S412: The access network device 0 sends a switch command message to the terminal. Accordingly, the terminal receives the switch command message from the access network device 0.

The switch command message is a MAC layer message, for example, a MAC control element (control element, CE). The switch command message includes an identifier of the target access network device, namely, the identifier of the access network device 1.

S413: The terminal is detached from the access network device 0, and sends a switch complete message to the access network device 1. Accordingly, the access network device 1 receives the switch complete message from the terminal.

The switch complete message may be an RRC reconfiguration complete message.

Optionally, if the handover request message 1 does not include the identifiers of the plurality of candidate access network devices for LTM switching, after determining that the terminal needs to switch to the access network device 1, the access network device 0 may send the identifiers of the plurality of candidate access network devices for LTM switching to the access network device 1 via an Xn message.

S414: The access network device 1 sends a path switch request message to an AMF network element. Accordingly, the AMF network element receives the path switch request message.

S415: The AMF network element sends a path switch response message to the access network device 1. Accordingly, the access network device 1 receives the path switch response message, to complete path switching.

Herein, the path switching means that a data transmission path of the terminal is switched from "UPF network element-access network device 0-terminal" to "UPF network element-access network device 1-terminal".

S416: The terminal communicates (for example, performs data transmission) with the access network device 1.

S417: The access network device 1 determines that the terminal needs to switch, and a target access network device to which the terminal switches is the access network device 2.

S418: The access network device 1 sends a switch command message to the terminal. Accordingly, the terminal receives the switch command message from the access network device 1.

The switch command message is a MAC layer message, for example, a MAC CE. The switch command message includes an identifier of the target access network device, namely, the identifier of the access network device 2.

It may be understood that the access network device 1 may determine whether the target access network device (namely, the access network device 2) belongs to the candidate access network devices for LTM switching. If the target access network device belongs to the candidate access network devices for LTM switching, the access network device 1 may send the MAC CE to the terminal, to perform inter-station LTM switching. Optionally, if the target access network device does not belong to the candidate access network devices for LTM switching, the access network device 1 may send an RRC reconfiguration message to the terminal, to perform inter-station normal handover.

S419: The terminal is detached from the access network device 1, and sends a switch complete message to the access network device 2. Accordingly, the access network device 2 receives the switch complete message from the terminal.

The switch complete message may be an RRC reconfiguration complete message.

Optionally, if the handover request message 2 does not include the identifiers of the plurality of candidate access network devices for LTM switching, after determining that the terminal needs to switch to the access network device 2, the access network device 1 may send the identifiers of the plurality of candidate access network devices for LTM switching to the access network device 2 via an Xn message.

S420: The access network device 2 sends a path switch request message to the AMF network element. Accordingly, the AMF network element receives the path switch request message.

S421: The AMF network element sends a path switch response message to the access network device 2. Accordingly, the access network device 2 receives the path switch response message, to complete path switching.

Herein, the path switching means that a data transmission path of the terminal is switched from "UPF network element-access network device 1-terminal" to "UPF network element-access network device 2-terminal".

S422: The terminal communicates (for example, performs data transmission) with the access network device 2.

It may be understood that, if the candidate access network devices for LTM switching further include an access network device 3, the terminal may further switch from the access network device 2 to the access network device 3 subsequently. For a specific implementation, refer to the descriptions in which the terminal switches from the access network device 1 to the access network device 2.

It can be learned from the inter-station normal handover procedure and the inter-station LTM switching procedure that: In the inter-station normal handover, a source access network device may select a target access network device, and indicate, by using an RRC reconfiguration message, the terminal to be handed over to the target access network device. After the terminal is handed over to the target access network device, handover that occurs this time ends. In handover that occurs next time, the terminal receives a new RRC reconfiguration message. That is, an RRC reconfiguration process is triggered each time handover occurs. In the inter-station LTM switching, a source access network device determines the plurality of candidate access network devices for LTM switching, and sends containers constructed by the plurality of candidate access network devices to the terminal. Subsequently, the source access network device may indicate, by using a MAC CE, the terminal to switch to a target access network device. That is, no RRC reconfiguration process is triggered each time switching occurs.

In embodiments of this application, related implementations of secure communication between a terminal and an access network device in an inter-station LTM switching scenario is studied.

For example, a communication method provided in embodiments of this application includes three possible solutions (a solution 1, a solution 2, and a solution 3), to implement secure communication between the terminal and the access network device in the inter-station LTM switching scenario.

In the solution 1, a first access network device receives a container constructed by each of a plurality of candidate access network devices, and sends the container constructed by each of the plurality of candidate access network devices to a terminal (the container carries a handover parameter). Subsequently, after determining that the terminal needs to switch to a second access network device in the plurality of candidate access network devices, the first access network device sends, to the terminal via a MAC layer message, information for triggering the terminal to switch to the second access network device and information indicating a first NCC. Then, the terminal may switch to the second access network device based on a parameter in a container that is constructed by the second access network device and that is received in advance, and determine, based on the first NCC, a key for communication with the second access network device. In this way, secure communication between the terminal and the second access network device can be implemented.

In the solution 2, a first access network device sends a first NCC to a plurality of candidate access network devices, and receives a container constructed by each of the plurality of candidate access network devices, where the container constructed by the access network device may include the first NCC. Subsequently, after determining that a terminal needs to switch to a second access network device in the plurality of candidate access network devices, the first access network device triggers, by using a MAC layer message, the terminal to switch to the second access network device. Then, the terminal may switch to the second access network device based on a parameter in a container that is constructed by the second access network device and that is received in advance, and determine, based on the first NCC in the container that is constructed by the second access network device and that is received in advance, a key for communication with the second access network device. In this way, secure communication between the terminal and the second access network device can be implemented.

In the solution 3, a first access network device sends handover request messages to a plurality of candidate access network devices respectively. After receiving a handover request message, each of the plurality of candidate access network devices obtains, from a mobility management network element, an NCC corresponding to the access network device, and sends, to the first access network device, a container constructed by the access network device, where the container constructed by the access network device includes the NCC corresponding to the access network device, and different access network devices in the plurality of candidate access network devices correspond to different NCCs. Subsequently, after determining that a terminal needs to switch to a second access network device in the plurality of candidate access network devices, the first access network device triggers, by using a MAC layer message, the terminal to switch to the second access network device. Then, the terminal may switch to the second access network device based on a parameter in a container that is constructed by the second access network device and that is received in advance, and determine, based on an NCC in the container that is constructed by the second access network device and that is received in advance, a key for communication with the second access network device. In this way, secure communication between the terminal and the second access network device can be implemented.

It may be understood that the foregoing descriptions of the solution 1 to the solution 3 are merely intended to make embodiments of this application easier to understand, and should not be considered as a strict limitation on the technical features in the protection scope claimed in this application. That is, not all the technical features in the foregoing descriptions are necessary technical features.

The following describes in detail embodiments of this application with reference to Embodiment 1 to Embodiment 7.

### Embodiment 1

In Embodiment 1, the solution 1 is described in detail.

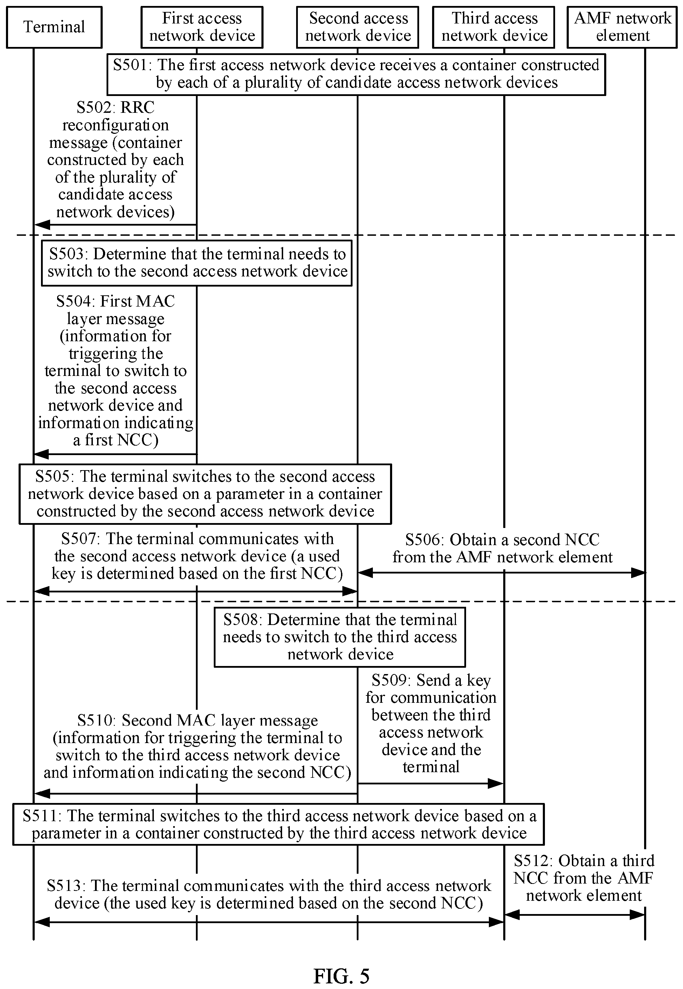

FIG. 5 is a diagram of a procedure corresponding to a communication method according to an embodiment of this application. As shown in FIG. 5, the procedure may include the following steps.

S501: A first access network device receives a container from each of a plurality of candidate access network devices, where the container of the access network device includes a parameter for a terminal to switch to the access network device.

Herein, the container of the access network device may be specifically the container constructed by the access network device.

The first access network device may be an access network device accessed by the terminal by using a procedure like an initial access procedure, a normal handover procedure, a reestablishment procedure, or a cell reselection procedure. The first access network device and the terminal may store a same key (the key is for communication between the first access network device and the terminal) and a same NCC (for example, a first NCC).

For example, if the first access network device is an access network device accessed by the terminal by using the initial access procedure or the cell reselection procedure, an AMF network element may send the first NCC to the first access network device via an NGAP message, and then the first access network device may store the first NCC. Specifically, in the initial access procedure, the NGAP message is an initial context setup request (initial context setup request) message. If the first access network device is an access network device accessed by the terminal by using the reestablishment procedure, the first access network device may alternatively receive the first NCC via a retrieve UE context response (retrieve UE context response) message, and store the first NCC. If the first access network device is an access network device accessed by the terminal by using a normal handover procedure, the first access network device may receive the first NCC via a path switch response message, and store the first NCC. Optionally, the first access network device may perform RRC reconfiguration on the terminal by using an RRC reconfiguration message, so that the terminal and the first access network device store the same NCC (namely, the first NCC). If the first access network device does not perform RRC reconfiguration on the terminal, the terminal and the first access network device may store different NCCs. In this embodiment of this application, an example in which "the terminal and the first access network device store the same NCC" is used for description.

For example, the first access network device may determine the plurality of candidate access network devices for LTM switching, and send handover request messages to the plurality of candidate access network devices respectively, to request the plurality of candidate access network devices to construct containers. The container constructed by each of the plurality of candidate access network devices includes the parameter for the terminal to switch to the access network device. For example, a container constructed by a second access network device in the plurality of candidate access network devices includes a parameter (for example, SSB frequency information and beam information) for the terminal to switch to the second access network device, and a container constructed by a third access network device in the plurality of candidate access network devices includes a parameter (for example, SSB frequency information and beam information) for the terminal to switch to the third access network device. For details, refer to the descriptions in S402 to S408.

S502: The first access network device sends the RRC reconfiguration message to the terminal, where the RRC reconfiguration message includes the container constructed by each of the plurality of candidate access network devices. Accordingly, the terminal receives the RRC reconfiguration message.

After receiving the RRC reconfiguration message, the terminal may parse the RRC reconfiguration message, to obtain the container constructed by each of the plurality of candidate access network devices. Optionally, the terminal may send an RRC reconfiguration complete message to the first access network device.

S501 and S502 may be understood as a switching preparation process.

S503: The first access network device determines that the terminal needs to switch to the second access network device in the plurality of candidate access network devices.

There may be a plurality of implementations in which the first access network device determines that the terminal needs to switch to the second access network device. For example, the terminal may measure at least one candidate cell, and send a measurement report to the first access network device. The measurement report includes signal strength of the at least one candidate cell. Accordingly, the first access network device may select a cell (namely, a target cell) with better signal strength from the at least one candidate cell based on the measurement report. For example, an access network device (namely, a target access network device) to which the target cell belongs is the second access network device. That is, the first access network device determines that the terminal needs to switch to the second access network device.

It may be understood that an example in which the target access network device selected by the first access network device is the second access network device in the plurality of candidate access network devices is used for description herein. In another example, a target access network device selected by the first access network device may alternatively not belong to the plurality of candidate access network devices. If the target access network device selected by the first access network device does not belong to the plurality of candidate access network devices, the first access network device may trigger the terminal to perform inter-station normal handover.

S504: The first access network device sends a first MAC layer message (namely, a switch command message) to the terminal, where the first MAC layer message includes information for triggering the terminal to switch to the second access network device and information indicating the first NCC. Accordingly, the terminal receives the first MAC layer message.

For example, the information for triggering the terminal to switch to the second access network device may include an identifier of the second access network device. The information indicating the first NCC may include at least one of the following: the first NCC, an index value of the first NCC, and a ciphertext obtained through encryption of the first NCC. The first NCC may be an NCC stored in the first access network device (for example, an RRC layer of the first access network device).

Herein, an example in which the information for triggering the terminal to switch to the second access network device and the information indicating the first NCC are carried in the same MAC layer message (namely, the first MAC layer message) message is used for description. In another example, the information for triggering the terminal to switch to the second access network device and the information indicating the first NCC may alternatively bec arried in different MAC layer messages.

For example, from a perspective of the first access network device, after determining that the terminal needs to switch to the second access network device, the first access network device may generate the first MAC layer message, and send the first MAC layer message. In comparison with the normal handover procedure (in the normal handover procedure, when determining that a terminal needs to be handed over, a source access network device needs to first obtain a container (the container carries an NCC and a handover parameter) constructed by a target access network device from the target access network device, and then send the container to the terminal), because when determining that the terminal needs to switch, the first access network device may generate the first MAC layer message including the information indicating the first NCC, and send the first MAC layer message to the terminal, a handover delay can be reduced.

The RRC layer of the first access network device may transfer, to a MAC layer of the first access network device, the information indicating the first NCC, so that the first MAC layer message generated by the MAC layer of the first access network device includes the information indicating the first NCC. For example, the RRC layer of the first access network device transfers the first NCC to the MAC layer of the first access network device, and the MAC layer of the first access network device encapsulates the first NCC into the first MAC layer message. For another example, the RRC layer of the first access network device obtains the index value of the first NCC (or the ciphertext obtained through encryption of the first NCC, where the index value of the first NCC is used as an example herein) based on the stored first NCC, and transfers the index value of the first NCC to the MAC layer of the first access network device. Then, the MAC layer of the first access network device encapsulates the index value of the first NCC into the first MAC layer message, and sends the first MAC layer message to the terminal.

For example, from a perspective of the terminal, after receiving the first MAC layer message, the terminal may determine, based on the first NCC carried in the first MAC layer message, a key (referred to as a key 1) for communication between the terminal and the second access network device. The key 1 herein may be a key KgNB (for example, KgNB in the derivation procedure shown in FIG. 2) for performing security protection between the terminal and the second access network device, or may be a confidentiality protection key and/or an integrity protection key derived based on the key KgNB. For details, refer to the foregoing descriptions in which "the terminal communicates with the access network device 1 by using the key K1" in S311. In this embodiment of this application, an example in which "the key 1 is the key KgNB for performing security protection between the terminal and the second access network device" is mainly used for description. For all other similar parts (for example, the following key 2), refer to this for understanding.

For example, a MAC layer of the terminal obtains, from the first MAC layer message, the information indicating the first NCC. The MAC layer of the terminal transfers, to an RRC layer of the terminal, the information indicating the first NCC, so that the RRC layer of the terminal can determine the key 1 based on the first NCC.

There are a plurality of specific implementations in which the terminal determines the key 1 based on the first NCC. For example, the terminal may compare the first NCC with an NCC locally stored in the terminal. Because the two NCCs are the same, the terminal may obtain, through horizontal derivation based on a first input parameter, the key for communication between the terminal and the second access network device. The first input parameter includes a PCI and a frequency of a cell of the second access network device, and further includes a key KgNB for performing security protection between the terminal and the first access network device.

S505: The terminal switches to the second access network device based on the parameter in the container constructed by the second access network device.

For example, the terminal may initiate a random access procedure to the second access network device based on the parameter in the container constructed by the second access network device, to synchronize with the second access network device by using the random access procedure. After completing synchronization, the terminal may send a switch complete message to the second access network device. The switch complete message may be an RRC reconfiguration complete message. It may be understood that, when the parameter in the container constructed by the second access network device includes all information needed for access, the terminal may not read a system message. For example, when the container includes the beam information, the terminal selects a corresponding beam, and sets up a connection to the second access network device.

For example, the terminal may send the switch complete message to the second access network device based on the key 1.

S506: The second access network device obtains a second NCC from the AMF network element.

Optionally, the second access network device further receives, from the AMF network element, an NH corresponding to the second NCC. The second access network device may store the second NCC and the NH corresponding to the second NCC.

For example, the second access network device may send a path switch request message to the AMF network element. Accordingly, after receiving the path switch request message, the AMF network element may update a locally stored NCC value (namely, the first NCC) by increasing the NCC value by 1, to obtain an updated NCC (namely, the second NCC), thereby performing key derivation based on the updated NCC, to obtain the NH corresponding to the second NCC; and send a path switch response message to the second access network device, where the path switch response message includes the second NCC and the NH corresponding to the second NCC. For example, the second access network device may send the path switch request message to the AMF network element in response to the switch complete message sent by the terminal.

S507: The terminal communicates with the second access network device by using the key 1.

In other words, the key 1 may be for communication between the terminal and the second access network device in a switching process (for example, the terminal may send the switch complete message to the second access network device by using the key 1), or may be for communication between the terminal and the second access network device after switching is completed (for example, communication in S507).

The foregoing has described the implementation in which the terminal determines the key. From a perspective of the second access network device, the second access network device may maintain a key (also referred to as the key 1 for ease of description) that is the same as the key 1, to communicate with the terminal by using the key 1. An implementation in which the second access network device obtains the key 1 is described herein. In a possible implementation, in the switching preparation process, after determining the plurality of candidate access network devices, the first access network device may determine a key of each of the plurality of candidate access network devices, and send the key to the corresponding access network device via a handover request message. The second access network device in the plurality of candidate access network devices is used as an example. The first access network device may obtain the key 1 through horizontal derivation based on the first input parameter, and send the key 1 to the second access network device via a handover request message. Optionally, when requesting the second access network device to construct the container, the first access network device may send the first NCC to the second access network device (that is, the handover request message may include the first NCC), so that the container constructed by the second access network device can include the first NCC, the first MAC layer message does not need to carry the information indicating the first NCC, and the terminal can obtain the first NCC from the container constructed by the second access network device.

In another possible implementation, after determining that the terminal needs to switch to the second access network device, the first access network device may obtain the key 1 through horizontal derivation based on the first input parameter, and send the key 1 to the second access network device via an Xn message (that is, the Xn message includes the key 1). Optionally, the Xn message further includes the first NCC.

S506 may be performed before S507, S506 may be performed after S507, or S506 and S507 are simultaneously performed. An execution sequence of the steps is not limited in this embodiment of this application.

Optionally, after the terminal switches from the first access network device to the second access network device, the method further includes the following steps.

S508: The second access network device determines that the terminal needs to switch to the third access network device in at least one candidate access network device.

Herein, for an implementation in which the second access network device determines that the terminal needs to switch to the third access network device, refer to the foregoing descriptions in which "the first access network device determines that the terminal needs to switch to the second access network device".

In a possible implementation, the at least one candidate access network device is the plurality of candidate access network devices. After determining the plurality of candidate access network devices, the first access network device may send a first candidate access network device list to each of the plurality of candidate access network devices via the handover request message, where the first candidate access network device list includes identifiers of the plurality of candidate access network devices; or after determining that the terminal needs to switch to the second access network device, the first access network device may send a first candidate access network device list to the second access network device via the Xn message.

In another possible implementation, the at least one candidate access network device includes a part or all of the plurality of candidate access network devices. After determining that the terminal needs to switch to the second access network device, the first access network device may select the part or all of the access network devices (that is, select the at least one candidate access network device) from the plurality of candidate access network devices based on a plurality of possible factors (for example, load on a candidate access network device), and send a first candidate access network device list to the second access network device via the Xn message, where the first candidate access network device list includes an identifier of the at least one selected candidate access network device.

Optionally, for this implementation, the first access network device may further send identifiers of the plurality of candidate access network devices to the second access network device, for example, via the handover request message or the Xn message. This is not specifically limited.

S509: The second access network device sends, to the third access network device, a key (referred to as the key 2) for communication between the third access network device and the terminal. Accordingly, the third access network device receives the key.

After determining that the terminal needs to switch to the third access network device, the second access network device may derive the key 2 based on the NH that corresponds to the second NCC and that is obtained from the AMF network element, and a PCI and a frequency of a cell of the third access network device, and send the key 2 to the third access network device via an Xn message. Optionally, the Xn message further includes the second NCC.

Optionally, the Xn message may further include a second candidate access network device list, and the second candidate access network device list may include an identifier of a part or all of the candidate access network devices in the first candidate access network device list. For example, after determining that the terminal needs to switch to the third access network device, the second access network device may select a part or all of the access network devices (the selected access network device is the access network device in the second candidate access network device list) from the plurality of candidate access network devices based on the plurality of possible factors (for example, the load on the candidate access network device), and send the second candidate access network device list to the third access network device via the Xn message.

S510: The second access network device sends a second MAC layer message (namely, a switch command message) to the terminal, where the second MAC layer message includes information for triggering the terminal to switch to the third access network device and information indicating the second NCC, and the second NCC is for determining the key for communication between the terminal and the third access network device.

The information for triggering the terminal to switch to the third access network device may include an identifier of the third access network device.

The information indicating the second NCC may include at least one of the following: the second NCC, an index value of the second NCC, and a ciphertext obtained through encryption of the second NCC. The second NCC may be an NCC stored in the second access network device (for example, an RRC layer of the second access network device).

For example, from the perspective of the second access network device, after determining that the terminal needs to switch to the third access network device, the second access network device may generate the second MAC layer message, and send the second MAC layer message. In comparison with the normal handover procedure (in the normal handover procedure, when determining that the terminal needs to be handed over, the source access network device needs to first obtain the container (the container carries the NCC and the handover parameter) constructed by the target access network device from the target access network device, and then send the container to the terminal), because when determining that the terminal needs to switch, the second access network device may generate the second MAC layer message including the information indicating the second NCC, and send the second MAC layer message to the terminal, a handover delay can be reduced. For example, the RRC layer of the second access network device transfers, to a MAC layer of the second access network device, the information indicating the second NCC, so that the second MAC layer message generated by the MAC layer of the second access network device includes the information indicating the second NCC.

For example, from the perspective of the terminal, after receiving the second MAC layer message, the terminal may determine, based on the second NCC carried in the second MAC layer message, the key (referred to as the key 2) for communication between the terminal and the third access network device. For example, the MAC layer of the terminal obtains, from the second MAC layer message, the information indicating the second NCC. The MAC layer of the terminal transfers, to the RRC layer of the terminal, the information indicating the second NCC, so that the RRC layer of the terminal can determine the key 2 based on the second NCC.

There are a plurality of specific implementations in which the terminal determines the key 2 based on the second NCC. For example, the terminal may compare the second NCC with an NCC (namely, the first NCC) locally stored in the terminal. Because the second NCC is different from the first NCC, the terminal may derive, based on a difference between the second NCC and the first NCC, the NH corresponding to the second NCC, and derive the key 2 based on the NH corresponding to the second NCC, and the PCI and the frequency of the cell of the third access network device. In addition, after determining that the second NCC is different from the NCC locally stored in the terminal, the terminal may update the locally stored NCC to the second NCC.

A sequence of performing S509 and S510 is not limited in this embodiment of this application. S509 may be performed before S520, S509 may be performed before S510, or S509 and S510 are simultaneously performed.

S511: The terminal switches to the third access network device based on the parameter in the container constructed by the third access network device.

For an implementation herein, refer to the descriptions in S505.

S512: The third access network device obtains a third NCC from the AMF network element.

For example, in response to switching to the third access network device by the terminal (for example, the third access network device receives a switch complete message from the terminal), the third access network device may obtain the third NCC from the AMF network element.

Optionally, the third access network device further receives, from the AMF network element, an NH corresponding to the third NCC, and stores the third NCC and the NH corresponding to the third NCC.

For example, the third access network device may send a path switch request message to the AMF network element. Accordingly, after receiving the path switch request message, the AMF network element may update the locally stored NCC value (namely, the second NCC) by increasing the NCC value by 1, to obtain an updated NCC (namely, the third NCC), thereby performing key derivation based on the updated NCC, to obtain the NH corresponding to the third NCC; and send a path switch response message to the third access network device, where the path switch response message includes the third NCC and the NH corresponding to the third NCC.

S513: The terminal communicates with the third access network device by using the key 2.

For example, the terminal derives the key 2 based on the second NCC carried in the second MAC layer message, and the third access network device receives the key 2 from the second access network device. Therefore, the terminal may communicate with the third access network device by using the key 2.

According to the foregoing method, the first access network device first sends, to the terminal, the container (the container carries a handover parameter) constructed by each of the plurality of candidate access network devices; and then, after determining that the terminal needs to switch to the second access network device, sends, via the first MAC layer message, the information indicating the first NCC. In comparison with the normal handover procedure (in the normal handover procedure, when determining that the terminal needs to be handed over, the source access network device needs to first obtain the container (the container carries the NCC and the handover parameter) constructed by the target access network device from the target access network device, and then send the container to the terminal, to trigger the terminal to perform handover), because when determining that the terminal needs to switch, the first access network device may send the first MAC layer message to the terminal, to trigger the terminal to switch, reducing of the handover delay is facilitated; and because the first MAC layer message carries the information indicating the first NCC, implementation of secure communication between the terminal and the second access network device is facilitated.

Further, because the switching preparation process is performed once in S501 and S502 for the LTM switching, if NCCs are carried in containers in a switching preparation process phase, all the NCCs carried in the containers are the first NCC, and vertical derivation cannot be implemented. In this embodiment of this application, the NCCs are carried by using MAC layer messages, so that access network devices and the terminal derive keys based on updated NCCs, and perform secure communication by using the updated keys.

It may be understood that, when LTM switching is performed, a source access network device may send, to the terminal via a MAC layer message, an NCC obtained by the source access network device. In this way, the terminal can determine, based on the NCC, a key for communication between the terminal and a target access network device, to help implement a key update, so that a key reuse problem does not occur when the terminal switches between a plurality of access network devices. In addition, the first access network device learns of the key shared by the terminal and the second access network device (the key shared by the terminal and the second access network device is obtained through horizontal derivation), but can learn of neither the key shared by the terminal and the third access network device (the key shared by the terminal and the third access network device is obtained through vertical derivation) nor a key shared by the terminal and a subsequent target access network device (the key shared by the terminal and the subsequent target access network device is obtained through vertical derivation), so that two-hop security can be implemented.

The foregoing is described by using an example in which "the terminal determines, based on an NCC carried in a switch command message, a key for communication between the terminal and a target access network device. In this case, the terminal may determine, based on the first NCC, the key for communication between the terminal and the second access network device, and store the key in an AS security context of the terminal. In another possible example, after S506, the second access network device may send a third MAC layer message to the terminal, where the third MAC layer message may include the second NCC (the NCC is obtained by the second access network device from the AMF network element in S506). Accordingly, after receiving the third MAC layer message, the terminal may determine, based on the second NCC, a key for communication between the terminal and the second access network device. In this case, in S507, the key for communication between the terminal and the second access network device is the key determined based on the second NCC. When the terminal determines, based on the second NCC, the key for communication between the terminal and the second access network device, the terminal may update the key that is in the AS security context and that is determined based on the first NCC to the key determined based on the second NCC (that is, the key that is determined by the terminal based on the first NCC and that is for communication between the terminal and the second access network device is invalid), so that the terminal can communicate with the second access network device by using the key determined based on the second NCC. Optionally, the terminal may delete the key that is determined based on the first NCC and that is for communication between the terminal and the second access network device.

In other words, before the terminal determines, based on the second NCC, the key for communication between the terminal and the second access network device, a key for communication between the terminal and the second access network device is the key determined based on the first NCC. After the terminal determines, based on the second NCC, the key for communication between the terminal and the second access network device, a key for communication between the terminal and the second access network device is the key determined based on the second NCC. For example, a key for communication between the terminal and the second access network device in the switching process is the key determined based on the first NCC. After switching is completed, the second access network device may send the third MAC layer message to the terminal, so that a key for communication between the terminal and the second access network device after switching is completed is the key determined based on the second NCC.

Similarly, in S510, the terminal may determine, based on the second NCC, the key for communication between the terminal and the third access network device, and store the key in the AS security context. After S511, the third access network device may send a fourth MAC layer message to the terminal, where the fourth MAC layer message may include the third NCC (the NCC is obtained by the third access network device from the AMF network element in S512). Accordingly, after receiving the fourth MAC layer message, the terminal may determine, based on the third NCC, a key for communication between the terminal and the third access network device, and update the key that is in the AS security context and that is determined based on the second NCC to the key determined based on the third NCC (that is, the key that is determined by the terminal based on the second NCC and that is for communication between the terminal and the third access network device is invalid). In this case, in S513, the key for communication between the terminal and the third access network device is the key determined based on the third NCC.

In this way, the first access network device learns of neither the key shared by the terminal and the second access network device nor the key shared by the terminal and the third access network device, so that one-hop security can be implemented.

In addition, Embodiment 1 describes only the implementation in which the terminal switches from the first access network device to the second access network device and switches from the second access network device to the third access network device. Subsequently, the terminal may further perform LTM switching one or more times consecutively, for example, switches from the third access network device to a fourth access network device. For a specific implementation in which "the terminal switches from the third access network device to the fourth access network device", refer to the descriptions in which "the terminal switches from the second access network device to the third access network device". In other words, the foregoing descriptions in which "the terminal switches from the second access network device to the third access network device" are applicable to switching of the terminal between the plurality of candidate access network devices for LTM switching.

Based on Embodiment 1, the following describes two possible implementation procedures with reference to Embodiment 2 (corresponding to two-hop security) and Embodiment 3 (corresponding to one-hop security). In Embodiment 2 and Embodiment 3, an example in which the "first access network device" in Embodiment 1 is an access network device 0, the "second access network device" in Embodiment 1 is an access network device 1, and the "third access network device" in Embodiment 1 is an access network device 2 is used for description.

### Embodiment 2

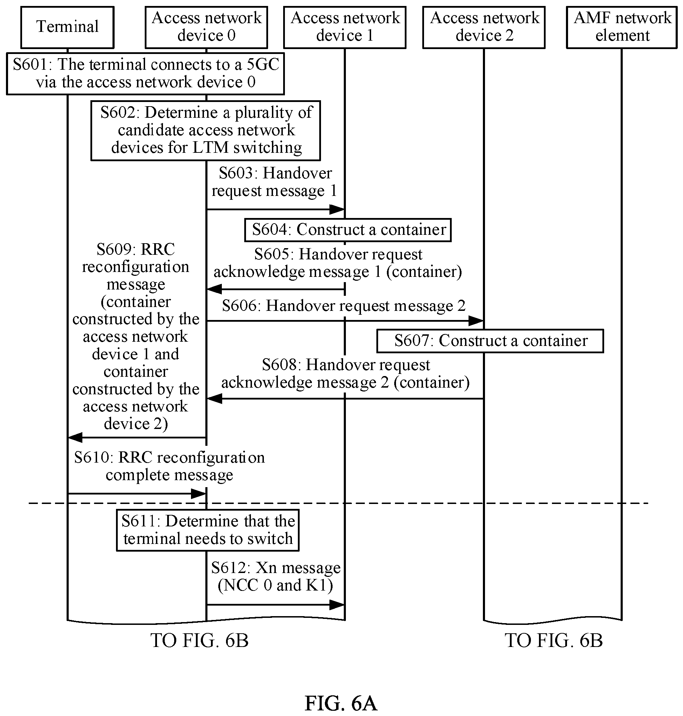

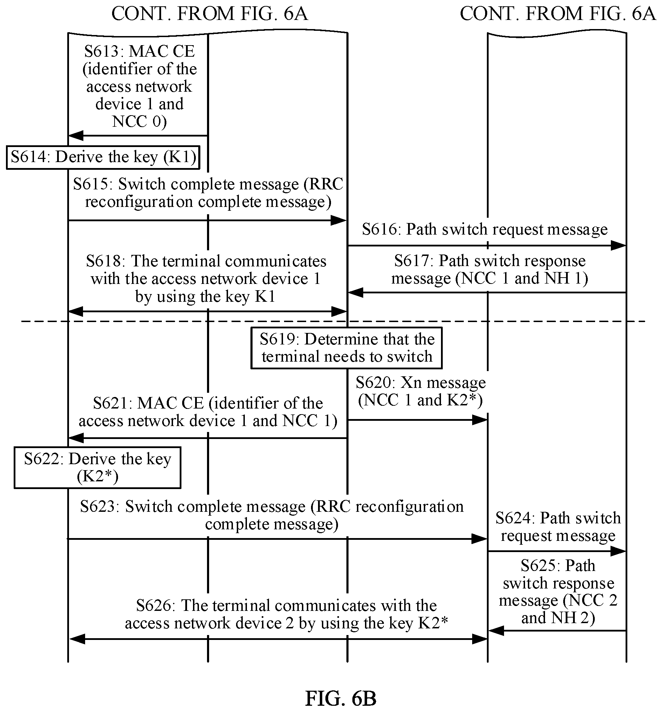

FIG. 6A and FIG. 6B are a diagram of a procedure corresponding to a communication method according to an embodiment of this application. As shown in FIG. 6A and FIG. 6B, the procedure may include the following steps.

S601: A terminal connects to a 5GC via an access network device 0.

The terminal may access the access network device 0 by using a procedure like an initial access procedure, a normal handover procedure, a reestablishment procedure, or a cell reselection procedure, and access the 5GC via the access network device 0. Then, the terminal and the access network device 0 separately store a key KgNB (referred to as K0 for ease of description) and an NCC 0 (K0 is associated with the NCC 0), and an AMF network element stores the NCC 0.

For S602 to S611, refer to the descriptions in S402 to S411.

S612: The access network device 0 sends an Xn message to the access network device 1. Accordingly, the access network device 1 receives the Xn message from the access network device 0.

Optionally, the access network device 0 obtains a key K1 through horizontal derivation based on the NCC 0, and a PCI and a frequency of a cell of the access network device 1. The Xn message includes the NCC 0 and the key K1.

In a possible implementation (an implementation 1), the access network device 0 may directly send, to the access network device 1 via the Xn message, the identifiers of the plurality of candidate access network devices determined in S602. In this case, the Xn message further includes an access network device list 1, and the access network device list 1 includes the identifiers of the plurality of candidate access network devices that are for LTM switching and that are determined in S602. Alternatively, the access network device 0 sends the access network device list 1 to the access network device 1 via the handover request message 1. In this case, the Xn message may not include the access network device list 1.

In another possible implementation (an implementation 2), the access network device 0 may select, based on a plurality of possible factors (for example, load on a candidate access network device), a part or all of the access network devices from the plurality of candidate access network devices determined in S602, and then send an identifier of the selected access network device to the access network device 1 via the Xn message. In this case, the Xn message further includes an access network device list 2, and the access network device list 2 includes the identifier of the access network device selected by the access network device 0.

Optionally, for this implementation, the access network device 0 may further send, to the access network device 1, the identifiers (namely, an access network device list 1) of the plurality of candidate access network devices determined in S602, for example, via the handover request message 1 or the Xn message. This is not specifically limited.

It may be understood that, in the implementation 1, the access network device list 1 is the first candidate access network device list in Embodiment 1; and in the implementation 2, the access network device list 2 is the first candidate access network device list in Embodiment 1.

In addition, after receiving the Xn message, the access network device 1 may learn that the access network device 1 is a target access network device for LTM switching rather than a target access network device for normal handover, and therefore does not need to construct the container (if the access network device 1 is the target access network device for normal handover, the access network device constructs the container. Refer to the descriptions in FIG. 3).

In an example, the Xn message may be a dedicated message for LTM switching, so that after receiving the Xn message, the access network device 1 can learn that the access network device 1 is the target access network device for LTM switching.

In another example, the Xn message may include indication information, and the indication information indicates that the access network device 1 is the target access network device for LTM switching. A specific implementation of the indication information is not limited in this embodiment of this application. For example, the indication information may include the access network device list 1 in the implementation 1 or the access network device list 2 in the implementation 2.

A sending occasion in S612 is not limited in this embodiment of this application. For example, S612 may be performed before S613, S612 may be performed after S613, or S612 and S613 are simultaneously performed. In this embodiment of this application, for all other steps similar to S612, refer to this for understanding.

S613: The access network device 0 sends a switch command message to the terminal. Accordingly, the terminal receives the switch command message from the access network device 0.

The switch command message is a MAC layer message, for example, a MAC CE. The switch command message includes an identifier of the target access network device (namely, the identifier of the access network device 1) and the NCC 0. The access network device 0 may transfer the NCC 0 from an RRC layer to a MAC layer, and send the NCC 0 via the MAC layer message.

After determining that the terminal needs to switch to the access network device 1, the access network device 0 may generate the switch command message, and send the switch command message. In comparison with the normal handover procedure, because when determining that the terminal needs to switch, the access network device 0 may generate the switch command message including the NCC 0, and send the switch command message to the terminal, a handover delay can be reduced. The RRC layer of the access network device 0 may transfer the NCC 0 to the MAC layer of the access network device 0, so that the switch command message generated by the MAC layer of the access network device 0 includes an NCC 1.

It may be understood that the access network device 0 may determine whether the target access network device (namely, the access network device 1) belongs to the candidate access network devices for LTM switching. If the target access network device belongs to the candidate access network devices for LTM switching, the access network device 0 may perform S612 and S613, to trigger inter-station LTM switching. Optionally, in response to the handover request acknowledge message 1 of the access network device 1, the switch command message (namely, the MAC layer message) sent by the access network device 0 in S613 may carry the NCC 0. Optionally, if the target access network device does not belong to the candidate access network devices for LTM switching, the access network device 0 may trigger inter-station normal handover.

In another example, in a switching preparation process, after determining the plurality of candidate access network devices, the access network device 0 may determine a key of each of the plurality of candidate access network devices, and send the key to the corresponding access network device via a handover request message. The access network device 1 is used as an example. The access network device 0 may obtain the key K1 through horizontal derivation based on the key K0, and the PCI and the frequency of the cell of the second access network device, and send the key K1 to the access network device 1 via the handover request message 1 in S603. Optionally, the handover request message 1 may further include the NCC 0, and the container constructed by the access network device 1 may include the NCC 0.

In this case, optionally, the Xn message in S612 may not need to carry the NCC 0 and the key K1, the switch command message in S613 does not need to carry the NCC 0, and in S614, the terminal may derive the key based on the NCC 0 in the container constructed by the access network device 1.

In addition, optionally, the Xn message in S612 may carry the NCC 0 and a key obtained through horizontal derivation based on the key K1, the switch command message in S613 carries the NCC 0, and in S614, the terminal may obtain the key through horizontal derivation based on the NCC 0 in the switch command message in S613 and a key KI.

S614: The terminal derives the key.

A MAC layer of the terminal may obtain the NCC 0 from the MAC CE, and then transfer the NCC 0 to an RRC layer of the terminal. Because the obtained NCC 0 is the same as the NCC 0 locally stored in the terminal, the RRC layer of the terminal may perform horizontal derivation, that is, derive the key K1 based on K0, and the PCI and the frequency of the cell of the access network device 1. In this way, the terminal and the access network device 1 maintain the same key, namely, K1.

S615: The terminal is detached from the access network device 0, and sends a switch complete message to the access network device 1. Accordingly, the access network device 1 receives the switch complete message from the terminal.

The switch complete message may be an RRC reconfiguration complete message.

S616: The access network device 1 sends a path switch request message to the AMF network element. Accordingly, the AMF network element receives the path switch request message.

S617: The AMF network element sends a path switch response message to the access network device 1. Accordingly, the access network device 1 receives the path switch response message, to complete path switching.

Herein, the path switching means that a data transmission path of the terminal is switched from "UPF network element-access network device 0-terminal" to "UPF network element-access network device 1-terminal".

After receiving the path switch request message, the AMF network element may update the locally stored NCC value by increasing the NCC value by 1, to obtain an updated NCC (referred to as an NCC 1), thereby performing vertical derivation based on the updated NCC, to obtain an updated NH (referred to as an NH 1). The NCC 1 and the NH 1 are associated with each other, and are used as an updated {NH 1, NCC 1} pair.

The path switch response message includes {NH 1, NCC 1}. After receiving the path switch response message, the access network device 1 stores {NH 1, NCC 1}, to derive a key in LTM switching that occurs next time.

S618: The terminal communicates with the access network device 1 by using the key K1.

S619: The access network device 1 determines that the terminal needs to switch, and a target access network device to which the terminal switches is the access network device 2.

For the implementation 1, the access network device 1 may determine whether the target access network device (namely, the access network device 2) belongs to the access network device list 1. If the target access network device belongs to the access network device list 1, the access network device 1 may perform S620 and S621, to trigger inter-station LTM switching. In addition, in response to the target access network device belonging to the access network device list 1, a switch command message (namely, a MAC layer message) sent by the access network device 1 in S621 may carry the NCC 1. Optionally, if the target access network device does not belong to the access network device list 1, the access network device 1 may trigger inter-station normal handover.

For the implementation 2, the access network device 1 may determine whether the target access network device (namely, the access network device 2) belongs to the access network device list 2. If the target access network device belongs to the access network device list 2, the access network device 1 may perform S620 and S621, to trigger inter-station LTM switching. In addition, in response to the target access network device belonging to the access network device list 2, a switch command message (namely, a MAC layer message) sent by the access network device 1 in S621 may carry the NCC 1. Optionally, if the target access network device does not belong to the access network device list 2, the access network device 1 may trigger inter-station normal handover.

S620: The access network device 1 sends an Xn message to the access network device 2. Accordingly, the access network device 2 receives the Xn message from the access network device 1.

The access network device 1 derives a key K2* based on the previously stored NH 1, and a PCI and a frequency of a cell of the access network device 2. The Xn message includes the NCC 1 and the key K2*.

In a possible implementation, the access network device 1 may directly send the access network device list 1 to the access network device 2 via the Xn message (the access network device list 1 in this case is the second candidate access network device list in Embodiment 1). Alternatively, the access network device 0 may send the access network device list 1 to the access network device 1 via the handover request message 2. In this case, the Xn message may not include the access network device list 1.

In another possible implementation, the access network device 1 may select a part or all of the access network devices from the access network device list 1 based on the plurality of possible factors (for example, the load on the candidate access network device), and then send an identifier of the selected access network device to the access network device 1 via the Xn message. In this case, the Xn message further includes an access network device list 3, and the access network device list 3 includes the identifier of the access network device selected by the access network device 1 (the access network device list 3 is the second candidate access network device list in Embodiment 1).

Optionally, for this implementation, the access network device 0 may further send the access network device list 1 to the access network device 2 via the handover request message 2, or the access network device 1 may further send the access network device list 1 to the access network device 2 via the Xn message. This is not specifically limited.

S621: The access network device 1 sends the switch command message to the terminal. Accordingly, the terminal receives the switch command message from the access network device 1.

The switch command message is the MAC layer message, for example, a MAC CE. The switch command message includes an identifier of the target access network device (namely, the identifier of the access network device 2) and the NCC 1.

After determining that the terminal needs to switch to the access network device 2, the access network device 1 may generate the switch command message, and send the switch command message. In comparison with the normal handover procedure, because when determining that the terminal needs to switch, the access network device 1 may generate the switch command message including the NCC 1, and send the switch command message to the terminal, a handover delay can be reduced. An RRC layer of the access network device 1 may transfer the NCC 1 to a MAC layer of the access network device 1, so that the switch command message generated by the MAC layer of the access network device 1 includes the NCC 1.

S622: The terminal derives the key.

The MAC layer of the terminal may obtain the NCC 1 from the MAC CE, and then transfer the NCC 1 to the RRC layer of the terminal. Because the obtained NCC 1 is different from the NCC 0 locally stored in the terminal, the RRC layer of the terminal may update the locally stored NCC to the NCC 1, perform vertical derivation a corresponding quantity of times based on a difference between the NCC 1 and the NCC 0, to obtain the corresponding NH (namely, the NH 1), and then derive the key K2* based on the NH 1, and the PCI and the frequency of the cell of the access network device 2. In this way, the terminal and the access network device 2 maintain the same key, namely, K2*.

S623: The terminal is detached from the access network device 1, and sends a switch complete message to the access network device 2. Accordingly, the access network device 2 receives the switch complete message from the terminal.

The switch complete message may be an RRC reconfiguration complete message.

S624: The access network device 2 sends a path switch request message to the AMF network element. Accordingly, the AMF network element receives the path switch request message.

S625: The AMF network element sends a path switch response message to the access network device 2. Accordingly, the access network device 2 receives the path switch response message, to complete path switching.

Herein, the path switching means that a data transmission path of the terminal is switched from "UPF network element-access network device 1-terminal" to "UPF network element-access network device 2-terminal".

After receiving the path switch request message, the AMF network element may update the locally stored NCC value by increasing the NCC value by 1, to obtain an updated NCC (referred to as an NCC 2), thereby performing vertical derivation based on the updated NCC, to obtain an updated NH (referred to as an NH 2). The NCC 2 and the NH 2 are associated with each other, and are used as an updated {NH 2, NCC 2} pair.

The path switch response message includes {NH 2, NCC 2}. After receiving the path switch response message, the access network device 1 stores {NH 2, NCC 2}, to derive a key in LTM switching that occurs next time.

S626: The terminal communicates with the access network device 2 by using K2*.

It may be understood that, if the candidate access network devices for LTM switching further include an access network device 3, the terminal may further switch from the access network device 2 to the access network device 3 subsequently. For a specific implementation, refer to the descriptions in which the terminal switches from the access network device 1 to the access network device 2.

In addition, the procedure shown in FIG. 6A and FIG. 6B corresponds to the procedure shown in FIG. 5, and the steps of the two procedures may be mutually referenced. For example, for S501, refer to S602 to S608; for S502, refer to S609; for S503, refer to S611; for S504, refer to S613 and S614; for S505, refer to S615; for S506, refer to S616 and S617; for S507, refer to S618; for S508, refer to S619; for S509, refer to S620; for S510, refer to S621 and S622; and for S511, refer to S623. For S512, refer to S624 and S625; and for S513, refer to S626.

According to the foregoing method, a source access network device sends an NCC to the terminal, so that the terminal can determine a key based on the NCC, and the source access network device can derive the key based on an NH corresponding to the NCC, and send the key to a target access network device. In this way, the terminal and the target access network device can maintain the same key, to ensure secure communication between the terminal and the target access network device. In addition, because an NCC update occurs each time LTM switching is performed, a key reuse problem does not occur when the terminal switches between a plurality of access network devices. For example, the terminal switches from the access network device 0 to the access network device 1, switches from the access network device 1 to the access network device 2, and then switches from the access network device 2 back to the access network device 1. Keys for communication between the terminal and the access network device 1 are different in switching that occurs twice.

In addition, the access network device 0 learns of the key (namely, K1) shared by the terminal and the access network device 1, but can learn of neither the key (namely, K2*) shared by the terminal and the access network device 2 nor a key shared by the terminal and a subsequent target access network device, so that two-hop security can be implemented.

### Embodiment 3

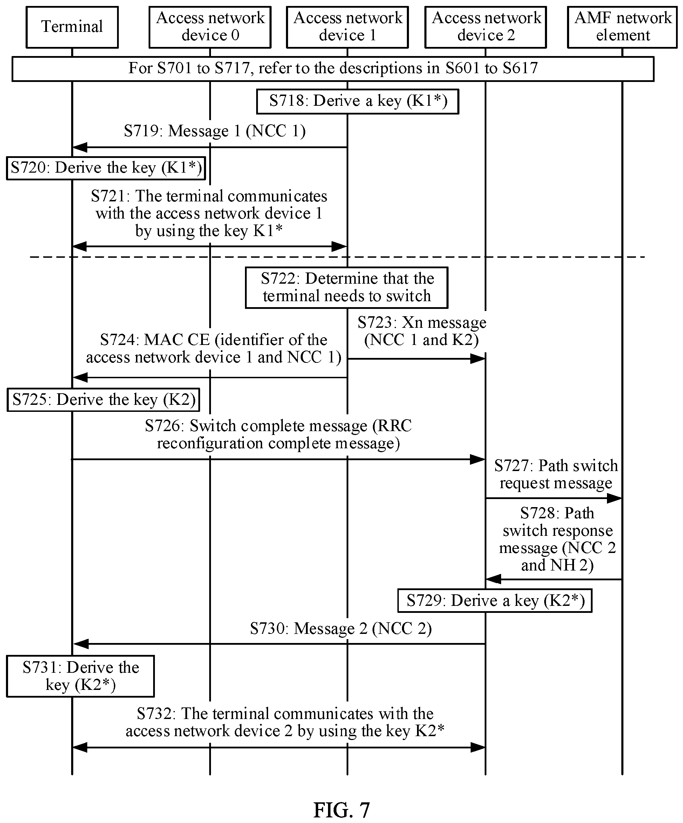

FIG. 7 is a diagram of a procedure corresponding to a communication method according to an embodiment of this application. As shown in FIG. 7, the procedure may include the following steps.

For S701 to S717, refer to the descriptions in S601 to S617. Details are not described again.

S718: The access network device 1 derives a key.

The access network device 1 derives the key K1* based on the NH 1, and the PCI and the frequency of the cell of the access network device 1.

S719: The access network device 1 sends a message 1 to the terminal, where the message 1 includes the NCC 1. Accordingly, the terminal receives the message 1.

The message 1 may be a MAC layer message (for example, a MAC CE) or an RRC layer message (for example, an RRC reconfiguration message). This is not specifically limited.

S720: The terminal derives the key.

The MAC layer of the terminal may obtain the NCC 1 from the message 1, and then transfer the NCC 1 to the RRC layer of the terminal. Because the obtained NCC 1 is different from the NCC 0 locally stored in the terminal, the RRC layer of the terminal may update the locally stored NCC to the NCC 1, perform vertical derivation a corresponding quantity of times based on a difference between the NCC 1 and the NCC 0, to obtain the corresponding NH (namely, the NH 1), and then derive the key K1^{*} based on the NH 1, and the PCI and the frequency of the cell of the access network device 1. In this way, the terminal and the access network device 1 maintain the same key, namely, K1^{*}.

S721: The terminal communicates with the access network device 1 by using the key K1^{*}.

S722: The access network device 1 determines that the terminal needs to switch, and a target access network device to which the terminal switches is the access network device 2.

S723: The access network device 1 sends an Xn message to the access network device 2. Accordingly, the access network device 2 receives the Xn message from the access network device 1.

The access network device 1 derives a key K2 based on K1^{*}, and a PCI and a frequency of a cell of the access network device 2. The Xn message includes the NCC 1 and the key K2.

For S722 and S723, refer to the descriptions in S619 and S620.

S724: The access network device 1 sends a switch command message to the terminal. Accordingly, the terminal receives the switch command message from the access network device 1.

The switch command message is the MAC layer message, for example, a MAC CE. The switch command message includes an identifier of the target access network device (namely, the identifier of the access network device 2) and the NCC 1.

S725: The terminal derives the key.

The MAC layer of the terminal may obtain the NCC 1 from the MAC CE, and then transfer the NCC 1 to the RRC layer of the terminal. Because the obtained NCC 1 is the same as the NCC 1 stored in the terminal, the RRC layer of the terminal may perform horizontal derivation, that is, derive the key K2 based on K1^{*}, and the PCI and the frequency of the cell of the access network device 2. In this way, the terminal and the access network device 2 maintain the same key, namely, K2.

S726: The terminal is detached from the access network device 1, and sends a switch complete message to the access network device 2. Accordingly, the access network device 2 receives the switch complete message from the terminal.

The switch complete message may be an RRC reconfiguration complete message.

S727: The access network device 2 sends a path switch request message to the AMF network element. Accordingly, the AMF network element receives the path switch request message.

S728: The AMF network element sends a path switch response message to the access network device 2. Accordingly, the access network device 2 receives the path switch response message, to complete path switching.

Herein, the path switching means that a data transmission path of the terminal is switched from "UPF network element-access network device 1-terminal" to "UPF network element-access network device 2-terminal".

After receiving the path switch request message, the AMF network element may update the locally stored NCC value by increasing the NCC value by 1, to obtain an updated NCC (referred to as an NCC 2), thereby performing vertical derivation based on the updated NCC, to obtain an updated NH (referred to as an NH 2). The NCC 2 and the NH 2 are associated with each other, and are used as an updated {NH 2, NCC 2} pair.

The path switch response message includes {NH 2, NCC 2}. After receiving the path switch response message, the access network device 1 stores {NH 2, NCC 2}.

S729: The access network device 2 derives a key.

The access network device 2 derives the key K2* based on the NH 2, and the PCI and the frequency of the cell of the access network device 2.

S730: The access network device 2 sends a message 2 to the terminal, where the message 2 includes the NCC 2. Accordingly, the terminal receives the message 2.

The message 2 may be a MAC layer message (for example, a MAC CE) or an RRC layer message (for example, an RRC reconfiguration message). This is not specifically limited.

S731: The terminal derives the key.

The terminal may obtain the NCC 2 from the message 2. Because the obtained NCC 2 is different from the NCC 1 locally stored in the terminal, the terminal may update the locally stored NCC 1 to the NCC 2, perform vertical derivation a corresponding quantity of times based on a difference between the NCC 2 and the NCC 1, to obtain the corresponding NH (namely, the NH 2), and then derive the key K2* based on the NH 2, and the PCI and the frequency of the cell of the access network device 1. In this way, the terminal and the access network device 2 maintain the same key, namely, K2*.

S732: The terminal communicates with the access network device 2 by using the key K2*.

It may be understood that the terminal may further switch from the access network device 2 to another access network device (for example, an access network device 3) subsequently. For a specific implementation, refer to the descriptions in which the terminal switches from the access network device 1 to the access network device 2.

In addition, a difference between the procedures shown in FIG. 7, FIG. 6A, and FIG. 6B lies in that: FIG. 6A and FIG. 6B are for implementing two-hop security. That is, an NCC and an NH that are received by an access network device from an AMF are for communication security protection in a scenario in which a terminal switches to a next base station. FIG. 7 is for implementing one-hop security. That is, an NCC and an NH that are received by an access network device from an AMF are for communication security protection in a scenario in which a terminal switches to a current base station. Therefore, compared with FIG. 6A and FIG. 6B, FIG. 7 has some additional steps, for example, S718 to S720 and S729 to S731. Except for this difference, mutual reference may be made to the steps of the two procedures. Details are not described one by one herein again.

According to the foregoing method, the access network device 0 can learn of none of the key (namely, K1^{*}) for the terminal and the access network device 1, the key (namely, K2*) for the terminal and the access network device 2, and a key shared by the terminal and a subsequent target access network device, so that one-hop security can be implemented.

### Embodiment 4

In Embodiment 4, the solution 2 is described in detail.

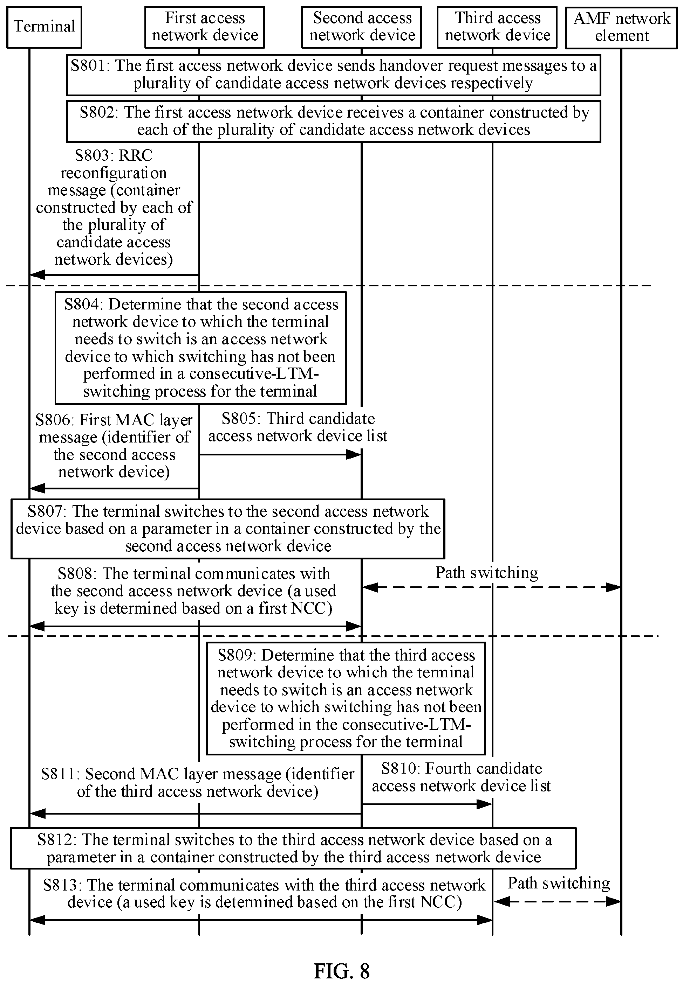

FIG. 8 is a diagram of a procedure corresponding to a communication method according to an embodiment of this application. As shown in FIG. 8, the procedure may include the following steps.

S801: A first access network device sends handover request messages to a plurality of candidate access network devices respectively, where the handover request messages are for requesting the plurality of candidate access network devices to construct containers.

Herein, the first access network device may be an access network device accessed by a terminal by using a procedure like an initial access procedure, a normal handover procedure, a reestablishment procedure, or a cell reselection procedure. The first access network device and the terminal may store a same key (the key is for communication between the first access network device and the terminal) and a same NCC (for example, a first NCC).

A second access network device in the plurality of candidate access network devices is used as an example. The first access network device may derive a key 1 based on a first input parameter, and send a handover request message to the second access network device, where the handover request message includes the first NCC and the key 1. Accordingly, after receiving the handover request message, the second access network device may obtain and store the first NCC and the key 1. The first input parameter includes one or more of the following: a PCI of a cell of the second access network device, a frequency of the cell, a key KgNB for performing security protection between the terminal and the first access network device, and the like.

S802: The first access network device receives a container constructed by each of the plurality of candidate access network devices, where the container constructed by the access network device includes a parameter for the terminal to switch to the access network device and the first NCC (that is, the first NCC is obtained from the handover request message).

S803: The first access network device sends an RRC reconfiguration message to the terminal, where the RRC reconfiguration message includes the container constructed by each of the plurality of candidate access network devices.

Herein, the terminal obtains, from the RRC reconfiguration message, the containers constructed by the plurality of candidate access network devices. Further, the second access network device in the plurality of candidate access network devices is used as an example. The terminal may obtain the first NCC from a container constructed by the second access network device. Because the obtained first NCC is the same as an NCC locally stored in the terminal, the terminal may perform horizontal derivation, that is, obtain, through horizontal derivation based on the first input parameter, a key for communication between the terminal and the second access network device, and store a correspondence between the key and an identifier of the second access network device. In this way, the terminal can store keys respectively corresponding to the plurality of candidate access network devices.

A specific occasion on which the terminal determines the keys respectively corresponding to the plurality of candidate access network devices is not limited in this embodiment of this application.

S801 to S803 may be understood as a switching preparation process. For a related implementation, refer to the descriptions in Embodiment 1.

S804: The first access network device determines that the second access network device to which the terminal needs to switch is an access network device to which switching has not been performed in a consecutive-LTM-switching process for the terminal.

After determining that the terminal needs to switch to the second access network device, the first access network device may further determine whether the second access network device is the access network device to which switching has not been performed in the consecutive-LTM-switching process for the terminal. After the first access network device determines the plurality of candidate access network devices, the terminal has not switched to any one of the plurality of candidate access network devices. Therefore, the first access network device may determine that the plurality of candidate access network devices are all access network devices to which switching has not been performed in the consecutive-LTM-switching process for the terminal.

In this embodiment, the second access network device is the access network device to which switching has not been performed in the consecutive-LTM-switching process for the terminal. In another example, if the second access network device is an access network device to which switching has been performed in the consecutive-LTM-switching process for the terminal, the first access network device may send an RRC reconfiguration message to the terminal, where the RRC reconfiguration message is for triggering the terminal to be handed over to the second access network device (that is, perform inter-station normal handover).

For example, consecutive LTM switching is a plurality of times of switching triggered by using an L1/L2 message after configuration information is obtained in a switching preparation phase. That is, after the configuration information is obtained, consecutive switching triggered by the L1/L2 message may not need additional RRC configuration.

The consecutive-LTM-switching process may include a process (namely, the switching preparation process) in which the terminal obtains the containers constructed by the plurality of candidate access network devices and a plurality of consecutive times of LTM switching. The plurality of candidate access network devices are candidate access network devices in the consecutive-LTM-switching process for the terminal. For example, after the terminal accesses an access network device a by using the initial access procedure, the normal handover procedure, the reestablishment procedure, or the cell reselection procedure, the access network device a receives the containers constructed by the plurality of candidate access network devices (for example, access network devices b to d), and sends the containers to the terminal via an RRC reconfiguration message. Subsequently, the terminal switches from the access network device a to the access network device b through LTM switching (a 1^{st} time of LTM switching). In this case, the access network device b is an access network device to which switching has been performed in the consecutive-LTM-switching process, and the access network devices c and d are access network devices to which switching has not been performed in the consecutive-LTM-switching process. Optionally, the access network device a may record a quantity of consecutive times of LTM switching as 1, and send the quantity of consecutive times of LTM switching to the access network device b. The terminal switches from the access network device b to the access network device c through LTM switching again (a 2^{nd} time of LTM switching). In this case, the access network devices b and c are both access network devices to which switching has been performed in the consecutive-LTM-switching process, and the access network device d is the access network device to which switching has not been performed in the consecutive-LTM-switching process. Optionally, the access network device b may increase the quantity of consecutive times of LTM switching by 1 (that is, a quantity of consecutive times of LTM switching is 2), and send the quantity of consecutive times of LTM switching to the access network device c. The terminal switches from the access network device c to the access network device d through LTM switching again (a 3^{rd} time of LTM switching). In this case, the access network devices b, c, and d are all access network devices to which switching has been performed in the consecutive-LTM-switching process. Optionally, the access network device c may increase the quantity of consecutive times of LTM switching by 1 (that is, a quantity of consecutive times of LTM switching is 3), and send the quantity of consecutive times of LTM switching to the access network device d. If the terminal is connected from the access network device d to an access network device e by using the normal handover procedure, the reestablishment procedure, or the cell reselection procedure, the foregoing three times of LTM switching performed by the terminal may be understood as three consecutive times of LTM switching. Optionally, the access network device d may reset the quantity of consecutive times of LTM switching to 0.

A quantity of consecutive times of LTM switching may be a quantity of times of LTM switching performed in the consecutive-LTM-switching process for the terminal.

In addition, in this embodiment, that the first access network device determines, depending on "whether the second access network device is the access network device to which switching has not been performed in the consecutive-LTM-switching process for the terminal", whether to perform inter-station LTM switching or inter-station normal handover is used an example for description. That is, if the second access network device is the access network device to which switching has not been performed in the consecutive-LTM-switching process for the terminal, inter-station LTM switching (namely, steps such as S805 and S806) is performed. If the second access network device is the access network device to which switching has been performed in the consecutive-LTM-switching process for the terminal, inter-station normal handover is performed.

In another possible embodiment, the first access network device may alternatively determine, based on a value of an NCC and/or the quantity of consecutive times of LTM switching, whether to perform inter-station LTM switching or inter-station normal handover. For example, if the second access network device is the access network device to which switching has not been performed in the consecutive-LTM-switching process for the terminal, an NCC stored in the first access network device is not a preset value, and the quantity of consecutive times of LTM switching is less than a threshold, inter-station LTM switching may be performed; otherwise (for example, at least one of that the second access network device is the access network device to which switching has been performed in the consecutive-LTM-switching process for the terminal, that an NCC stored in the first access network device is a preset value, and that the quantity of consecutive times of LTM switching is greater than or equal to a threshold is satisfied), inter-station normal handover may be performed.

S805: The first access network device sends a third candidate access network device list to the second access network device, where the third candidate access network device list includes an identifier of an access network device to which switching has not been performed in the consecutive-LTM-switching process for the terminal.

For example, if the first access network device determines that the plurality of candidate access network devices are all access network devices to which switching has not been performed in the consecutive-LTM-switching process for the terminal, the third candidate access network device list includes identifiers of the plurality of candidate access network devices. That is, a candidate access network device list sent by a source access network device to a target access network device does not include the source access network device.

In another example, because the terminal is to switch to the second access network device, the third candidate access network device list includes an identifier of an access network device in the plurality of candidate access network devices other than the second access network device. That is, a candidate access network device list sent by a source access network device to a target access network device does not include the source access network device and the target access network device.

S806: The first access network device sends a first MAC layer message to the terminal, where the first MAC layer message is for triggering the terminal to switch to the second access network device.

Herein, the first MAC layer message may include the identifier of the second access network device.

Optionally, in response to the first MAC layer message, the terminal may delete context information related to the first access network device, for example, delete the key for communication between the terminal and the first access network device. It should be noted that, if the terminal does not determine, in the switching preparation process, the keys respectively corresponding to the plurality of candidate access network devices, in response to the first MAC layer message, the terminal may not delete the key for communication between the terminal and the first access network device.

S807: The terminal switches to the second access network device based on a parameter in the container constructed by the second access network device.

Optionally, after the terminal switches to the second access network device, the second access network device may send a path switch request message to an AMF network element. Accordingly, the AMF network element may send a path switch response message to the second access network device based on the path switch request message.

S808: The terminal communicates with the second access network device by using the key 1.

Herein, after obtaining the identifier of the second access network device from the first MAC layer message, a MAC layer of the terminal may transfer the identifier of the second access network device to an RRC layer, and then the RRC layer of the terminal may obtain, based on the identifier of the second access network device, the key (namely, the key 1) corresponding to the second access network device. In addition, the second access network device may obtain the previously stored key 1. In this way, the terminal can communicate with the second access network device by using the key 1.

It may be understood that the foregoing is described by using an example in which the terminal derives, after receiving the RRC reconfiguration message, a key corresponding to each access network devices. A specific occasion on which the terminal derives the key is not limited in this embodiment of this application. For example, the terminal may alternatively derive, after receiving the first MAC layer message, the key for communication between the terminal and the second access network device.

Optionally, after the terminal switches from the first access network device to the second access network device, the method further includes the following steps.

S809: The second access network device determines that a third access network device to which the terminal needs to switch is an access network device to which switching has not been performed in the consecutive-LTM-switching process for the terminal.

For example, the second access network device may determine whether the third access network device belongs to the third candidate access network device list. If the third access network device belongs to the third candidate access network device list, the second access network device determines that the third access network device is the access network device to which switching has not been performed in the consecutive-LTM-switching process for the terminal. If the third access network device does not belong to the third candidate access network device list, the second access network device determines that the third access network device is the access network device to which switching has not been performed in the consecutive-LTM-switching process for the terminal.

It may be understood that, in another embodiment, the first access network device may send the identifiers of the plurality of candidate access network devices and a fifth candidate access network device list to the second access network device, where the fifth candidate access network device list includes an access network device to which switching has been performed in the consecutive-LTM-switching process for the terminal. In this case, the second access network device may first determine whether the third access network device belongs to the plurality of candidate access network devices. If the third access network device belongs to the plurality of candidate access network devices, the second access network device further determines whether the third access network device belongs to the fifth candidate access network device list (if the third access network device does not belong to the plurality of candidate access network devices, normal handover is performed). If the third access network device does not belong to the fifth candidate access network device list, the second access network device determines that the third access network device is the access network device to which switching has not been performed in the consecutive-LTM-switching process for the terminal. If the third access network device belongs to the fifth candidate access network device list, the second access network device determines that the third access network device is the access network device to which switching has not been performed in the consecutive-LTM-switching process for the terminal.

In addition, in this embodiment, that the second access network device determines, depending on "whether the third access network device is the access network device to which switching has not been performed in the consecutive-LTM-switching process for the terminal", whether to perform inter-station LTM switching or inter-station normal handover is used an example for description. In another possible embodiment, the second access network device may alternatively determine, based on a value of an NCC and/or the quantity of consecutive times of LTM switching, whether to perform inter-station LTM switching or inter-station normal handover. For example, if the third access network device is the access network device to which switching has not been performed in the consecutive-LTM-switching process for the terminal, an NCC (namely, an NCC obtained from the path switch response message) stored in the second access network device is not a preset value, and the quantity of consecutive times of LTM switching is less than the threshold, inter-station LTM switching may be performed; otherwise (for example, at least one of that the third access network device is the access network device to which switching has been performed in the consecutive-LTM-switching process for the terminal, that an NCC stored in the second access network device is a preset value, and that the quantity of consecutive times of LTM switching is greater than or equal to the threshold is satisfied), inter-station normal handover may be performed.

S810: The second access network device sends a fourth candidate access network device list to the third access network device, where the fourth candidate access network device list includes an identifier of an access network device to which switching has not been performed in the consecutive-LTM-switching process for the terminal.

For example, the fourth candidate access network device list includes the identifier of the access network device in the plurality of candidate access network devices other than the second access network device. That is, a candidate access network device list sent by a source access network device to a target access network device does not include the source access network device.

In another example, because the terminal is to switch to the third access network device, the fourth candidate access network device list includes an identifier of an access network device in the plurality of candidate access network devices other than the second access network device and the third access network device. That is, a candidate access network device list sent by a source access network device to a target access network device does not include the source access network device and the target access network device.

S811: The second access network device sends a second MAC layer message to the terminal, where the second MAC layer message is for triggering the terminal to switch to the third access network device.

Optionally, in response to the second MAC layer message, the terminal may delete context information related to the second access network device, for example, delete the key for communication between the terminal and the second access network device.

S812: The terminal switches to the third access network device based on a parameter in a container constructed by the third access network device.

Optionally, after the terminal switches to the third access network device, the third access network device may send a path switch request message to the AMF network element. Accordingly, the AMF network element may send a path switch response message to the third access network device based on the path switch request message.

S813: The terminal determines, based on the first NCC, a key for communication with the third access network device, and communicates with the third access network device based on the key.

According to the foregoing method, because the container constructed by each of the plurality of candidate access network devices carries the first NCC, after switching to any one of the access network devices, the terminal determines, based on the first NCC carried in a container constructed by the access network device (and information about a cell of the access network device), a key for communication between the terminal and the access network device. The implementation is simple and convenient. When LTM switching is to be performed, a source access network device may determine whether a target access network device is an access network device to which switching has not been performed in the consecutive-LTM-switching process for the terminal. If the target access network device is the access network device to which switching has not been performed in the consecutive-LTM-switching process for the terminal, inter-station LTM switching may be performed. If the target access network device is the access network device to which switching has been performed in the consecutive-LTM-switching process for the terminal, inter-station normal handover is performed. In this way, a key reuse problem does not occur when the terminal switches between the plurality of candidate access network devices.

Based on Embodiment 4, the following describes a possible implementation procedure with reference to Embodiment 5. In Embodiment 5, an example in which the "first access network device" in Embodiment 4 is an access network device 0, the "second access network device" in Embodiment 4 is an access network device 1, and the "third access network device" in Embodiment 4 is an access network device 2 is used for description.

### Embodiment 5

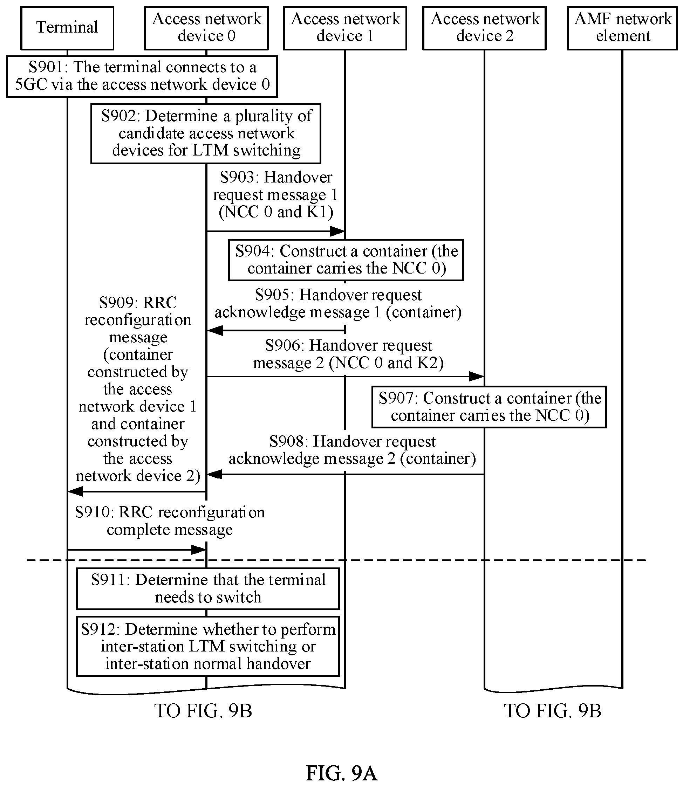

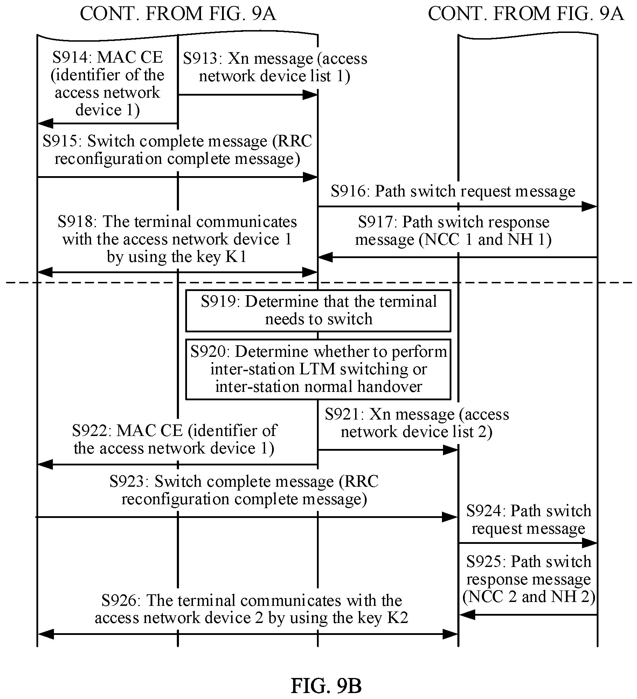

FIG. 9A and FIG. 9B are a diagram of a procedure corresponding to a communication method according to an embodiment of this application. As shown in FIG. 9A and FIG. 9B, the procedure includes the following steps.

S901: A terminal connects to a 5GC via an access network device 0.

The terminal may access the access network device 0 by using a procedure like an initial access procedure, a normal handover procedure, a reestablishment procedure, or a cell reselection procedure, and access the 5GC via the access network device 0. Then, the terminal and the access network device 0 separately store a key KgNB (referred to as K0 for ease of description) and an NCC 0 (K0 is associated with the NCC 0), and an AMF network element stores the NCC 0.

S902: The access network device 0 determines a plurality of candidate access network devices for LTM switching.

For descriptions herein, refer to S402.

In this procedure, an example in which the plurality of candidate access network devices for LTM switching include an access network device 1, an access network device 2, ..., and an access network device 5 is used for description.

S903: The access network device 0 sends a handover request message 1 to the access network device 1. Accordingly, the access network device 1 receives the handover request message 1 from the access network device 0.

The access network device 0 derives the key K1 based on K0, and a PCI and a frequency of a cell of the access network device 1. The handover request message 1 includes the NCC 0 and the key K1. After receiving the handover request message 1, the access network device 1 may store the NCC 0 and the key K1.

S904: The access network device 1 constructs a container.

If the access network device 1 allows the terminal to perform LTM switching, the access network device 1 may construct the container. The container carries an identifier of the access network device 1, the NCC 0, and configuration information, and the configuration information includes a parameter for the terminal to switch to the access network device 1.

S905: The access network device 1 sends a handover request acknowledge message 1 to the access network device 0. Accordingly, the access network device 0 receives the handover request acknowledge message 1 from the access network device 1.

The handover request acknowledge message 1 includes the container constructed by the access network device 1.

S906: The access network device 0 sends a handover request message 2 to the access network device 2. Accordingly, the access network device 2 receives the handover request message 2 from the access network device 0.

The access network device 0 derives a key K2 based on K0, and a PCI and a frequency of a cell of the access network device 2. The handover request message 2 includes the NCC 0 and the key K2. After receiving the handover request message 2, the access network device 2 may store the NCC 0 and the key K2.

S907: The access network device 2 constructs a container.

If the access network device 2 allows the terminal to perform LTM switching, the access network device 2 may construct the container. The container carries an identifier of the access network device 2, the NCC 0, and configuration information, and the configuration information includes a parameter for the terminal to switch to the access network device 2.

S908: The access network device 2 sends a handover request acknowledge message 2 to the access network device 0. Accordingly, the access network device 0 receives the handover request acknowledge message 2 from the access network device 1.

The handover request acknowledge message 2 includes the container constructed by the access network device 2.

It may be understood that the foregoing describes only that the access network device 0 sends the handover request messages to the access network device 1 and the access network device 2. The access network device 0 may further send handover request information to another candidate access network device for LTM switching. For a specific implementation, refer to S903 to S908. Details are not described again.

S909: The access network device 0 sends an RRC reconfiguration message to the terminal, where the RRC reconfiguration message carries the container constructed by the access network device 1 and the container constructed by the access network device 2. Accordingly, the terminal receives the RRC reconfiguration message.

The terminal obtains, from the RRC reconfiguration message, the container constructed by the access network device 1 and the container constructed by the access network device 2. Further, the terminal may obtain the NCC 0 from the container constructed by the access network device 1. Because the obtained NCC 0 is the same as the NCC 0 locally stored in the terminal, the terminal may perform horizontal derivation, that is, derive the key K1 based on K0, and the PCI and the frequency of the cell of the access network device 1, and store a correspondence between the key K1 and the identifier of the access network device 1 (for example, store the correspondence in context information related to the access network device 1). The terminal may obtain the NCC 0 from the container constructed by the access network device 2. Because the obtained NCC 0 is the same as the NCC 0 locally stored in the terminal, the terminal may perform horizontal derivation, that is, derive the key K2 based on K0, and the PCI and the frequency of the cell of the access network device 2, and store a correspondence between the key K2 and the identifier of the access network device 2 (for example, store the correspondence in context information related to the access network device 2).

S910: The terminal sends an RRC reconfiguration complete message to the access network device 0. Accordingly, the access network device 0 receives the RRC reconfiguration complete message from the terminal.

S911: The access network device 0 determines that the terminal needs to switch, and a target access network device to which the terminal switches is the access network device 1.

S912: The access network device 0 determines whether to perform inter-station LTM switching or inter-station normal handover.

If the target access network device (namely, the access network device 1) is an access network device to which switching has not been performed in a consecutive-LTM-switching process for the terminal, the access network device 0 may determine to perform inter-station LTM switching. If the target access network device is an access network device to which switching has been performed in a consecutive-LTM-switching process for the terminal, the access network device 0 may determine to perform inter-station normal handover. In this procedure, because the access network device 1 is the access network device to which switching has not been performed in the consecutive-LTM-switching process for the terminal, the access network device 0 may determine to perform inter-station LTM switching.

S913: The access network device 0 sends an Xn message to the access network device 1. Accordingly, the access network device 1 receives the Xn message from the access network device 0.

The Xn message may include an access network device list 1 (namely, the third candidate access network device list in Embodiment 4), and the access network device list 1 may include an identifier of at least one candidate access network device for LTM switching. As described above, the access network device 0 determines the plurality of candidate access network devices (for example, the access network device 1 to the access network device 5) for LTM switching, and the access network device list 1 may include a part or all of the plurality of candidate access network devices.

All access network devices in the access network device list 1 may be access network devices to which switching has not been performed in the consecutive-LTM-switching process for the terminal. For example, the access network device list includes the access network device 1 to the access network device 5.

S914: The access network device 0 sends a switch command message to the terminal. Accordingly, the terminal receives the switch command message from the access network device 0.

The switch command message is a MAC layer message, for example, a MAC CE. The switch command message includes an identifier of the target access network device, namely, the identifier of the access network device 1.

S915: The terminal is detached from the access network device 0, and sends a switch complete message to the access network device 1. Accordingly, the access network device 1 receives the switch complete message from the terminal.

The switch complete message may be an RRC reconfiguration complete message.

The terminal may obtain, based on the identifier of the access network device 1 in the switch command message (namely, the MAC CE), the previously stored container constructed by the access network device 1, thereby sending the switch complete message to the access network device 1.

S916: The access network device 1 sends a path switch request message to the AMF network element. Accordingly, the AMF network element receives the path switch request message.

S917: The AMF network element sends a path switch response message to the access network device 1. Accordingly, the access network device 1 receives the path switch response message, to complete path switching.

Herein, the path switching means that a data transmission path of the terminal is switched from "UPF network element-access network device 0-terminal" to "UPF network element-access network device 1-terminal".

Optionally, after receiving the path switch request message, the AMF network element may update the locally stored NCC value by increasing the NCC value by 1, to obtain an updated NCC (referred to as an NCC 1), thereby performing vertical derivation based on the updated NCC, to obtain an updated NH (referred to as an NH 1). The NCC 1 and the NH 1 are associated with each other, and are used as an updated {NH 1, NCC 1} pair.

The path switch response message includes {NH 1, NCC 1}. After receiving the path switch response message, the access network device 1 stores {NH 1, NCC 1}.

S918: The terminal communicates with the access network device 1 by using the key K1.

The terminal may obtain, based on the identifier of the access network device 1 in the switch command message (namely, the MAC CE), the previously stored key K1 corresponding to the identifier of the access network device 1, and the access network device 1 also receives the key K1 via the handover request message. Therefore, the terminal may communicate with the access network device 1 by using the key K1.

S919: The access network device 1 determines that the terminal needs to switch, and a target access network device to which the terminal switches is the access network device 2.

S920: The access network device 1 determines whether to perform inter-station LTM switching or inter-station normal handover.

The access network device 1 may determine whether the target access network device (namely, the access network device 2) is an access network device to which switching has not been performed in the consecutive-LTM-switching process for the terminal. For example, if the access network device 2 belongs to the access network devices in the access network device list 1, it indicates that the access network device 2 is the access network device to which switching has not been performed in the consecutive-LTM-switching process for the terminal, it may be determined to perform inter-station LTM switching. If the access network device 2 does not belong to the access network devices in the access network device list 1, it may be determined to perform inter-station normal handover.

In this embodiment, because the access network device 2 belongs to the access network devices in the access network device list 1, the access network device 1 may determine to perform inter-station LTM switching.

S921: The access network device 1 sends an Xn message to the access network device 2. Accordingly, the access network device 2 receives the Xn message from the access network device 1.

The Xn message may include an access network device list 2 (namely, the fourth candidate access network device list in Embodiment 4), and all access network devices in the access network device list 2 may be access network devices to which switching has not been performed in the consecutive-LTM-switching process for the terminal. For example, because the access network device 1 is the access network device to which switching has not been performed in the consecutive-LTM-switching process for the terminal, the access network device 1 may delete the identifier of the access network device 1 from the access network device list 1, to obtain the access network device list 2. That is, the access network device list 2 may include the access network device 2 to the access network device 5.

S922: The access network device 1 sends a switch command message to the terminal. Accordingly, the terminal receives the switch command message from the access network device 1.

The switch command message is a MAC layer message, for example, a MAC CE. The switch command message includes an identifier of the target access network device, namely, the identifier of the access network device 2.

S923: The terminal is detached from the access network device 1, and sends a switch complete message to the access network device 2. Accordingly, the access network device 2 receives the switch complete message from the terminal.

The switch complete message may be an RRC reconfiguration complete message.

The terminal may obtain, based on the identifier of the access network device 2 in the switch command message (namely, the MAC CE), the previously stored container constructed by the access network device 2, thereby accessing the cell of the access network device 2 based on the container, and sending the switch complete message to the access network device 2.

S924: The access network device 2 sends a path switch request message to the AMF network element. Accordingly, the AMF network element receives the path switch request message.

S925: The AMF network element sends a path switch response message to the access network device 2. Accordingly, the access network device 2 receives the path switch response message, to complete path switching.

Herein, the path switching means that a data transmission path of the terminal is switched from "UPF network element-access network device 1-terminal" to "UPF network element-access network device 2-terminal".

Optionally, after receiving the path switch request message, the AMF network element may update the locally stored NCC value by increasing the NCC value by 1, to obtain an updated NCC (referred to as an NCC 2), thereby performing vertical derivation based on the updated NCC, to obtain an updated NH (referred to as an NH 2). The NCC 2 and the NH 2 are associated with each other, and are used as an updated {NH 2, NCC 2} pair.

The path switch response message includes {NH 2, NCC 2}. After receiving the path switch response message, the access network device 1 may store {NH 2, NCC 2}.

S926: The terminal communicates with the access network device 2 by using the key K2.

The terminal may obtain, based on the identifier of the access network device 2 in the switch command message (namely, the MAC CE), the previously stored key K1 corresponding to the identifier of the access network device 2, and the access network device 2 also receives the key K2 via the handover request message. Therefore, the terminal may communicate with the access network device 2 by using the key K2.

It may be understood that the terminal may further switch from the access network device 2 to another access network device (for example, the access network device 3) subsequently. For a specific implementation, refer to the descriptions in which the terminal switches from the access network device 1 to the access network device 2.

The foregoing procedure is described by using an example in which "an access network device list sent by a source access network device to a target access network device does not include the source access network device but includes the target access network device". In another possible example, an access network device list sent by a source access network device to a target access network device may alternatively not include the source access network device and the target access network device. For example, in S913, the access network device list 1 sent by the access network device 0 to the access network device 1 includes the access network device 2 to the access network device 5. In S921, the access network device list 2 sent by the access network device 1 to the access network device 2 includes the access network device 3 to the access network device 5. This is because the terminal is to switch to the target access network device through LTM switching. Therefore, the access network device list may no longer include the target access network device, to help reduce transmission overheads.

In addition, the procedure shown in FIG. 9A and FIG. 9B corresponds to the procedure shown in FIG. 8, and the steps of the two procedures may be mutually referenced. For example, for S801 and S802, refer to S902 to S908; for S803, refer to S909; for S804, refer to S911 and S912; for S805, refer to S913; for S806, refer to S914; for S807, refer to S915; for S808, refer to S918; for S809, refer to S919 and S920; for S810, refer to S921; for S811, refer to S922; for S812, refer to S923; and for S813, refer to S926.

According to the foregoing method, the access network device 0 may send, via a handover request message, the NCC 0 and a corresponding key to each candidate access network device for LTM switching, and the terminal obtains, through horizontal derivation based on the NCC 0 carried in a container constructed by the candidate access network device for LTM switching, the key corresponding to the candidate access network device, and stores the key. Subsequently, when switching to the candidate access network device through LTM switching, the terminal may use the corresponding key. Further, the access network device 1 is used as an example. When the terminal switches from the access network device 0 to the access network device 1, the access network device 1 may receive the access network device list 1, where the access network device list 1 includes an access network device to which switching has not been performed in the consecutive-LTM-switching process for the terminal. When determining that the terminal needs to switch to the access network device 2, the access network device 1 may determine, based on the access network list 1, whether the access network device 2 is the access network device to which switching has not been performed in the consecutive-LTM-switching process for the terminal. If the access network device 2 is the access network device to which switching has not been performed in the consecutive-LTM-switching process for the terminal, inter-station LTM switching may be performed. If the access network device 2 is the access network device to which switching has been performed in the consecutive-LTM-switching process for the terminal, inter-station normal handover is performed, so that the terminal does not repeatedly switch to a same access network device through inter-station LTM switching, to avoid a key reuse problem.

For the solution 2, the procedure shown in FIG. 9A and FIG. 9B is used as an example. It may be understood that:
1. In S909, that "the terminal derives, after obtaining, from the RRC reconfiguration message, the container constructed by the access network device 1 and the container constructed by the access network device 2, the key corresponding to each access network device" is used as an example for description. In another possible example, the terminal may alternatively derive, after receiving a switch command message, a key corresponding to a current target access network device. For example, after receiving the switch command message in S914, the terminal may derive the key corresponding to the access network device 1. For another example, after receiving the switch command message in S922, the terminal may derive the key corresponding to the access network device 2. In this case, because the key K0 is needed for deriving the key corresponding to the target access network device (for example, the access network device 1 or the access network device 2), after the terminal is detached from the access network device 0, the key K0 may not be deleted. In this case, the terminal may need to derive only a key corresponding to a part of the plurality of candidate access network devices. For example, if the terminal does not switch to a candidate access network device, the terminal does not need to derive a key corresponding to the candidate access network device.
2. The access network device 1 is used as an example. In S912, that the access network device 1 determines, depending on "whether the access network device 2 is the access network device to which switching has not been performed in the consecutive-LTM-switching process for the terminal", whether to perform inter-station LTM switching or inter-station normal handover is used an example for description. In another possible example, when determining that the terminal needs to switch, the access network device 1 may alternatively determine, based on a value of the NCC 1 and/or a quantity of consecutive times of LTM switching, whether to perform inter-station LTM switching or inter-station normal handover.

For example, if at least one of the following three items is satisfied, the access network device 1 may determine to perform inter-station normal handover. If none of the following three items is satisfied, the access network device 1 may determine to perform inter-station LTM switching.
(1) The selected target access network device is an access network device to which switching has been performed in the consecutive-LTM-switching process for the terminal.
(2) The value of the NCC is a preset value, where the preset value may include 0 and 7.
(3) The quantity of consecutive times of LTM switching is greater than or equal to a threshold. The threshold may be determined based on the NCC 0. For example, the threshold may be equal to a maximum value of the NCC minus the NCC 0, or the maximum value of NCC minus the NCC 0 plus 1. For example, if the NCC 0 is 0, the threshold may be 7 or 8. For example, an initial value of the quantity of consecutive times of LTM switching may be 0. After determining to perform inter-station LTM switching, the access network device 0 may increase the value of the quantity of consecutive times of LTM switching by 1, and send a quantity of consecutive times of LTM switching to the access network device 1. That is, the access network device 1 may obtain the quantity of consecutive times of LTM switching from the access network device 0. When normal handover is to be performed, the quantity of consecutive times of LTM switching may be reset to 0.

The following describes a reason for "whether to perform inter-station LTM switching or inter-station normal handover may be determined based on the value of NCC 1" (for the quantity of consecutive times of LTM switching, refer to this for understanding):
Overheads of an NCC on an air interface are only three bits. That is, transmission of only the NCC 0 to an NCC 7 can be performed on the air interface (that is, a maximum value of the NCC is 7). Therefore, if a value of an NCC on a network side is greater than the maximum value that can be represented on the air interface, for example, NCC 8>NCC 7, the value of the NCC wraps around on the air interface. For example, a value of the NCC on the air interface is a result of the value of the NCC on the network side modulo 8, for example, wraps around from the NCC 8 to the NCC 0.

It can be learned from the procedure shown in FIG. 9A and FIG. 9B that, when inter-station LTM switching is performed, an access network device does not send an NCC to the terminal. Therefore, the terminal does not sense an update of the NCC on the network side (for example, the AMF network element). That is, an NCC locally stored in the terminal is always the NCC 0.

It is assumed that when a 1^{st} time of inter-station LTM switching is performed, the NCC on the AMF network element is updated from the NCC 0 to the NCC 1, and {NH 1, NCC 1} is sent to the current target access network device via the path switch response message; when a 2^{nd} time of inter-station LTM switching is performed, the NCC on the AMF network element is updated from the NCC 1 to the NCC 2, and {NH 2, NCC 2} is sent to the current target access network device via the path switch response message; and by analogy, when a 9^{th} time of inter-station LTM switching is performed, an NCC on the AMF network element is updated to the NCC 1, and {NH 9, NCC 1} is sent to a current target access network device via a path switch response message.

If a 10^{th} time of handover is inter-station normal handover, a source access network device (namely, a target access network device for an 8^{th} time of switching) sends the NCC 1 to the terminal via a switch command message. In this case, from a perspective of the terminal, a difference between the NCC 1 obtained by the terminal and the NCC 0 locally stored by the terminal is 1. Consequently, the network side and the terminal have inconsistent understandings of the difference that is before and after the value of the NCC is updated. As a result, keys derived by the terminal and the access network device are inconsistent, which affects communication between the terminal and the access network device.

Therefore, in this embodiment of this application, it is proposed that when a value of an NCC is the preset value (the preset value may include 0 and 7), that is, when the NCC is about to wrap around (the value is 7) or has just wrapped around (the value is 0), inter-station normal handover may be performed, thereby sending an updated NCC to the terminal via a handover command message, to help ensure that keys subsequently derived by the terminal and an access network device are consistent.

### Embodiment 6

In Embodiment 6, the solution 3 is described in detail.

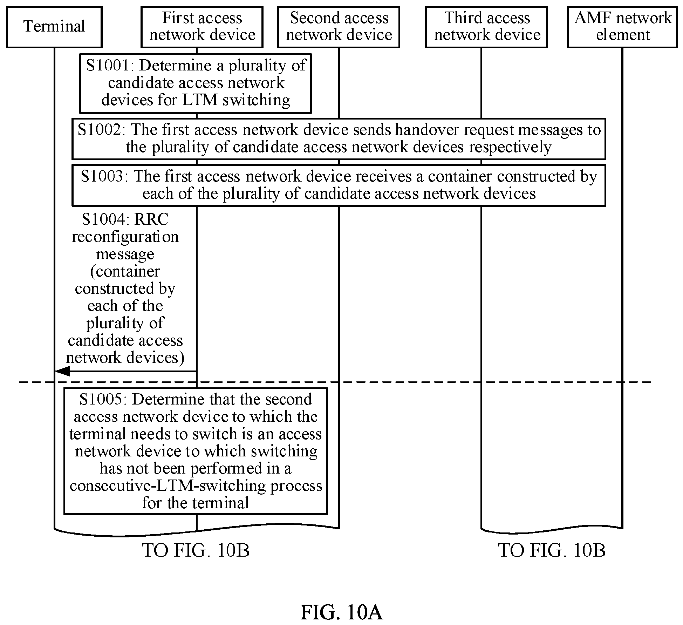

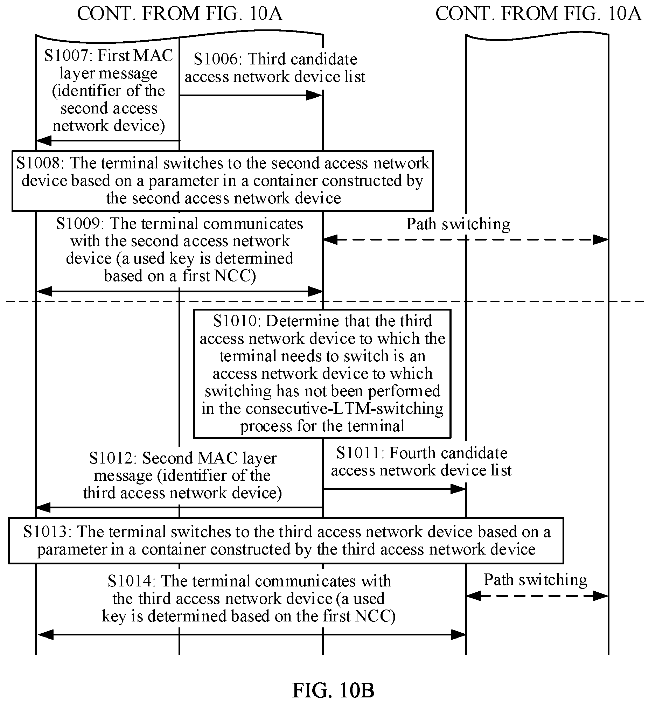

FIG. 10A and FIG. 10B are a diagram of a procedure corresponding to a communication method according to an embodiment of this application. As shown in FIG. 10A and FIG. 10B, the procedure may include the following steps.

S1001: A first access network device determines a plurality of candidate access network devices for LTM switching.

Herein, the first access network device may be an access network device accessed by a terminal by using a procedure like an initial access procedure, a normal handover procedure, a reestablishment procedure, or a cell reselection procedure. The first access network device and the terminal may store a same key (the key is for communication between the first access network device and the terminal) and a same NCC (for example, a first NCC).

Optionally, a quantity of the plurality of candidate access network devices determined by the first access network device is less than or equal to a threshold. For example, the threshold is determined based on the NCC (namely, the first NCC) stored in the first access network device. For example, the threshold is equal to a maximum value of an NCC minus the first NCC. In other words, the quantity of the candidate access network devices determined by the first access network device should be less than or equal to the threshold, to avoid that NCCs corresponding to different access network devices are the same subsequently.

S1002: The first access network device sends handover request messages to the plurality of candidate access network devices respectively, where the handover request messages are for requesting the plurality of candidate access network devices to construct containers.

For example, the handover request message includes indication information, and the indication information indicates that the handover request message corresponds to LTM switching.

A second access network device in the plurality of candidate access network devices is used as an example. After receiving a handover request message, the second access network device sends a request message to an AMF network element in response to the handover request message, where the request message is for requesting an NCC corresponding to the second access network device. Then, the AMF network element updates, based on the request message, the locally stored NCC value by increasing the NCC value by 1, to obtain an updated NCC (namely, a second NCC), thereby performing vertical derivation based on the updated NCC, to obtain an NH corresponding to the second NCC; and sends a response message to the first access network device, where the response message includes the second NCC and the NH corresponding to the second NCC.

Further, the second access network device constructs a container. The container includes a parameter for the terminal to switch to the second access network device, and further includes the NCC (namely, the second NCC) corresponding to the second access network device and an identifier of the second access network device. The second access network device sends a handover request acknowledge message to the first access network device, where the handover request acknowledge message includes the container constructed by the second access network device.

Optionally, after receiving the second NCC and the NH corresponding to the second NCC, the second access network device may determine, based on the NH corresponding to the second NCC, a cell of the second access network device, and a frequency, a key for communication between the second access network device and the terminal. A specific occasion on which the second access network device determines the key is not limited in this embodiment of this application.

The foregoing is described by using the second access network device in the plurality of candidate access network devices as an example. For another access network device in the plurality of candidate access network devices, refer to this for implementation. That is, the plurality of candidate access network devices all request respective corresponding NCCs from the AMF network element based on the handover request messages. Therefore, different access network devices in the plurality of candidate access network devices correspond to different NCCs.

S1003: The first access network device receives a container constructed by each of the plurality of candidate access network devices, where the container constructed by the access network device includes an NCC corresponding to the access network device.

S1004: The first access network device sends an RRC reconfiguration message to the terminal, where the RRC reconfiguration message includes the container constructed by each of the plurality of candidate access network devices.

Herein, the terminal obtains, from the RRC reconfiguration message, the containers constructed by the plurality of candidate access network devices, where the container constructed by each access network device includes the NCC corresponding to the access network device and an identifier of the access network device, so that the terminal obtains the NCCs respectively corresponding to the plurality of candidate access network devices. It may alternatively be understood as that the RRC reconfiguration message includes correspondences between identifiers of the plurality of candidate access network devices and the plurality of NCCs. The terminal may calculate NHs corresponding to the plurality of NCCs, and store correspondences between the NCCs and the NHs.

For example, the terminal sequentially derives, in ascending order of the NCCs, the NHs corresponding to the plurality of NCCs. If a value of a part of the plurality of NCCs is a value obtained through wrapping, a value that is of the part of the NCCs and on which wrapping is not performed may be first determined, and then sorting is performed based on the value on which wrapping is not performed. For example, an NCC currently stored in the terminal is 3. If values of the plurality of NCCs are 4, 5, 6, and 7, because the values of the plurality of NCCs are all greater than 3, that is, are values on which wrapping is not performed, sorting may be directly performed in ascending order based on 4, 5, 6, and 7. For another example, an NCC currently stored in the terminal is 3. If values of the plurality of NCCs are 4, 5, 6, 7, 0, and 1, because values (0 and 1) of a part of the NCCs are less than 3, that is, are values obtained through wrapping, values (8 and 9) on which wrapping is not performed may be first determined, and then sorting is performed in ascending order based on 4, 5, 6, 7, 8, and 9.

The terminal may store a correspondence between at least two of an identifier of an access network device, an NCC, and an NH. A specific implementation is not limited. For example, the terminal may store a correspondence between the identifier of the access network device and the NH, or the terminal may store a correspondence between the identifier of the access network device and the NCC and a correspondence between the NCC and the NH.

Optionally, the second access network device is used as an example. The terminal may derive, based on the NH corresponding to the NCC (namely, the second NCC) corresponding to the second access network device, and a PCI and the frequency of the cell of the second access network device, the key for communication between the terminal and the second access network device. In this way, the terminal can obtain keys respectively corresponding to the plurality of candidate access network devices.

S1001 to S1004 may be understood as a switching preparation process. For a related implementation, refer to the descriptions in Embodiment 1.

S1005: The first access network device determines that the second access network device to which the terminal needs to switch is an access network device to which switching has not been performed in a consecutive-LTM-switching process for the terminal.

For example, for a specific implementation of S1005, refer to the descriptions in S804.

S1006: The first access network device sends a third candidate access network device list to the second access network device, where the third candidate access network device list includes an identifier of an access network device to which switching has not been performed in the consecutive-LTM-switching process for the terminal.

S1007: The first access network device sends a first MAC layer message to the terminal, where the first MAC layer message is for triggering the terminal to switch to the second access network device.

Herein, the first MAC layer message may include the identifier of the second access network device.

Optionally, in response to the first MAC layer message, the terminal may delete context information related to the first access network device, for example, delete the first NCC and the key for communication between the terminal and the first access network device.

S1008: The terminal switches to the second access network device based on the parameter in the container constructed by the second access network device.

S1009: The terminal communicates with the second access network device based on the key for communication between the terminal and the second access network device.

Herein, several implementations in which the terminal obtains the key for communication between the terminal and the second access network device are described in detail.

Implementation 1: If after receiving the RRC reconfiguration message, the terminal determines the keys respectively corresponding to the plurality of candidate access network devices, and stores correspondences between the identifiers of the plurality of candidate access network devices and the plurality of keys, in S1009, the terminal may obtain, based on the identifier of the second access network device carried in the first MAC layer message and the correspondences between the identifiers of the plurality of candidate access network devices and the plurality of keys, the key corresponding to the second access network device.

Implementation 2: If after receiving the RRC reconfiguration message, the terminal determines the NHs corresponding to the plurality of NCCs, and stores correspondences between the identifiers of the plurality of candidate access network devices and the plurality of NHs, in S1009, the terminal may obtain, based on the identifier of the second access network device carried in the first MAC layer message and the correspondences between the identifiers of the plurality of candidate access network devices and the plurality of NHs, the NH corresponding to the second access network device, and then derive, based on the NH corresponding to the second access network device, and the PCI and the frequency of the cell of the second access network device, the key for communication between the terminal and the second access network device.

Implementation 3: If after receiving the RRC reconfiguration message, the terminal determines the NHs corresponding to the plurality of NCCs, and stores the correspondences between the identifiers of the plurality of candidate access network devices and the plurality of NCCs and the correspondences between the plurality of NCCs and the plurality of NHs, in S1009, the terminal may obtain, based on the identifier of the second access network device carried in the first MAC layer message and the correspondences between the identifiers of the plurality of candidate access network devices and the plurality of NCCs, the NCC corresponding to the second access network device; obtain, based on the NCC corresponding to the second access network device and the correspondences between the plurality of NCCs and the plurality of NHs, the NH corresponding to the second access network device; and then derive, based on the NH corresponding to the second access network device, and the PCI and the frequency of the cell of the second access network device, the key for communication between the terminal and the second access network device.

Implementation 4: If after receiving the RRC reconfiguration message, the terminal stores the correspondences between the identifiers of the plurality of candidate access network devices and the plurality of NCCs (an NH and a key are not derived), in S1009, the terminal may obtain, based on the identifier of the second access network device carried in the first MAC layer message and the correspondences between the identifiers of the plurality of candidate access network devices and the plurality of NCCs, the NCC (namely, the second NCC) corresponding to the second access network device, then derive the NH corresponding to the second NCC, and derive, based on the NH corresponding to the second NCC, and the PCI and the frequency of the cell of the second access network device, the key for communication between the terminal and the second access network device.

For example, after obtaining the identifier of the second access network device from the first MAC layer message, a MAC layer of the terminal may transfer the identifier of the second access network device to an RRC layer, and then the RRC layer of the terminal may obtain, based on the identifier of the second access network device, the key for communication between the terminal and the second access network device (for example, obtain, based on any one of the implementation 1 to the implementation 4, the key for communication between the terminal and the second access network device), and then communicate with the second access network device based on the key.

Optionally, after the terminal switches from the first access network device to the second access network device, the method further includes the following steps.

S1010: The second access network device determines that a third access network device to which the terminal needs to switch is an access network device to which switching has not been performed in the consecutive-LTM-switching process for the terminal.

For example, for a specific implementation of S1010, refer to the descriptions in S809.

S1011: The second access network device sends a fourth candidate access network device list to the third access network device, where the fourth candidate access network device list includes an identifier of an access network device to which switching has not been performed in the consecutive-LTM-switching process for the terminal.

S1012: The second access network device sends a second MAC layer message to the terminal, where the second MAC layer message is for triggering the terminal to switch to the third access network device.

Optionally, in response to the second MAC layer message, the terminal may delete context information related to the second access network device, for example, delete the NCC, the NH, and the key that correspond to the second access network device.

S1013: The terminal switches to the third access network device based on a parameter in a container constructed by the third access network device.

S1014: The terminal communicates with the third access network device based on a key for communication between the terminal and the third access network device.

For a related implementation of S1005 to S1014, refer to the descriptions in S804 to S813 in Embodiment 4.

It may be understood that, if the terminal derives, after receiving a switch command message, a key corresponding to a current target access network device, the terminal may need to derive only a key corresponding to a part of the plurality of candidate access network devices. For example, if the terminal does not switch to a candidate access network device, the terminal does not need to derive a key corresponding to the candidate access network device. For details, refer to the descriptions in Embodiment 5.

According to the foregoing method, in the switching preparation process, each of the plurality of candidate access network devices may obtain a corresponding NCC from the AMF network element, and encapsulate the NCC into a container, and then the terminal may determine, based on the NCC in the container constructed by the candidate access network device, a key for communication between the terminal and the candidate access network device. Because different candidate access network devices correspond to different NCCs, one-hop security can be implemented. In addition, a source access network device may determine whether a target access network device is an access network device to which switching has not been performed in the consecutive-LTM-switching process for the terminal. If the target access network device is the access network device to which switching has not been performed in the consecutive-LTM-switching process for the terminal, inter-station LTM switching may be performed. If the target access network device is the access network device to which switching has been performed in the consecutive-LTM-switching process for the terminal, inter-station normal handover is performed. In this way, a key reuse problem does not occur when the terminal switches between the plurality of access network devices.

Based on Embodiment 6, the following describes a possible implementation procedure with reference to Embodiment 7. In Embodiment 7, an example in which the "first access network device" in Embodiment 4 is an access network device 0, the "second access network device" in Embodiment 4 is an access network device 1, and the "third access network device" in Embodiment 4 is an access network device 2 is used for description.

### Embodiment 7

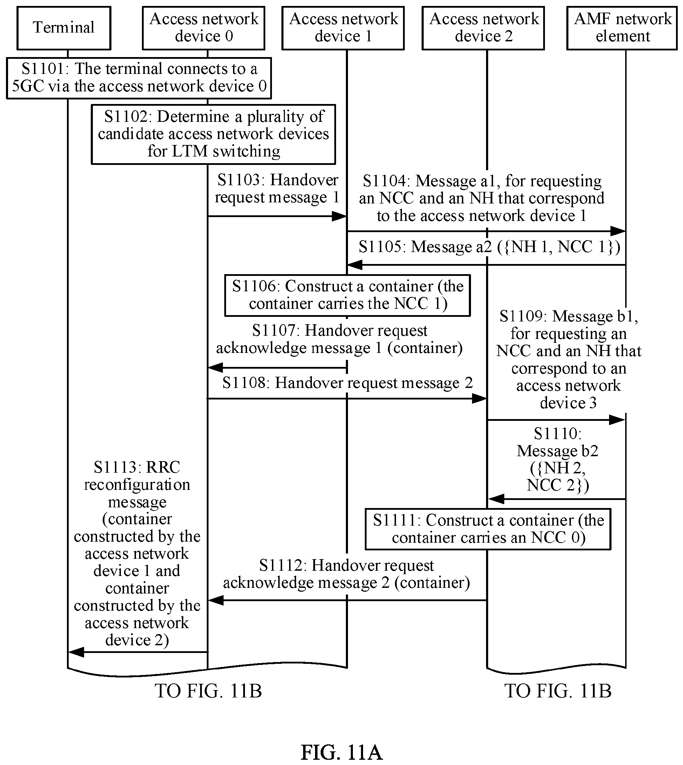

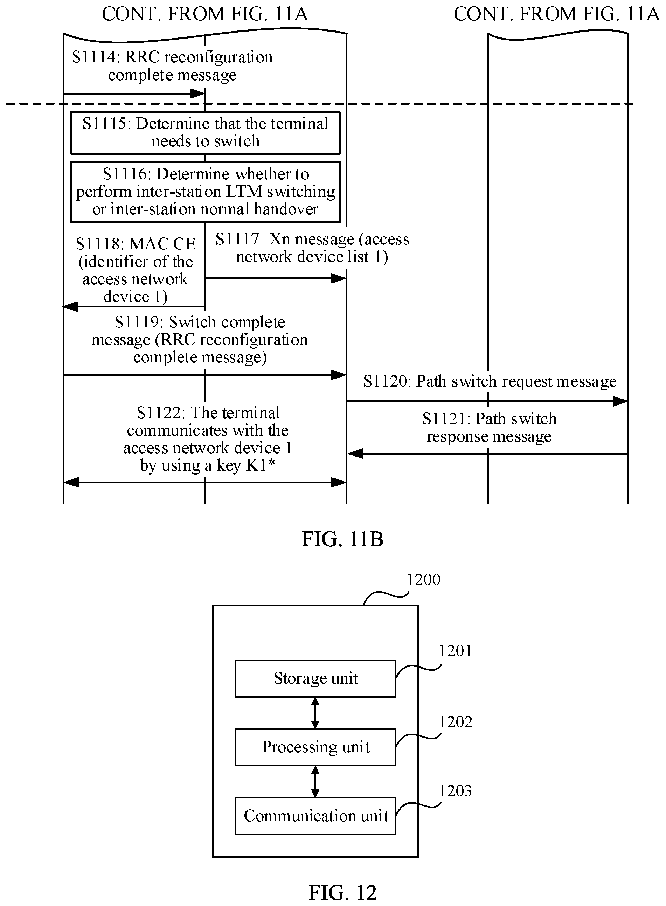

FIG. 11A and FIG. 11B are a diagram of a procedure corresponding to a communication method according to an embodiment of this application. As shown in FIG. 11A and FIG. 11B, the procedure may include the following steps.

S1101: A terminal connects to a 5GC via an access network device 0.

The terminal may access the access network device 0 by using an initial access procedure, and access the 5GC via the access network device 0, to complete attachment. Then, the terminal and the access network device 0 separately store a key KgNB (referred to as K0 for ease of description) and an NCC 0 (K0 is associated with the NCC 0), and an AMF network element stores the NCC 0.

S1102: The access network device 0 determines a plurality of candidate access network devices for LTM switching.

Optionally, the access network device 0 may determine, based on the NCC 0, a maximum quantity M of the candidate access network devices for LTM switching, where the maximum quantity is less than or equal to a maximum value of an NCC minus the NCC 0. In other words, a quantity of the candidate access network devices that are for LTM switching and that are determined by the access network device 0 should be less than or equal to M, to avoid that NCCs corresponding to different access network devices are the same subsequently.

The access network device 0 may determine, according to the method described in S402, the plurality of candidate access network devices for LTM switching. In this procedure, an example in which the plurality of candidate access network devices for LTM switching include an access network device 1, an access network device 2, ..., and an access network device 5 is used for description.

S1103: The access network device 0 sends a handover request message 1 to the access network device 1. Accordingly, the access network device 1 receives the handover request message 1 from the access network device 0.

S1104: The access network device 1 sends a message a1 to the AMF network element, where the message a1 is for requesting an NCC and an NH that correspond to the access network device 1. Accordingly, the AMF network element receives the message a1.

If the access network device 1 allows the terminal to perform LTM switching, the access network device 1 may send the message a1 to the AMF network element. If the access network device 1 does not allow the terminal to perform LTM switching, the access network device 1 may not send the message a1.

S1105: The AMF network element sends a message a2 to the access network device 1, where the message a2 includes the NCC and the NH that correspond to the access network device 1. Accordingly, the access network device 1 receives the message a2 from the AMF network element.

The message a1 may be a specific message dedicated to requesting the NCC and the NH that correspond to the access network device 1. Alternatively, the message a1 includes request information, and the request information is for requesting the NCC and the NH that correspond to the access network device 1. In this way, after receiving the message a1, the AMF network element may update the locally stored NCC value by increasing NCC value by 1, to obtain an updated NCC (referred to as an NCC 1), thereby performing vertical derivation based on the updated NCC, to obtain an updated NH (referred to as an NH 1). The NCC 1 and the NH 1 are associated with each other, and are used as an updated {NH 1, NCC 1} pair. The message a2 may include the NCC (namely, the NCC 1) and the NH (namely, the NH 1) that correspond to the access network device 1.

Optionally, after receiving the NH 1, the access network device 1 may derive a key K1^{*} based on the NH 1, and a PCI and a frequency of a cell of the access network device 1, and store the key K1^{*} (for example, store the key K1^{*} in context information related to the access network device 1). Execution time at which the access network device 1 derives the key K1^{*} is not limited in this embodiment of this application. For example, the access network device 1 may alternatively derive the key K1^{*} after receiving a switch complete message from the terminal.

S1106: The access network device 1 constructs a container.

The container carries an identifier of the access network device 1, the NCC 1, and configuration information, and the configuration information includes a parameter for the terminal to switch to the access network device 1. The NCC 1 carried in the container is obtained by the access network device 1 from the AMF network element (different from the solution 2 in which the NCC carried in the container is obtained from the source access network device).

S1107: The access network device 1 sends a handover request acknowledge message 1 to the access network device 0. Accordingly, the access network device 0 receives the handover request acknowledge message 1 from the access network device 1.

The handover request acknowledge message 1 includes the container constructed by the access network device 1.

S1108: The access network device 0 sends a handover request message 2 to the access network device 2. Accordingly, the access network device 2 receives the handover request message 2 from the access network device 0.

S1109: The access network device 2 sends a message b1 to the AMF network element, where the message b1 is for requesting an NCC and an NH that correspond to the access network device 2. Accordingly, the AMF network element receives the message b1.

If the access network device 2 allows the terminal to perform LTM switching, the access network device 2 may send the message b1 to the AMF network element. If the access network device 2 does not allow the terminal to perform LTM switching, the access network device 2 may not send the message b1.

S1110: The AMF network element sends a message b2 to the access network device 2, where the message b2 includes the NCC and the NH that correspond to the access network device 2. Accordingly, the access network device 2 receives the message a2 from the AMF network element.

The message b1 may be a specific message dedicated to requesting the NCC and the NH that correspond to the access network device 1. Alternatively, the message b1 includes request information, and the request information is for requesting the NCC and the NH that correspond to the access network device 2. In this way, after receiving the message b1, the AMF network element may update the locally stored NCC value by increasing NCC value by 1, to obtain an updated NCC (referred to as an NCC 2), thereby performing vertical derivation based on the updated NCC, to obtain an updated NH (referred to as an NH 2). The NCC 2 and the NH 2 are associated with each other, and are used as an updated {NH 2, NCC 2} pair. The message b2 may include the NCC (namely, the NCC 2) and the NH (namely, the NH 2) that correspond to the access network device 2.

Optionally, after receiving the NH 2, the access network device 2 may derive a key K2* based on the NH 2, and a PCI and a frequency of a cell of the access network device 2, and store the key K2* (for example, store the key K2* in context information related to the access network device 2). The execution time at which the access network device 1 derives the key K1* is not limited in this embodiment of this application. For example, the access network device 1 may alternatively derive the key K1* after receiving the switch complete message from the terminal.

S1111: The access network device 2 constructs a container.

The container carries an identifier of the access network device 2, the NCC 2, and configuration information, and the configuration information is for configuring a parameter for the terminal to switch to the access network device 2 The NCC 2 carried in the container is obtained by the access network device 2 from the AMF network element (different from the solution 2 in which the NCC carried in the container is obtained from the source access network device).

S1112: The access network device 2 sends a handover request acknowledge message 2 to the access network device 0. Accordingly, the access network device 0 receives the handover request acknowledge message 2 from the access network device 2.

The handover request acknowledge message 2 includes the container constructed by the access network device 2.

It may be understood that the foregoing describes only that the access network device 0 sends the handover request messages to the access network device 1 and the access network device 2. The access network device 0 may further send handover request information to another candidate access network device for LTM switching. For a specific implementation, refer to S903 to S912. Details are not described again.

S1113: The access network device 0 sends an RRC reconfiguration message to the terminal, where the RRC reconfiguration message carries the container constructed by the access network device 1 and the container constructed by the access network device 2. Accordingly, the terminal receives the RRC reconfiguration message.

The terminal obtains, from the RRC reconfiguration message, containers constructed by the candidate access network devices for LTM (for example, containers constructed by the access network device 1 to the access network device 5), and obtains NCCs (for example, the NCC 1 to an NCC 5) respectively corresponding to the access network device 1 to the access network device 5. The terminal calculates NHs corresponding to the NCCs, and stores correspondences between the NCCs and the NHs.

For example, the terminal sequentially derives, in ascending order of the NCCs, the NHs respectively corresponding to the NCC 1 to the NCC 5. For example, the terminal performs vertical derivation a corresponding quantity of times based on a difference between the NCC 1 and the NCC 0 that is locally stored in the terminal, to obtain the corresponding NH (namely, the NH 1). The terminal performs vertical derivation a corresponding quantity of times based on a difference between the NCC 2 and the NCC 1, to obtain the corresponding NH (namely, the NH 2). The terminal performs vertical derivation a corresponding quantity of times based on a difference between the NCC 3 and the NCC 2, to obtain a corresponding NH (namely, an NH 3). By analogy, the NHs respectively corresponding to the NCC 1 to the NCC 5 are obtained.

The terminal may store a correspondence between at least two of an identifier of an access network device, an NCC, and an NH. A specific implementation is not limited. For example, the terminal may include a correspondence between the identifier of the access network device and the NH, or the terminal may store a correspondence among the identifier of the access network device, the NCC, and the NH.

Optionally, the terminal may derive the key K1^{*} based on the NH 1, and the PCI and the frequency of the cell of the access network device 1, and store a correspondence between the access network device 1 and the key K1^{*}. The terminal may derive the key K2* based on NH 2, and the PCI and the frequency of the cell of the access network device 2, and store a correspondence between the access network device 2 and the key K2*. By analogy, the terminal may obtain keys respectively corresponding to the access network device 1 to the access network device 5. A specific occasion on which the terminal determines the NHs respectively corresponding to the NCC 1 to the NCC 5 and the keys respectively corresponding to the access network device 1 to the access network device 5 is not limited in this embodiment of this application.

S1114: The terminal sends an RRC reconfiguration complete message to the access network device 0. Accordingly, the access network device 0 receives the RRC reconfiguration complete message from the terminal.

For S1115 to S1119, refer to S1011 to S1015.

S1120: The access network device 1 sends a path switch request message to the AMF network element. Accordingly, the AMF network element receives the path switch request message.

Optionally, the path switch request message may include indication information, and the indication information indicates that the AMF network element does not need to perform an NCC update. Accordingly, the AMF network element receives the indication information, and the AMF skips an NCC update process and an NH calculation process.

S1121: The AMF network element sends a path switch response message to the access network device 1. Accordingly, the access network device 1 receives the path switch response message, to complete path switching.

Because the AMF network element may skip the NCC update process and the NH calculation process based on the indication information, the path switch response message does not need to include an updated NCC and an NH.

Herein, the path switching means that a data transmission path of the terminal is switched from "UPF network element-access network device 0-terminal" to "UPF network element-access network device 1-terminal".

S1122: The terminal communicates with the access network device 1 by using the key K1*.

The terminal may obtain, based on the identifier of the access network device 1 in a switch command message (namely, a MAC CE), the key K1^{*} corresponding to the identifier of the access network device 1, and the access network device 1 also derives the key K1^{*}. Therefore, the terminal may communicate with the access network device 1 by using the key K1^{*}.

Specifically, if in S1113, the terminal determines, after receiving the RRC reconfiguration message, the keys respectively corresponding to the access network device 1 to the access network device 5, and stores correspondences between identifiers of the access network device and the keys, after receiving the switch command message, a MAC layer of the terminal may transfer the identifier of the access network device 1 in the switch command message to an RRC layer, and then the RRC layer of the terminal obtains, based on the identifier of the access network device 1, the key K1^{*} corresponding to the identifier of the access network device 1.

Alternatively, if in S1113, the terminal determines, after receiving the RRC reconfiguration message, the NHs corresponding to the NCC 1 to the NCC 5, and stores correspondences between identifiers of the access network device and the NHs, after receiving the switch command message, a MAC layer of the terminal may transfer the identifier of the access network device 1 in the switch command message to an RRC layer, and then the RRC layer of the terminal obtains the corresponding NH based on the identifier of the access network device 1, so that the key K1^{*} is determined based on the NH, and an identifier and the frequency of the cell of the access network device 1.

It may be understood that the terminal may further switch from the access network device 1 to another access network device (for example, the access network device 2) subsequently. For a specific implementation, refer to the descriptions in which the terminal switches from the access network device 0 to the access network device 1.

In addition, the procedure shown in FIG. 11A and FIG. 11B corresponds to the procedure shown in FIG. 10A and FIG. 10B, and the steps of the two procedures may be mutually referenced. For example, for S1001, refer to S1102; for S1002 and S1003, refer to S1103 and S1112; for S1004, refer to S1113; for S1005, refer to S1115 and S1116; for S1006, refer to S1117; for S1007, refer to S1118; for S1008, refer to S1119; and for S1009, refer to S1122.

For the foregoing plurality of embodiments, it may be understood that:
(1) In embodiments of this application, a cell in "a PCI and a frequency of the cell of an access network device" that are in key derivation may be any cell of the access network device. For example, if the access network device is a target access network device, the cell may be a target cell or a cell other than the target cell. This is not limited in embodiments of this application.
(2) In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. In addition, in a same embodiment, mutual reference may also be made between different implementations or different examples.
(3) Various numerals in this application are for differentiation merely for ease of description, but are not for limiting the scope of this application. The step numbers in the foregoing flowcharts are merely an example of execution procedures, and do not constitute a limitation on an execution sequence of the steps. That is, the step numbers do not mean an execution sequence, and the execution sequence of the steps should be determined according to functions and internal logic of the steps. In addition, not all steps shown in each flowchart are necessarily performed steps, and some steps may be added or deleted for each flowchart based on an actual requirement.

The foregoing mainly describes the solutions provided in embodiments of this application from a perspective of interaction between the terminal and the access network device. It may be understood that, to implement the foregoing functions, the terminal and the access network device may include corresponding hardware structures and/or software modules for performing the functions. A person skilled in the art should be easily aware that, with reference to the units and algorithm steps in the examples described in embodiments disclosed in this specification, embodiments of this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the terminal and the access network device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 12 is a possible example block diagram of an apparatus according to an embodiment of this application. As shown in FIG. 12, the apparatus 1200 may include a processing unit 1202 and a communication unit 1203. The processing unit 1202 is configured to control and manage an action of the apparatus 1200. The communication unit 1203 is configured to support the apparatus 1200 in communicating with another device. Optionally, the communication unit 1203 is also referred to as a transceiver unit, and may include a receiving unit and/or a sending unit, where the receiving unit and the sending unit are respectively configured to perform a receiving operation and a sending operation. The apparatus 1200 may further include a storage unit 1201, configured to store program code and/or data of the apparatus 1200.
(1) The apparatus 1200 may be the first access network device in the foregoing embodiments. The processing unit 1202 may support the apparatus 1200 in performing actions of the first access network device in the foregoing method examples. Alternatively, the processing unit 1202 mainly performs internal actions of the first access network device in the method examples, and the communication unit 1203 may support communication between the apparatus 1200 and the another device.

For example, in an embodiment, the communication unit 1203 is configured to: receive a container from each of a plurality of candidate access network devices, where the container of the access network device includes a parameter for a terminal to switch to the access network device; and send a radio resource control RRC reconfiguration message to the terminal, where the RRC reconfiguration message includes the container of each of the plurality of candidate access network devices. The communication unit 1203 is further configured to: when the terminal needs to switch to a second access network device in the plurality of candidate access network devices, send a first media access control MAC layer message to the terminal, where the first MAC layer message includes information for triggering the terminal to switch to the second access network device and information indicating a first NCC, and the first NCC is for determining a key for communication between the terminal and the second access network device.

In a possible design, the communication unit 1203 is specifically configured to: after an RRC layer of the first access network device transfers, to a MAC layer of the first access network device, the information indicating the first NCC, send, by using the MAC layer of the first access network device, the MAC layer message to the terminal.

In a possible design, the communication unit 1203 is further configured to receive the first next hop chaining counter NCC from a mobility management network element, where the first NCC is carried in an initial context setup request message or a path switch response message.

In a possible design, the communication unit 1203 is further configured to send a first candidate access network device list to the second access network device, where the first candidate access network device list includes an identifier of at least one of the plurality of candidate access network devices.

(2) The apparatus 1200 may be the second access network device in the foregoing embodiments. The processing unit 1202 may support the apparatus 1200 in performing actions of the second access network device in the foregoing method examples. Alternatively, the processing unit 1202 mainly performs internal actions of the second access network device in the method examples, and the communication unit 1203 may support communication between the apparatus 1200 and the another device.

For example, in an embodiment, the communication unit 1203 is configured to send a container of the second access network device, where the container includes a parameter for a terminal to switch to the second access network device. The processing unit 1202 is configured to: after the terminal switches from a first access network device to the second access network device through LTM switching, determine that the terminal needs to switch to a third access network device in at least one candidate access network device. The communication unit 1203 is further configured to send a second MAC layer message to the terminal, where the second MAC layer message includes information for triggering the terminal to switch to the third access network device and information indicating a second NCC, and the second NCC is for determining a key for communication between the terminal and the third access network device.

In a possible design, the communication unit 1203 is specifically configured to: after an RRC layer of the second access network device transfers, to a MAC layer of the second access network device, the information indicating the second NCC, send, by using the MAC layer of the second access network device, the second MAC layer message to the terminal.

In a possible design, after the terminal switches to the second access network device, the communication unit 1203 is further configured to: send a path switch request message to a mobility management network element; and receive a path switch response message from the mobility management network element, where the path switch response message includes the second NCC and a next hop NH corresponding to the second NCC.

In a possible design, after determining that the terminal needs to switch to the third access network device, the processing unit 1202 is further configured to determine, based on the NH corresponding to the second NCC, the key for communication between the third access network device and the terminal. The communication unit 1203 is further configured to send, to the third access network device, the key for communication between the third access network device and the terminal.

In a possible design, the communication unit 1203 is further configured to send a third MAC layer message to the terminal device, where the third MAC layer message includes the information indicating the second NCC, and the second NCC is for determining a key for communication between the terminal and the second access network device. The processing unit 1202 is further configured to determine, based on the NH corresponding to the second NCC, the key for communication between the terminal and the second access network device.

In a possible design, after sending the container of the second access network device to the terminal, the communication unit 1203 is further configured to: receive a first candidate access network device list from the first access network device, where the first candidate access network device list includes an identifier of the at least one candidate access network device; and if it is determined that the third access network device belongs to the first candidate access network device list, send the second MAC layer message to the terminal.

In a possible design, after it is determined that the terminal needs to switch to the third access network device in the at least one candidate access network device, the communication unit 1203 is further configured to send a second candidate access network device list to the third access network device, where the second candidate access network device list includes an identifier of a part or all of candidate access network devices in the first candidate access network device list.

(3) The apparatus 1200 may be the terminal in the foregoing embodiments. The processing unit 1202 may support the apparatus 1200 in performing actions of the terminal in the foregoing method examples. Alternatively, the processing unit 1202 mainly performs internal actions of the terminal in the method examples, and the communication unit 1203 may support communication between the apparatus 1200 and the another device.

For example, in an embodiment, the communication unit 1203 is configured to: receive a container from each of a plurality of candidate access network devices, where the container of the access network device includes a parameter for the terminal to switch to the access network device, and the plurality of candidate access network devices include a second access network device; and receive a first MAC layer message from a first access network device, where the first MAC layer message includes information for triggering the terminal to switch to the second access network device and information indicating a first NCC. The processing unit 1202 is configured to: switch to the second access network device based on a parameter in a container of the second access network device; and determine, based on the first NCC, a key for communication between the terminal and the second access network device.

In a possible design, the processing unit 1202 is specifically configured to: when the first NCC is the same as an NCC stored in the terminal, derive, based on a first input parameter, the key for communication between the terminal and the second access network device, where the first input parameter includes information about a cell of the second access network device.

In a possible design, the processing unit 1202 is specifically configured to: after a MAC layer of the terminal transfers, to an RRC layer of the terminal, the information indicating the first NCC, determine, by using the RRC layer of the terminal based on the first NCC, the key for communication between the terminal and the second access network device.

In a possible design, the plurality of candidate access network devices further include a third access network device; and after the terminal switches to the second access network device, the communication unit 1203 is further configured to receive a second MAC layer message from the second access network device, where the second MAC layer message includes information for triggering the terminal to switch to the third access network device and information indicating a second NCC. The processing unit 1202 is further configured to: switch to the third access network device based on a parameter in a container of the third access network device; and determine, based on the second NCC, a key for communication between the terminal and the third access network device.

In a possible design, the processing unit 1202 is specifically configured to: when the second NCC is different from the NCC stored in the terminal, derive, based on a second input parameter, the key for communication between the terminal and the third access network device, where the second input parameter includes an NH corresponding to the second NCC and information about a cell of the third access network device.

In another embodiment, the communication unit 1203 is configured to: receive a container from each of a plurality of candidate access network devices, where the container of the access network device includes a parameter for the terminal to switch to the access network device, and the plurality of candidate access network devices include a second access network device; and receive a first MAC layer message from a first access network device, where the first MAC layer message includes information for triggering the terminal to switch to the second access network device. The processing unit 1202 is configured to switch to the second access network device based on a parameter in a container of the second access network device. The communication unit 1203 is further configured to receive a third MAC layer message from the second access network device, where the third MAC layer message includes information indicating a second NCC. The processing unit 1202 is further configured to determine, based on the second NCC, a key for communication between the terminal and the second access network device.

In a possible design, the first MAC layer message further includes information indicating a first NCC; and the processing unit 1202 is further configured to: determine, based on the first NCC, a key for communication between the terminal and the second access network device, and store the key in an access stratum AS security context, where when the key for communication between the terminal and the second access network device is determined based on the second NCC, the key that is determined based on the first NCC and that is in the AS security context is updated to the key determined based on the second NCC.

In a possible design, the processing unit 1202 is specifically configured to: when the first NCC is the same as an NCC stored in the terminal, derive, based on a first input parameter, the key for communication between the terminal and the second access network device, where the first input parameter includes KgNB corresponding to the first NCC and information about a cell of the second access network device.

In a possible design, the processing unit 1202 is specifically configured to: when the second NCC is different from the NCC stored in the terminal, derive, based on a third input parameter, the key for communication between the terminal and the second access network device, where the third input parameter includes an NH corresponding to the second NCC and the information about the cell of the second access network device.

In a possible design, the processing unit 1202 is specifically configured to: when the second NCC is different from the NCC stored in the terminal, update the NCC stored in the terminal to the second NCC.

In a possible design, the processing unit 1202 is specifically configured to: after a MAC layer of the terminal transfers, to an RRC layer of the terminal, the information indicating the second NCC, determine, by using the RRC layer of the terminal based on the second NCC, the key for communication between the terminal and the second access network device.

It should be understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units are implemented in a form of hardware. For example, the units may be processing elements that are separately disposed, or may be integrated into a chip of the apparatus for implementation. In addition, the units may alternatively be stored in a memory in a form of a program, and are invoked by a processing element of the apparatus to perform functions of the units. In addition, the units may be all or partially integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or implemented in a form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form of a program scheduled by a processing element, the processing element may be a processor, for example, a general-purpose central processing unit (central processing unit, CPU) or another processor that can invoke the program. For another example, the units may be integrated and implemented in a form of a SoC.

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to the another apparatus. For example, when the apparatus is implemented in the manner of the chip, the sending unit is an interface circuit that is of the chip and that is configured to send a signal to the another chip or apparatus.

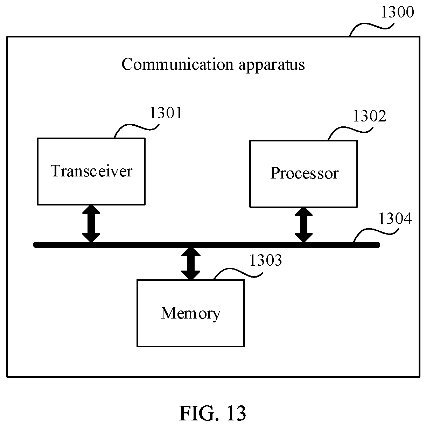

Based on the foregoing embodiments, an embodiment of this application further provides a communication apparatus. As shown in FIG. 13, the communication apparatus 1300 may include a transceiver 1301 and a processor 1302. Optionally, the communication apparatus 1300 may further include a memory 1303. The memory 1303 may be disposed inside the communication apparatus 1300, or may be disposed outside the communication apparatus 1300. The processor 1302 may control the transceiver 1301 to receive and send messages and the like.

Specifically, the processor 1302 may be a central processing unit (central processing unit, CPU), a network processor (network processor, NP), or a combination of the CPU and the NP. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1301, the processor 1302, and the memory 1303 are connected to each other. Optionally, the transceiver 1301, the processor 1302, and the memory 1303 are connected to each other through a bus 1304. The bus 1304 may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, only one bold line is used for representation in FIG. 13, but this does not mean that there is only one bus or only one type of bus.

In an optional implementation, the memory 1303 is configured to store a program and the like. Specifically, the program may include program code, and the program code includes computer operation instructions. The memory 1303 may include a RAM, and may further include a non-volatile memory (non-volatile memory), for example, one or more magnetic disk memories. The processor 1302 executes an application program stored in the memory 1303 to implement the foregoing functions, to implement functions of the communication apparatus 1300.

For example, the communication apparatus 1300 may be the first access network device in the foregoing embodiments, may be the second access network device in the foregoing embodiments, or may be the terminal in the foregoing embodiments.

In an embodiment, when the communication apparatus 1300 implements a function of the first access network device in the foregoing method embodiments, the transceiver 1301 may implement receiving and sending operations performed by the first access network device in the foregoing method embodiments; and the processor 1302 may implement an operation other than the receiving and sending operations performed by the first access network device in the foregoing method embodiments. Specifically, for related specific descriptions, refer to the related descriptions in the foregoing embodiments. Details are not described herein again.

In another embodiment, when the communication apparatus 1300 implements a function of the second access network device in the foregoing method embodiments, the transceiver 1301 may implement receiving and sending operations performed by the second access network device in the foregoing method embodiments; and the processor 1302 may implement an operation other than the receiving and sending operations performed by the second access network device in the foregoing method embodiments. Specifically, for related specific descriptions, refer to the related descriptions in the foregoing embodiments. Details are not described herein again.

In another embodiment, when the communication apparatus 1300 implements a function of the terminal in the foregoing method embodiments, the transceiver 1301 may implement receiving and sending operations performed by the terminal in the foregoing method embodiments; and the processor 1302 may implement an operation other than the receiving and sending operations performed by the terminal in the foregoing method embodiments. Specifically, for related specific descriptions, refer to the related descriptions in the foregoing embodiments. Details are not described herein again.

An embodiment of this application provides a communication system. The communication system includes at least one of a terminal, a first access network device, and a second access network device. The terminal is configured to perform a function of the terminal side in the foregoing embodiments. The first access network device is configured to perform a function of the first access network device side in the foregoing embodiments. The second access network device is configured to perform a function of the second access network device side in the foregoing embodiments.

The terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of the items, and includes a singular item or any combination of plural items. For example, "at least one of A, B, and C" includes A, B, C, AB, AC, BC, or ABC. In addition, unless otherwise specified, ordinal numbers such as "first" and "second" in embodiments of this application are for distinguishing between a plurality of objects, but are not for limiting an order, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be for implementing each procedure and/or each block in the flowcharts and/or the block diagrams and a combination of procedures and/or blocks in the flowcharts and/or the block diagrams. The computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

The computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to this application without departing from the spirit and the scope of this application. This application is intended to cover these modifications and variations of this application provided that these modifications and variations fall within the scope of the claims of this application and their equivalent technologies.

## Claims

1. A communication method, wherein the method is applied to a first access network device or a chip in the first access network device, and the method comprises:
receiving a container from each of a plurality of candidate access network devices, wherein the container of the access network device comprises a parameter for a terminal to switch to the access network device;
sending a radio resource control RRC reconfiguration message to the terminal, wherein the RRC reconfiguration message comprises the container constructed by each of the plurality of candidate access network devices; and
when the terminal needs to switch to a second access network device in the plurality of candidate access network devices, sending a first media access control MAC layer message to the terminal, wherein the first MAC layer message comprises information for triggering the terminal to switch to the second access network device and information indicating a first next hop chaining counter NCC, and the first NCC is for determining a key for communication between the terminal and the second access network device.

2. The method according to claim 1, wherein sending the MAC layer message to the terminal comprises:
transferring, by an RRC layer of the first access network device to a MAC layer of the first access network device, the information indicating the first NCC; and
sending, by the MAC layer of the first access network device, the MAC layer message to the terminal.

3. The method according to claim 1 or 2, wherein the method further comprises:
receiving the first NCC from a mobility management network element, wherein
the first NCC is carried in an initial context setup request message or a path switch response message.

4. The method according to any one of claims 1 to 3, wherein the method further comprises:
sending a first candidate access network device list to the second access network device, wherein the first candidate access network device list comprises an identifier of at least one of the plurality of candidate access network devices.

5. The method of any one of claims 1 to 4, wherein the information indicating the first NCC comprises at least one of the following:
the first NCC;
an index value of the first NCC; and
a ciphertext obtained through encryption of the first NCC.

6. A communication method, wherein the method is applied to a second access network device or a chip in the second access network device, and the method comprises:
sending a container of the second access network device to a terminal, wherein the container comprises a parameter for the terminal to switch to the second access network device;
after the terminal switches from a first access network device to the second access network device through layer 1/layer 2 triggered mobility LTM switching, determining that the terminal needs to switch to a third access network device in at least one candidate access network device; and
sending a second MAC layer message to the terminal, wherein the second MAC layer message comprises information for triggering the terminal to switch to the third access network device and information indicating a second NCC, and the second NCC is for determining a key for communication between the terminal and the third access network device.

7. The method according to claim 6, wherein sending the second MAC layer message to the terminal comprises:
transferring, by an RRC layer of the second access network device to a MAC layer of the second access network device, the information indicating the second NCC; and
sending, by the MAC layer of the second access network device, the second MAC layer message to the terminal.

8. The method according to claim 6 or 7, wherein after the terminal switches to the second access network device, the method further comprises:
sending a path switch request message to a mobility management network element; and
receiving a path switch response message from the mobility management network element, wherein the path switch response message comprises the second NCC and a next hop NH corresponding to the second NCC.

9. The method according to claim 8, wherein after determining that the terminal needs to switch to the third access network device, the method further comprises:
determining, based on the NH corresponding to the second NCC, the key for communication between the third access network device and the terminal; and
sending, to the third access network device, the key for communication between the third access network device and the terminal.

10. The method according to claim 8, wherein the method further comprises:
sending a third MAC layer message to the terminal device, wherein the third MAC layer message comprises the information indicating the second NCC, and the second NCC is for determining a key for communication between the terminal and the second access network device; and
determining, based on the NH corresponding to the second NCC, the key for communication between the terminal and the second access network device.

11. The method according to any one of claims 6 to 10, wherein after sending the container of the second access network device to the terminal, the method further comprises: receiving a first candidate access network device list from the first access network device, wherein the first candidate access network device list comprises an identifier of the at least one candidate access network device; and
sending the second MAC layer message to the terminal comprises: if it is determined that the third access network device belongs to the first candidate access network device list, sending the second MAC layer message to the terminal.

12. The method according to any one of claims 6 to 11, wherein after determining that the terminal needs to switch to the third access network device in the at least one candidate access network device, the method further comprises:
sending a second candidate access network device list to the third access network device, wherein the second candidate access network device list comprises an identifier of a part or all of the at least one candidate access network device.

13. A communication method, wherein the method is applied to a terminal or a chip in the terminal, and the method comprises:
receiving a container from each of a plurality of candidate access network devices, wherein the container of the access network device comprises a parameter for the terminal to switch to the access network device, and the plurality of candidate access network devices comprise a second access network device;
receiving a first MAC layer message from a first access network device, wherein the first MAC layer message comprises information for triggering the terminal to switch to the second access network device and information indicating a first NCC;
switching to the second access network device based on a parameter in a container of the second access network device; and
determining, based on the first NCC, a key for communication between the terminal and the second access network device.

14. The method according to claim 13, wherein determining, based on the first NCC, the key for communication between the terminal and the second access network device comprises:
when the first NCC is the same as an NCC stored in the terminal, deriving, based on a first input parameter, the key for communication between the terminal and the second access network device, wherein the first input parameter comprises a key KgNB corresponding to the first NCC and information about a cell of the second access network device.

15. The method according to claim 13 or 14, wherein determining, based on the first NCC, the key for communication between the terminal and the second access network device comprises:
transferring, by a MAC layer of the terminal to an RRC layer of the terminal, the information indicating the first NCC; and
determining, by the RRC layer of the terminal based on the first NCC, the key for communication between the terminal and the second access network device.

16. The method according to any one of claims 13 to 15, wherein the plurality of candidate access network devices further comprise a third access network device; and
after switching, by the terminal, to the second access network device, the method further comprises:
receiving a second MAC layer message from the second access network device, wherein the second MAC layer message comprises information for triggering the terminal to switch to the third access network device and information indicating a second NCC;
switching to the third access network device based on a parameter in a container of the third access network device; and
determining, based on the second NCC, a key for communication between the terminal and the third access network device.

17. The method according to claim 16, wherein determining, based on the second NCC, the key for communication between the terminal and the third access network device comprises:
when the second NCC is different from the NCC stored in the terminal, deriving, based on a second input parameter, the key for communication between the terminal and the third access network device, wherein the second input parameter comprises an NH corresponding to the second NCC and information about a cell of the third access network device.

18. The method according to claim 16 or 17, wherein the method further comprises:
when the second NCC is different from the NCC stored in the terminal, updating the NCC stored in the terminal to the second NCC.

19. A communication method, wherein the method is applied to a terminal or a chip in the terminal, and the method comprises:
receiving a container from each of a plurality of candidate access network devices, wherein the container of the access network device comprises a parameter for the terminal to switch to the access network device, and the plurality of candidate access network devices comprise a second access network device;
receiving a first MAC layer message from a first access network device, wherein the first MAC layer message comprises information for triggering the terminal to switch to the second access network device;
switching to the second access network device based on a parameter in a container of the second access network device;
receiving a third MAC layer message from the second access network device, wherein the third MAC layer message comprises information indicating a second NCC; and
determining, based on the second NCC, a key for communication between the terminal and the second access network device.

20. The method according to claim 19, wherein the first MAC layer message further comprises information indicating a first NCC; and
the method further comprises:
determining, based on the first NCC, a key for communication between the terminal and the second access network device, and storing the key in an access stratum AS security context, wherein
when the key for communication between the terminal and the second access network device is determined based on the second NCC, the key that is determined based on the first NCC and that is in the AS security context is updated to the key determined based on the second NCC.

21. The method according to claim 20, wherein determining, based on the first NCC, the key for communication between the terminal and the second access network device comprises:
when the first NCC is the same as an NCC stored in the terminal, deriving, based on a first input parameter, the key for communication between the terminal and the second access network device, wherein the first input parameter comprises a key KgNB corresponding to the first NCC and information about a cell of the second access network device.

22. The method according to any one of claims 19 to 21, wherein determining, based on the second NCC, a key for communication between the terminal and the third access network device comprises:
when the second NCC is different from the NCC stored in the terminal, deriving, based on a third input parameter, the key for communication between the terminal and the second access network device, wherein the third input parameter comprises an NH corresponding to the second NCC and the information about the cell of the second access network device.

23. The method according to any one of claims 19 to 22, wherein the method further comprises:
when the second NCC is different from the NCC stored in the terminal, updating the NCC stored in the terminal to the second NCC.

24. The method according to any one of claims 19 to 23, wherein determining, based on the second NCC, the key for communication between the terminal and the second access network device comprises:
transferring, by a MAC layer of the terminal to an RRC layer of the terminal, the information indicating the second NCC; and
determining, by the RRC layer of the terminal based on the second NCC, the key for communication between the terminal and the second access network device.

25. The method according to any one of claims 19 to 24, wherein the plurality of candidate access network devices further comprise the third access network device; and
after switching, by the terminal, to the second access network device, the method further comprises:
receiving a second MAC layer message from the second access network device, wherein the second MAC layer message comprises information for triggering the terminal to switch to the third access network device;
switching to the third access network device based on a parameter in a container of the third access network device;
receiving a fourth MAC layer message from the third access network device, wherein the fourth MAC layer message comprises information indicating a third NCC; and
determining, based on the third NCC, a key for communication between the terminal and the third access network device.

26. The method according to claim 25, wherein the second MAC layer message further comprises the information indicating the second NCC; and
the method further comprises:
determining, based on the second NCC, the key for the terminal to send a switch complete message to the third access network device, and storing the key in the AS security context, wherein
when the key for communication between the terminal and the third access network device is determined based on the third NCC, the key that is determined based on the second NCC and that is in the AS security context is updated to the key determined based on the third NCC.

27. A communication method, wherein the method is applied to a first access network device or a chip in the first access network device, and the method comprises:
sending a handover request message to each of a plurality of candidate access network devices, wherein the handover request message comprises a first NCC;
receiving a container from each of the plurality of candidate access network devices, wherein the container of the access network device comprises the first NCC;
sending an RRC reconfiguration message to the terminal, wherein the RRC reconfiguration message comprises the container of each of the plurality of candidate access network devices;
determining that a second access network device to which the terminal needs to switch is an access network device to which switching has not been performed in a consecutive-LTM-switching process for the terminal, wherein the plurality of candidate access network devices comprise the second access network device; and
sending a first MAC layer message to the terminal, wherein the first MAC layer message is for triggering the terminal to switch to the second access network device.

28. The method according to claim 27, wherein the method further comprises:
receiving the first NCC from a mobility management network element, wherein the first NCC is carried in an initial context setup request message or a path switch response message.

29. The method according to claim 27 or 28, wherein the method further comprises:
sending a quantity of consecutive times of LTM switching to the second access network device.

30. The method according to any one of claims 27 to 29, wherein the method further comprises:
sending a third candidate access network device list to the second access network device, wherein the third candidate access network device list comprises an identifier of at least one candidate access network device.

31. A communication method, wherein the method is applied to a second access network device or a chip in the second access network device, and the method comprises:
receiving a handover request message from a first access network device, wherein the handover request message comprises a first NCC;
sending a container of the second access network device to the first access network device, wherein the container comprises the first NCC and a parameter for a terminal to switch to the second access network device, and the first NCC comprised in the container is for determining a key for communication between the terminal and the second access network device;
after the terminal switches to the second access network device, determining that a third access network device to which the terminal needs to switch is an access network device to which switching has not been performed in a consecutive-LTM-switching process for the terminal; and
sending a second MAC layer message to the terminal, wherein the second MAC layer message is for triggering the terminal to switch to the third access network device.

32. The method according to claim 31, wherein after the terminal switches to the second access network device, the method further comprises:
receiving a second NCC from a mobility management network element, wherein the second NCC is carried in a path switch response message; and
sending the second MAC layer message to the terminal comprises:
if a value of the second NCC is not a preset value, sending the second MAC layer message to the terminal.

33. The method according to claim 31 or 32, wherein the method further comprises:
receiving a quantity of consecutive times of LTM switching from the first access network device; and
sending the second MAC layer message to the terminal comprises:
if the quantity of consecutive times of LTM switching is less than or equal to a threshold, sending the second MAC layer message to the terminal.

34. The method according to any one of claims 31 to 33, wherein before the terminal switches to the second access network device, the method further comprises:
receiving a third candidate access network device list from the first access network device, wherein the third candidate access network device list comprises an identifier of at least one candidate access network device; and
determining that the third access network device to which the terminal needs to switch is the access network device to which switching has not been performed in the consecutive-LTM-switching process for the terminal comprises:
if the third access network device belongs to the third candidate access network device list, determining that the third access network device is the access network device to which switching has not been performed in the consecutive-LTM-switching process for the terminal.

35. The method according to any one of claims 31 to 34, wherein the method further comprises:
sending a fourth candidate access network device list to the third access network device, wherein the fourth candidate access network device list does not comprise an identifier of the second access network device.

36. A communication method, wherein the method is applied to a terminal or a chip in the terminal, and the method comprises:
receiving an RRC reconfiguration message from a first access network device, wherein the RRC reconfiguration message comprises a container of each of a plurality of candidate access network devices, the container of the access network device comprises a first NCC, and the plurality of candidate access network devices comprise a second access network device;
receiving a first MAC layer message from the first access network device, wherein the first MAC layer message is for triggering the terminal to switch to the second access network device; and
after the terminal switches to the second access network device, communicating with the second access network device by using a key corresponding to the second access network device, wherein the key corresponding to the second access network device is determined based on the first NCC.

37. The method according to claim 36, wherein the method further comprises:
when the first NCC is the same as an NCC stored in the terminal, deriving, based on a first input parameter, the key corresponding to the second access network device, wherein the first input parameter comprises information about a cell of the second access network device.

38. A communication method, wherein the method is applied to a first access network device or a chip in the first access network device, and the method comprises:
sends handover request messages to a plurality of candidate access network devices respectively;
receiving a container from each of the plurality of candidate access network devices, wherein the container of the access network device comprises an NCC corresponding to the access network device, and the NCC corresponding to the access network device is for determining a key for communication between a terminal and the access network device; and
sending an RRC reconfiguration message to the terminal, wherein the RRC reconfiguration message comprises the container of each of the plurality of candidate access network devices, and all the access network devices correspond to different NCCs.

39. The method according to claim 38, wherein the method further comprises:
determining the plurality of candidate access network devices, wherein a quantity of the plurality of candidate access network devices is less than or equal to a threshold, and the threshold is determined based on an NCC corresponding to the first access network device.

40. The method according to claim 38 or 39, wherein the method further comprises:
determining that a second access network device to which the terminal needs to switch is an access network device to which switching has not been performed in a consecutive-LTM-switching process for the terminal; and
sending a first MAC layer message to the terminal, wherein the first MAC layer message is for triggering the terminal to switch to the second access network device.

41. The method according to claim 40, wherein the method further comprises:
sending a third candidate access network device list to the second access network device, wherein the third candidate access network device list comprises an identifier of at least one candidate access network device.

42. A communication method, wherein the method is applied to a second access network device or a chip in the second access network device, and the method comprises:
receiving a handover request message from a first access network device;
after receiving the handover request message, sending a request message to a mobility management network element, wherein the request message is for requesting an NCC corresponding to the second access network device;
receiving the NCC from the core network device; and
sending a handover request acknowledge message to the first access network device, wherein the handover request acknowledge message comprises a container of the second access network device, the container comprises the NCC, and the NCC is for determining a key for communication between the terminal and the second access network device.

43. The method according to claim 42, wherein the handover request message comprises indication information, and the indication information indicates that the handover request message corresponds to LTM switching.

44. The method according to claim 42 or 43, wherein the method further comprises:
receiving, from the core network device, an NH corresponding to the NCC; and
determining, based on the NH corresponding to the NCC, the key for communication with the terminal.

45. The method according to any one of claims 42 to 44, wherein after the terminal switches from the first access network device to the second access network device, the method further comprises:
determining that a third access network device to which the terminal needs to switch is an access network device to which switching has not been performed in a consecutive-LTM-switching process for the terminal; and
sending a second MAC layer message to the terminal, wherein the second MAC layer message is for triggering the terminal to switch to the third access network device.

46. The method according to claim 45, wherein before the terminal switches from the first access network device to the second access network device, the method further comprises:
receiving a third candidate access network device list from the first access network device; and
determining that the third access network device to which the terminal needs to switch is the access network device to which switching has not been performed in the consecutive-LTM-switching process for the terminal comprises:
if the third access network device belongs to the third candidate access network device list, determining that the third access network device is the access network device to which switching has not been performed in the consecutive-LTM-switching process for the terminal.

47. The method according to claim 45 or 46, wherein the method further comprises:
sending a second candidate access network device list to the third access network device, wherein the second candidate access network device list does not comprise an identifier of the second access network device.

48. A communication method, wherein the method is applied to a terminal or a chip in the terminal, and the method comprises:
receiving an RRC reconfiguration message from a first access network device, wherein the RRC reconfiguration message comprises correspondences between identifiers of a plurality of candidate access network devices and a plurality of NCCs;
determining, based on the NCCs corresponding to the plurality of candidate access network devices, keys corresponding to the plurality of candidate access network devices, wherein different access network devices in the plurality of candidate access network devices correspond to different NCCs;
receiving a first MAC layer message from the first access network device, wherein the first MAC layer message is for triggering the terminal to switch to the second access network device, and the plurality of candidate access network devices comprise the second access network device; and
after the terminal switches to the second access network device, communicating with the second access network device by using a key corresponding to the second access network device.

49. The method according to claim 48, wherein determining, based on an NCC corresponding to the second access network device, the key corresponding to the second access network device comprises:
deriving, based on a second input parameter, the key corresponding to the second access network device, wherein the second input parameter comprises an NH corresponding to the NCC corresponding to the second access network device and information about a cell of the second access network device.

50. The method according to claim 48 or 49, wherein the method further comprises:
sequentially deriving, based on the plurality of NCCs and in ascending order of the NCCs, NHs corresponding to the plurality of NCCs.

51. The method according to any one of claims 48 to 50, wherein the plurality of candidate access network devices further comprise a third access network device, and the method further comprises:
receiving a second MAC layer message from the second access network device, wherein the second MAC layer message is for triggering the terminal to switch to the third access network device; and
after the terminal switches to the third access network device, communicating with the third access network device by using a key corresponding to the third access network device.

52. The method according to claim 51, wherein the method further comprises:
deleting, in response to the second MAC layer message, the NCC corresponding to the second access network device.

53. A communication system, wherein the communication system comprises a first access network device and a second access network device, the first access network device is configured to perform the method according to any one of claims 1 to 5, and the second access network device is configured to perform the method according to any one of claims 6 to 12.

54. The system according to claim 53, wherein the communication system further comprises a terminal, and the terminal is configured to perform the method according to any one of claims 13 to 18, or is configured to perform the method according to any one of claims 19 to 26.

55. A communication system, wherein the communication system comprises a first access network device and a second access network device, the first access network device is configured to perform the method according to any one of claims 27 to 30, and the second access network device is configured to perform the method according to any one of claims 31 to 35.

56. The system according to claim 55, wherein the communication system further comprises a terminal, and the terminal is configured to perform the method according to claim 36 or 37.

57. A communication system, wherein the communication system comprises a first access network device and a second access network device, the first access network device is configured to perform the method according to any one of claims 38 to 41, and the second access network device is configured to perform the method according to any one of claims 42 to 47.

58. The system according to claim 57, wherein the terminal is configured to perform the method according to any one of claims 48 to 52.

59. A communication apparatus, comprising one or more functional modules configured to perform the method according to any one of claims 1 to 52.

60. A communication apparatus, comprising a processor, wherein the processor is coupled to a memory, the memory stores a computer program, and the processor is configured to invoke a part or all of the computer program in the memory, to cause the method according to any one of claims 1 to 52 to be performed.

61. A computer-readable storage medium, wherein the storage medium stores a computer program; and when a part or all of the computer program is executed by a computer, the method according to any one of claims 1 to 52 is caused to be performed.

62. A computer program product, wherein when a computer reads and executes the computer program product, the method according to any one of claims 1 to 52 is caused to be performed.
